# EUROPEAN PATENT SPECIFICATION

(11) **EP 3 925 814 B1**
(45) Date of publication and mention of the grant of the patent: **02.07.2025**
(21) Application number: 21203937.4
(22) Date of filing: 21.10.2021
(51) Int. Cl.: B60L 1/08, B60L 1/00, B60L 1/02, B60L 3/00, B60L 58/26, B60H 1/00, B60H 1/14, B60H 1/32

(54) **THERMAL MANAGEMENT SYSTEM, CONTROL METHOD THEREFOR, AND VEHICLE**
WÄRMEMANAGEMENTSYSTEM, VERFAHREN ZU SEINER STEUERUNG UND FAHRZEUG
SYSTÈME DE GESTION THERMIQUE, SON PROCÉDÉ DE COMMANDE ET VEHICULE

(30) Priority: 16.06.2021 CN 202110666177
(43) Date of publication of application: 22.12.2021
(73) Proprietor: GUANGZHOU XIAOPENG MOTORS TECHNOLOGY CO., LTD., Guangzhou (CN)
(72) Inventor: ZHANG, Dongbin, Guangzhou (CN)
(74) Representative: Treeby, Philip David William

(56) References cited:
- CN-A- 112 543 709
- CN-A- 112 886 089
- DE-A1- 102020 113 711
- US-A1- 2019 070 924

## Description

### Field of Invention

The present invention relates to the field of vehicle technologies, and in particular, to a thermal management system, a control method therefor, and a vehicle.

### Background

At present, new energy vehicles are being popularized on a large scale. In related technologies, components such as a battery and a motor generate a certain amount of waste heat in vehicle driving engineering, and the heat is usually directly taken away by a cooling liquid or a fan and directly dissipated. Consequently, the heat cannot be effectively used. Therefore, how to use waste heat generated by vehicles to improve the energy utilization rate has become a problem studied by technicians. DE 102020113711 A1 discusses an integrated thermal management module for vehicle. CN 112543709 A discloses a thermal management system and an electric vehicle. US 2019/070924 A1 discusses an electric vehicle heat pump with extreme temperature heating capability and thermal preconditioning. CN 112886089 A discloses a thermal management system and a vehicle.

### Summary of Invention

Embodiments of the present invention provide a thermal management system in accordance with claim 1, a control method therefor in accordance with claim 10, and a vehicle in accordance with claim 14. Preferred features are set out in the dependent claims.

A thermal management system according to an aspect of the present disclosure is used for a vehicle, and includes a compressor, a gas-liquid separator, a heater core, a traction battery, an electric drive component and an integrated thermal management unit, wherein the integrated thermal management unit is connected to the compressor, the gas-liquid separator, the heater core, the traction battery and the electric drive component, and the integrated thermal management unit includes:
a flow channel plate having a plurality of flow channels formed therein;
a pump assembly and a valve assembly both integrated on the flow channel plate, wherein the pump assembly includes a battery water pump, a motor water pump and a heating water pump, an inlet of the battery water pump is connected to the valve assembly through the flow channel, an outlet of the battery water pump is connected to an inlet of the traction battery through the flow channel, an outlet of the traction battery is connected to the valve assembly, an inlet of the motor water pump is connected to the valve assembly through the flow channel, an outlet of the motor water pump is connected to an inlet of the electric drive component through the flow channel, and an inlet of the heating water pump is connected to the valve assembly through the flow channel; and
a water-cooling condenser and a battery cooler both integrated on the flow channel plate, wherein a coolant input of the water-cooling condenser is connected to the compressor, a coolant output of the water-cooling condenser is connected to a coolant input of the battery cooler, an outlet of the heating water pump is connected to a cooling liquid input of the water-cooling condenser through the flow channel, a cooling liquid output of the water-cooling condenser is connected to an inlet of the heater core, and an outlet of the heater core is connected to the valve assembly, wherein a coolant output of the battery cooler is connected to an inlet of the gas-liquid separator, a cooling liquid input of the battery cooler is connected to the outlet of the traction battery, a cooling liquid output of the battery cooler is connected to the valve assembly, and the valve assembly is configured to control a flow direction of a cooling liquid in the integrated thermal management unit;
the thermal management system has a first operating mode, wherein in the first operating mode, the compressor and a heating water pump are started, a battery water pump and/or a motor water pump are started, and the valve assembly is in a first preset state, wherein in the first preset state, the valve assembly connects a coolant output of the battery cooler with an inlet of the motor water pump, connects an inlet of the battery water pump with an outlet of the electric drive component, and further connects an inlet of the heating water pump with an outlet of the heater core; and
the battery water pump and/or the motor water pump are configured to convey a cooling liquid heated by the electric drive component and the traction battery to the battery cooler, the heating water pump is configured to convey the cooling liquid to the water-cooling condenser and the heater core, a coolant is cooled when driven by the compressor to flow through the water-cooling condenser so as to heat the cooling liquid flowing through the water-cooling condenser, so that the heater core effectively heats a passenger compartment of the vehicle, the cooled coolant flows through the battery cooler so as to absorb heat of the cooling liquid flowing through the battery cooler to evaporate, and the evaporated coolant flows into the gas-liquid separator.

The thermal management system further includes an outdoor heat exchanger, wherein the coolant output of the water-cooling condenser is further connected to an inlet of the outdoor heat exchanger, and the coolant input of the battery cooler is further connected to an outlet of the outdoor heat exchanger; and
in the first operating mode, the coolant is cooled when driven by the compressor to flow through the water-cooling condenser, so as to heat the cooling liquid flowing through the water-cooling condenser, the cooled coolant flows into the outdoor heat exchanger for evaporating for a first time, and then enters the battery cooler to absorb the heat of the cooling liquid flowing through the battery cooler to evaporate for a second time, and after the second evaporation, the coolant flows into the gas-liquid separator.

The integrated thermal management unit further includes a mounting base and a first throttle, wherein the mounting base is integrally mounted on the water-cooling condenser, a first coolant interface is formed on the mounting base, the first coolant interface is connected with the coolant output of the water-cooling condenser, the first throttle is mounted on the mounting base and connected in series to the first coolant interface, and the first coolant interface is connected to the inlet of the outdoor heat exchanger of the vehicle; and
the integrated thermal management unit further includes a second throttle and a temperature sensor, both integrated on the battery cooler, the second throttle is located at the coolant input of the battery cooler, the temperature sensor is located at the coolant output of the battery cooler, and in the first operating mode, the first throttle and the second throttle are in a throttled state.

The thermal management system further includes an evaporator, wherein the integrated thermal management unit further includes a shutoff valve, the shutoff valve is mounted on the mounting base, a second coolant interface is further formed on the mounting base, the second coolant interface is connected to the coolant output of the water-cooling condenser and is connected in parallel to the first coolant interface, the shutoff valve is connected in series to the second coolant interface, the shutoff valve is configured to connect or disconnect the second coolant interface and the coolant output of the water-cooling condenser, the second coolant interface is connected to an inlet of the evaporator, an outlet of the evaporator is connected to the gas-liquid separator, and in the first operating mode, the shutoff valve is in a closed state.

A third coolant interface is further formed on the mounting base and connected with the second coolant interface, a check valve is mounted at the third coolant interface, an external shutoff valve is arranged between the outlet of the outdoor heat exchanger and the gas-liquid separator, the third coolant interface is connected between the outlet of the outdoor heat exchanger and the external shutoff valve, and in the first operating mode, the external shutoff valve is in a closed state.

The thermal management system further includes a radiator, an evaporator and a liquid heater, wherein the integrated thermal management unit further includes a water-water heat exchanger integrated on the flow channel plate;
the electric drive component is further connected to an inlet of the radiator, and an outlet of the radiator is connected to the valve assembly;
the battery cooler and the water-water heat exchanger are integrated, and the coolant output of the battery cooler is further connected to an outlet of the evaporator;
the cooling liquid output of the battery cooler is connected with a first cooling liquid input and a first cooling liquid output of the water-water heat exchanger, the first cooling liquid output of the water-water heat exchanger is connected to the valve assembly through the flow channel, a second cooling liquid input of the water-water heat exchanger is connected with an outlet of the liquid heater, and a second cooling liquid output of the water-water heat exchanger is connected to the valve assembly through the flow channel;
a first port through to an eighth port are formed on the flow channel plate, and the valve assembly includes a first five-way valve and a second five-way valve;
a first port of the first five-way valve is connected to the eighth port through the flow channel, and the eighth port is connected to the outlet of the heater core;
a second port of the first five-way valve is connected with the inlet of the heating water pump through the flow channel;
a third port of the first five-way valve is connected with the first port through the flow channel, and the first port is connected to the outlet of the radiator;
a fourth port of the first five-way valve is connected to a fifth port of the second five-way valve through the flow channel;
a fifth port of the first five-way valve is connected to the second cooling liquid output of the water-water heat exchanger through the flow channel;
a first port of the second five-way valve is connected to the second port and the third port through the flow channel, the second port is connected to the inlet of the radiator, the third port is connected to the outlet of the electric drive component of the vehicle, and the second port is connected with the third port;
a second port of the second five-way valve is connected to the inlet of the motor water pump through the flow channel, the outlet of the motor water pump is connected with the fourth port through the flow channel, and the fourth port is connected to the inlet of the electric drive component;
a third port of the second five-way valve is connected to the first cooling liquid output of the water-water heat exchanger through the flow channel;
a fourth port of the second five-way valve is connected to the inlet of the battery water pump through the flow channel, the battery water pump is connected with the fifth port through the flow channel, and the fifth port is connected to the inlet of the traction battery;
the fifth port of the second five-way valve is connected to the fourth port of the first five-way valve, the second cooling liquid input of the water-water heat exchanger is connected to the sixth port and the seventh port, the sixth port is connected to the inlet of the heater core, the seventh port is connected to the outlet of the liquid heater, and the sixth port is connected with the seventh port; and
when the valve assembly is in the first preset state, the first port and the second port of the first five-way valve are connected with one another, the first port and the fourth port of the second five-way valve are connected with one another, and the second port and the third port of the second five-way valve are connected with one another.

The thermal management system further includes a radiator, an evaporator and a liquid heater, wherein the integrated thermal management unit further includes a water-water heat exchanger integrated on the flow channel plate;
the electric drive component is further connected to an inlet of the radiator, and an outlet of the radiator is connected to the valve assembly;
the battery cooler and the water-water heat exchanger are integrated, and the coolant output of the battery cooler is further connected to an outlet of the evaporator;
the cooling liquid output of the battery cooler is connected with a first cooling liquid input and a first cooling liquid output of the water-water heat exchanger, the first cooling liquid output of the water-water heat exchanger is connected to the valve assembly through the flow channel, a second cooling liquid input of the water-water heat exchanger is connected with an outlet of the liquid heater, and a second cooling liquid output of the water-water heat exchanger is connected to the valve assembly through the flow channel;
a first port through to an eighth port are formed on the flow channel plate, and the valve assembly includes a first four-way valve, a second four-way valve, a first three-way valve and a second three-way valve;
a first port of the first four-way valve is connected to a third port of the first three-way valve, a first port of the first three-way valve is connected to the eighth port through the flow channel, and a second port of the first three-way valve is connected to the second cooling liquid output of the water-water heat exchanger through the flow channel;
a second port of the first four-way valve is connected with the inlet of the heating water pump through the flow channel;
a third port of the first four-way valve is connected with the first port through the flow channel, and the first port is configured to be connected to the outlet of the radiator;
a fourth port of the first four-way valve is connected with a second port of the second three-way valve through the flow channel;
a first port of the second three-way valve is connected to the second port and the third port through the flow channel, the second port is configured to be connected to the inlet of the radiator, the third port is connected to the outlet of the electric drive component, and the second port is connected with the third port;
a third port of the second three-way valve is connected with a first port of the second four-way valve;
a second port of the second four-way valve is connected to the inlet of the motor water pump through the flow channel, the outlet of the motor water pump is connected with the fourth port through the flow channel, and the fourth port is configured to be connected to the inlet of the electric drive component;
a third port of the second four-way valve is connected to the first cooling liquid output of the water-water heat exchanger through the flow channel;
a fourth port of the second four-way valve is connected to the inlet of the battery water pump through the flow channel, the battery water pump is connected with the fifth port through the flow channel, and the fifth port is connected to the inlet of the traction battery;
the second cooling liquid input of the water-water heat exchanger is connected to the sixth port and the seventh port, the sixth port is configured to be connected to the inlet of the heater core, the seventh port is connected to the outlet of the liquid heater, and the sixth port is connected with the seventh port; and
when the valve assembly is in the first preset state, the first port and the second port of the first four-way valve are connected with one another, the first port and the third port of the first three-way valve are connected with one another, the first port and the fourth port of the second four-way valve are connected with one another, the second port and the third port of the second four-way valve are connected with one another, and the first port and the third port of the second three-way valve are connected with one another.

The thermal management system further includes a radiator, an evaporator and a liquid heater, wherein the integrated thermal management unit further includes a water-water heat exchanger integrated on the flow channel plate;
the electric drive component is further connected to an inlet of the radiator, and an outlet of the radiator is connected to the valve assembly;
the battery cooler and the water-water heat exchanger are integrated, and the coolant output of the battery cooler is further connected to an outlet of the evaporator;
the cooling liquid output of the battery cooler is connected with a first cooling liquid input and a first cooling liquid output of the water-water heat exchanger, the first cooling liquid output of the water-water heat exchanger is connected to the valve assembly through the flow channel, a second cooling liquid input of the water-water heat exchanger is connected with an outlet of the liquid heater, and a second cooling liquid output of the water-water heat exchanger is connected to the valve assembly through the flow channel;
a first port through to an eighth port are formed on the flow channel plate, and the valve assembly includes an eight-way valve;
a first port of the eight-way valve is connected to the eighth port through the flow channel, and the eighth port is configured to be connected to the outlet of the heater core;
a second port of the eight-way valve is connected with the inlet of the heating water pump through the flow channel;
a third port of the eight-way valve is connected with the first port through the flow channel, and the first port is configured to be connected to the outlet of the radiator;
a fourth port of the eight-way valve is connected to the second port and the third port through the flow channel, the second port is configured to be connected to the inlet of the radiator, the third port is configured to be connected to the outlet of the electric drive component, and the second port is connected with the third port;
a fifth port of the eight-way valve is connected with the inlet of the motor water pump through the flow channel, the outlet of the motor water pump is connected to the fourth port through the flow channel, and the fourth port is configured to be connected to the inlet of the electric drive component;
a sixth port of the eight-way valve is connected to the inlet of the battery water pump through the flow channel, the battery water pump is connected with the fifth port through the flow channel, and the fifth port is connected to the inlet of the traction battery;
a seventh port of the eight-way valve is connected to the first cooling liquid output of the water-water heat exchanger through the flow channel;
an eighth port of the eight-way valve is connected to the second cooling liquid output of the water-water heat exchanger through the flow channel, the second cooling liquid input of the water-water heat exchanger is connected to the sixth port and the seventh port, the sixth port is connected to the inlet of the heater core, the seventh port is connected to the outlet of the liquid heater, and the sixth port is connected with the seventh port; and
when the valve assembly is in the first preset state, the first port and the second port of the eight-way valve are connected with one another, the fourth port and the sixth port of the eight-way valve are connected with one another, and the fifth port and the seventh port of the eight-way valve are connected with one another.

The thermal management system has a second operating mode; in the second operating mode, at least one of both the battery water pump and the motor water pump is started, and the valve assembly is in a second preset state; in the second preset state, the valve assembly is connected with the inlet of the battery water pump and the outlet of the radiator, and with the outlet of the traction battery and the inlet of the electric drive component, the battery water pump and/or the motor water pump convey the cooling liquid to the traction battery and then into the electric drive component through the valve assembly, the cooling liquid flows through the electric drive component and enters the radiator for cooling, and then flows out of the radiator and further flows back to the inlet(s) of the battery water pump and/or the motor water pump through the valve assembly.

The control method according to an aspect of the present disclosure is used for any one of the above-mentioned thermal management systems. The control method for a thermal management system includes:
obtaining a temperature of the traction battery and/or the electric drive component while the passenger compartment is being heated; and
based on the temperature of the traction battery and/or the electric drive component, controlling the battery water pump and/or the motor water pump to start and controlling the valve assembly to be in a first preset state to cause the thermal management system to enter a first operating mode, so as to heat the passenger compartment using waste heat of the traction battery and the electric drive component.

The thermal management system further includes a radiator, an evaporator and a liquid heater, wherein the integrated thermal management unit further includes a water-water heat exchanger integrated on the flow channel plate;
the electric drive component is further connected to an inlet of the radiator, and an outlet of the radiator is connected to the valve assembly;
the battery cooler and the water-water heat exchanger are integrated, and the coolant output of the battery cooler is further connected to an outlet of the evaporator;
the cooling liquid output of the battery cooler is connected with a first cooling liquid input and a first cooling liquid output of the water-water heat exchanger, the first cooling liquid output of the water-water heat exchanger is connected to the valve assembly through the flow channel, a second cooling liquid input of the water-water heat exchanger is connected with an outlet of the liquid heater, and a second cooling liquid output of the water-water heat exchanger is connected to the valve assembly through the flow channel;
a first port through to an eighth port are formed on the flow channel plate, and the valve assembly includes a first five-way valve and a second five-way valve;
a first port of the first five-way valve is connected to the eighth port through the flow channel, and the eighth port is connected to the outlet of the heater core;
a second port of the first five-way valve is connected with the inlet of the heating water pump through the flow channel;
a third port of the first five-way valve is connected with the first port through the flow channel, and the first port is connected to the outlet of the radiator;
a fourth port of the first five-way valve is connected to a fifth port of the second five-way valve through the flow channel;
a fifth port of the first five-way valve is connected to the second cooling liquid output of the water-water heat exchanger through the flow channel;
a first port of the second five-way valve is connected to the second port and the third port through the flow channel, the second port is connected to the inlet of the radiator, the third port is connected to the outlet of the electric drive component of the vehicle, and the second port is connected with the third port;
a second port of the second five-way valve is connected to the inlet of the motor water pump through the flow channel, the outlet of the motor water pump is connected with the fourth port through the flow channel, and the fourth port is connected to the inlet of the electric drive component;
a third port of the second five-way valve is connected to the first cooling liquid output of the water-water heat exchanger through the flow channel;
a fourth port of the second five-way valve is connected to the inlet of the battery water pump through the flow channel, the battery water pump is connected with the fifth port through the flow channel, and the fifth port is connected to the inlet of the traction battery;
the fifth port of the second five-way valve is connected to the fourth port of the first five-way valve, the second cooling liquid input of the water-water heat exchanger is connected to the sixth port and the seventh port, the sixth port is connected to the inlet of the heater core, the seventh port is connected to the outlet of the liquid heater, and the sixth port is connected with the seventh port; and
said controlling the valve assembly to be in a first preset state to cause the thermal management system to enter a first operating mode includes:
   controlling the first port and the second port of the first five-way valve to connect with one another, controlling the first port and the fourth port of the second five-way valve to connect with one another, and controlling the second port and the third port of the second five-way valve to connect with one another to cause the thermal management system to enter the first operating mode.

The thermal management system further includes a radiator, an evaporator and a liquid heater, wherein the integrated thermal management unit further includes a water-water heat exchanger integrated on the flow channel plate;
the electric drive component is further connected to an inlet of the radiator, and an outlet of the radiator is connected to the valve assembly;
the battery cooler and the water-water heat exchanger are integrated, and the coolant output of the battery cooler is further connected to an outlet of the evaporator;
the cooling liquid output of the battery cooler is connected with a first cooling liquid input and a first cooling liquid output of the water-water heat exchanger, the first cooling liquid output of the water-water heat exchanger is connected to the valve assembly through the flow channel, a second cooling liquid input of the water-water heat exchanger is connected with an outlet of the liquid heater, and a second cooling liquid output of the water-water heat exchanger is connected to the valve assembly through the flow channel;
a first port through to an eighth port are formed on the flow channel plate, and the valve assembly includes a first four-way valve, a second four-way valve, a first three-way valve and a second three-way valve;
a first port of the first four-way valve is connected to a third port of the first three-way valve, a first port of the first three-way valve is connected to the eighth port through the flow channel, and a second port of the first three-way valve is connected to the second cooling liquid output of the water-water heat exchanger through the flow channel;
a second port of the first four-way valve is connected with the inlet of the heating water pump through the flow channel;
a third port of the first four-way valve is connected with the first port through the flow channel, and the first port is configured to be connected to the outlet of the radiator;
a fourth port of the first four-way valve is connected with a second port of the second three-way valve through the flow channel;
a first port of the second three-way valve is connected to the second port and the third port through the flow channel, the second port is configured to be connected to the inlet of the radiator, the third port is connected to the outlet of the electric drive component, and the second port is connected with the third port;
a third port of the second three-way valve is connected with a first port of the second four-way valve;
a second port of the second four-way valve is connected to the inlet of the motor water pump through the flow channel, the outlet of the motor water pump is connected with the fourth port through the flow channel, and the fourth port is configured to be connected to the inlet of the electric drive component;
a third port of the second four-way valve is connected to the first cooling liquid output of the water-water heat exchanger through the flow channel;
a fourth port of the second four-way valve is connected to the inlet of the battery water pump through the flow channel, the battery water pump is connected with the fifth port through the flow channel, and the fifth port is connected to the inlet of the traction battery;
the second cooling liquid input of the water-water heat exchanger is connected to the sixth port and the seventh port, the sixth port is configured to be connected to the inlet of the heater core, the seventh port is connected to the outlet of the liquid heater, and the sixth port is connected with the seventh port; and
said controlling the valve assembly to be in a first preset state to cause the thermal management system to enter a first operating mode includes:
   controlling the first port and the second port of the first four-way valve to connect with one another, controlling the first port and the third port of the first three-way valve to connect with one another, controlling the first port and the fourth port of the second four-way valve to connect with one another, controlling the second port and the third port of the second four-way valve to connect with one another, and controlling the first port and the third port of the second three-way valve to connect with one another to cause the thermal management system to enter the first operating mode.

The thermal management system further includes a radiator, an evaporator and a liquid heater, wherein the integrated thermal management unit further includes a water-water heat exchanger integrated on the flow channel plate;
the electric drive component is further connected to an inlet of the radiator, and an outlet of the radiator is connected to the valve assembly;
the battery cooler and the water-water heat exchanger are integrated, and the coolant output of the battery cooler is further connected to an outlet of the evaporator;
the cooling liquid output of the battery cooler is connected with a first cooling liquid input and a first cooling liquid output of the water-water heat exchanger, the first cooling liquid output of the water-water heat exchanger is connected to the valve assembly through the flow channel, a second cooling liquid input of the water-water heat exchanger is connected with an outlet of the liquid heater, and a second cooling liquid output of the water-water heat exchanger is connected to the valve assembly through the flow channel;
a first port through to an eighth port are formed on the flow channel plate, and the valve assembly includes an eight-way valve;
a first port of the eight-way valve is connected to the eighth port through the flow channel, and the eighth port is configured to be connected to the outlet of the heater core;
a second port of the eight-way valve is connected with the inlet of the heating water pump through the flow channel;
a third port of the eight-way valve is connected with the first port through the flow channel, and the first port is configured to be connected to the outlet of the radiator;
a fourth port of the eight-way valve is connected to the second port and the third port through the flow channel, the second port is configured to be connected to the inlet of the radiator, the third port is configured to be connected to the outlet of the electric drive component, and the second port is connected with the third port;
a fifth port of the eight-way valve is connected with the inlet of the motor water pump through the flow channel, the outlet of the motor water pump is connected to the fourth port through the flow channel, and the fourth port is configured to be connected to the inlet of the electric drive component;
a sixth port of the eight-way valve is connected to the inlet of the battery water pump through the flow channel, the battery water pump is connected with the fifth port through the flow channel, and the fifth port is connected to the inlet of the traction battery;
a seventh port of the eight-way valve is connected to the first cooling liquid output of the water-water heat exchanger through the flow channel;
an eighth port of the eight-way valve is connected to the second cooling liquid output of the water-water heat exchanger through the flow channel, the second cooling liquid input of the water-water heat exchanger is connected to the sixth port and the seventh port, the sixth port is connected to the inlet of the heater core, the seventh port is connected to the outlet of the liquid heater, and the sixth port is connected with the seventh port; and
said controlling the valve assembly to be in a first preset state to cause the thermal management system to enter a first operating mode includes:
   controlling the first port and the second port of the eight-way valve to connect with one another, controlling the fourth port and the sixth port of the eight-way valve to connect with one another, and controlling the fifth port and the seventh port of the eight-way valve to connect with one another to cause the thermal management system to enter the first operating mode.

The vehicle according to an aspect of the present disclosure includes a vehicle body and the thermal management system according to any one of the above-mentioned implementations, wherein the thermal management system is installed on the vehicle body.

In the thermal management system, the control method therefor, and the vehicle according to an aspect of the present disclosure, the thermal management system has a first operating mode; in the first operating mode, the compressor and the heating water pump are started, the battery water pump and/or the motor water pump are started, and the valve assembly is in a first preset state; in the first preset state, the valve assembly connects a coolant output of the battery cooler with an inlet of the motor water pump, and connects an inlet of the battery water pump with an outlet of the electric drive component, and the valve assembly further connects an inlet of the heating water pump with an outlet of the heater core; the battery water pump and/or the motor water pump convey a cooling liquid heated by the electric drive component and the traction battery to the battery cooler, the heating water pump conveys the cooling liquid to the water-cooling condenser and the heater core, a coolant is cooled when flowing through the water-cooling condenser under the action of the compressor so as to heat the cooling liquid flowing through the water-cooling condenser, the cooled coolant flows into the outdoor heat exchanger for evaporating for a first time so as to heat the cooling liquid flowing through the water-cooling condenser, so that the heater core heats the passenger compartment of the vehicle, then the coolant enters the battery cooler to absorb the heat of the cooling liquid flowing through the battery cooler to evaporate for a second time, and the coolant evaporated for the second time flows into the gas-liquid separator. In this way, in the first operating mode, waste heat generated by the traction battery and the electric drive component can be collected and conveyed to the battery cooler and also used to evaporate a coolant, so as to heat a passenger compartment by using the waste heat, and improve the energy utilization rate. In addition, the pump assembly, the valve assembly, the water-cooling condenser, the water-water heat exchanger, the battery cooler and other elements are integrated on the flow channel plate, which saves layout space and routing pipelines, and reduces costs.

The additional aspects and advantages of the implementations of the present invention will be partly given in the following description, and part thereof will become apparent from the following description, or be understood through the practice of the implementations of the present invention.

### BRIEF DESCRIPTION OF DRAWINGS

The above-mentioned and/or additional aspects and advantages of the present invention become apparent and easy to understand from the description of the implementations in conjunction with the following accompanying drawings, in which:
FIG 1 is a schematic structural diagram of a vehicle according to an implementation of the present invention;
FIG. 2 is a schematic 3D structural diagram of an integrated thermal management unit according to an implementation of the present invention;
FIG. 3 is a schematic diagram of a principle of a thermal management system in a first operating mode according to an implementation of the present invention;
FIG 4 is a schematic 3D exploded view of an integrated thermal management unit according to an implementation of the present invention;
FIG. 5 is a schematic planar structural diagram of an integrated thermal management unit according to an implementation of the present invention;
FIG. 6 is another schematic planar structural diagram of an integrated thermal management unit according to an implementation of the present invention;
FIG. 7 is another schematic 3D structural diagram of an integrated thermal management unit according to an implementation of the present invention;
FIG. 8 is a schematic structural diagram of a flow channel plate of an integrated thermal management unit according to an implementation of the present invention;
FIG. 9 is a schematic planar diagram of a partial structure of an integrated thermal management unit according to an implementation of the present invention;
FIG. 10 is a schematic 3D diagram of a partial structure of an integrated thermal management unit according to an implementation of the present invention;
FIG. 11 is a schematic exploded view of a partial structure of an integrated thermal management unit according to an implementation of the present invention;
FIG. 12 is another schematic diagram of a principle of a thermal management system in the first operating mode according to an implementation of the present invention;
FIG. 13 is still another schematic diagram of a principle of a thermal management system in the first operating mode according to an implementation of the present invention;
FIG. 14 is a schematic diagram of a principle of a thermal management system in a second operating mode according to an implementation of the present invention;
FIG. 15 is another schematic diagram of a principle of a thermal management system in the second operating mode according to an implementation of the present invention;
FIG. 16 is still another schematic diagram of a principle of a thermal management system in the second operating mode according to an implementation of the present invention;
FIG. 17 is a schematic flowchart of a control method according to an implementation of the present invention; and
FIG. 18 is another schematic flowchart of a control method according to an implementation of the present invention.

### Reference signs of components:

- 100: integrated thermal management unit,
- 101: flow channel plate,
- 102: upper plate,
- 103: lower plate,
- 104: flow channel groove,
- 105: fixing connectors,
- 106: pump assembly,
- 107: heating water pump,
- 108: battery water pump,
- 109: motor water pump,
- 110: valve assembly,
- 111: water-cooling condenser,
- 112: water-water heat exchanger,
- 113: battery cooler,
- 114: water tank,
- 115: mounting base,
- 116: first coolant interface,
- 117: second coolant interface,
- 118: third coolant interface,
- 119: first throttle,
- 120: second throttle,
- 121: shutoff valve,
- 122: check valve,
- 123: pressure-temperature sensor,
- 124: temperature sensor,
- 125: electrical control connection element,
- 126: connector,
- 127: wire,
- 136: first five-way valve,
- 137: second five-way valve,
- 138: first four-way valve,
- 139: second four-way valve,
- 140: first three-way valve,
- 141: second three-way valve,
- 142: eight-way valve,
- 200: thermal management system,
- 201: compressor,
- 202: outdoor heat exchanger,
- 203: radiator,
- 204: electric drive component,
- 205: traction battery,
- 206: evaporator,
- 207: heater core,
- 208: liquid heater,
- 209: gas-liquid separator,
- 210: third throttle,
- 211: external shutoff valve,
- 300: vehicle, and
- 301: vehicle body.

### Detailed Description

The embodiments of the present invention will now be described in detail, examples of which are illustrated in the accompanying drawings. Same or similar reference numerals indicate same or similar elements or elements having same or similar functions throughout. The embodiments described with reference to the drawings below are illustrative only and are not to be construed as limiting the present invention.

In the description of the embodiments of the present invention, terms "first", "second" and the like are used for illustration purposes only, and are not to be construed as indicating or implying relative importance or implying the number of technical features following these terms. Accordingly, a feature following a term like "first" or "second" may comprise one or more of such features either explicitly or implicitly. In the description of the embodiments of the present invention, unless specifically indicated, the term "a plurality of" or "multiple" means two or more.

In the description of the embodiments of the present invention, it is noted that, unless specifically specified and indicated, terms "mount," "communicate," "connect" and variations thereof are to be construed broadly as indicating, for example, a fixed connection, a removable connection, or an integral connection; a direct connection, an indirect connection through an intermediate medium; interconnection between related elements, or interaction between related elements. It will be apparent to those of ordinary skills in the art that specific meanings of the above terms in the embodiments of the present invention are to be construed depending on specific situations.

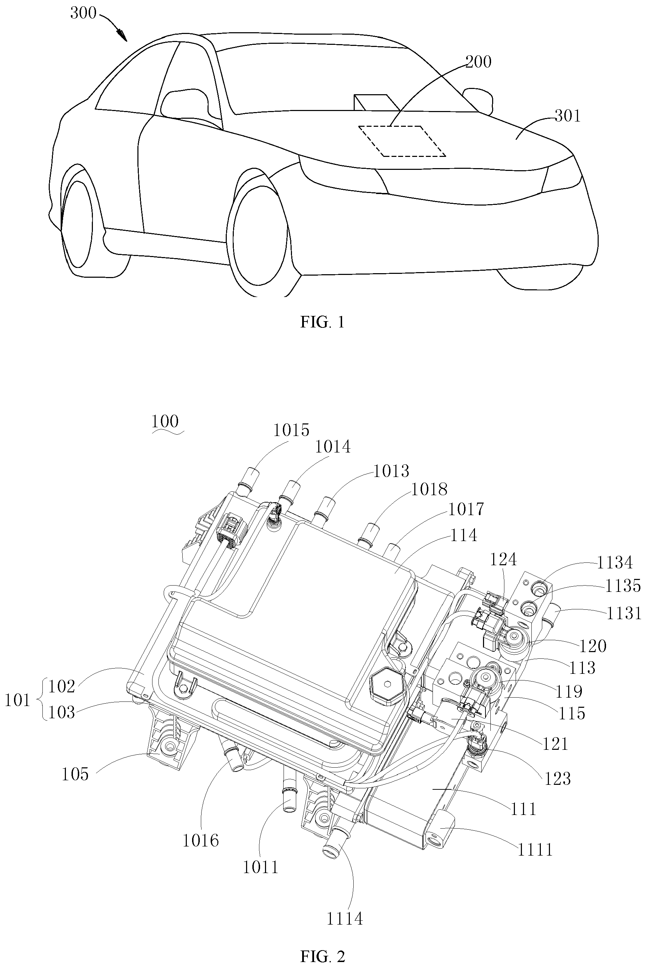

Referring to FIG. 1, in an embodiment of the present invention, a vehicle 300 comprises a vehicle body 301 and a thermal management system 200 according to an embodiment of the present invention. The thermal management system 200 is mounted on the vehicle body 301. Specifically, the vehicle 300 may be, for example, a hybrid vehicle or an electric vehicle.

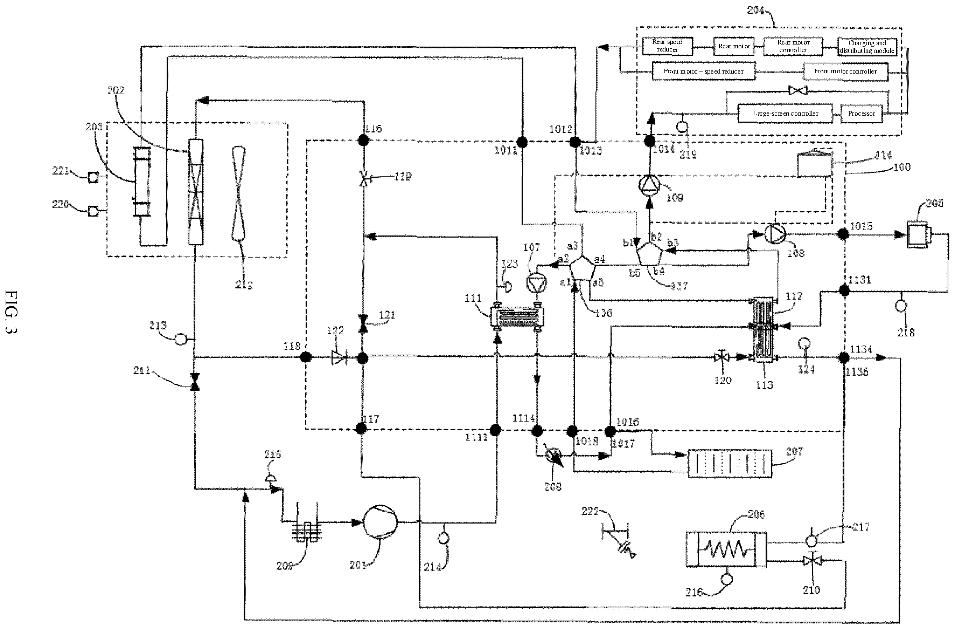

Referring to FIGS. 2 and 3, the thermal management system 200 comprises: a compressor 201, an outdoor heat exchanger 202, a radiator 203, an electric drive component 204, a traction battery 205, an evaporator 206, a heater core 207, a liquid heater 208, a gas-liquid separator 209 and an integrated thermal management unit 100 of the present invention. The compressor 201 is configured to compress and deliver coolant, the gas-liquid separator 209 is connected to an inlet of the compressor 201, the outdoor heat exchanger 202 is configured to allow coolant to flow in and to exchange heat with the air outside the vehicle 300, the evaporator 206 is configured to allow coolant to flow in and to cool the passenger compartment of the vehicle 300, the heater core 207 is configured to warm the passenger compartment of the vehicle 300 by air conditioning, and the liquid heater 208 is configured to heat a cooling liquid.

The radiator 203 is configured to cool a cooling liquid passing therethrough. The electric drive component 204 may comprise a drive motor, a speed reducer, a charging and power distribution module, and a vehicle controller of the vehicle 300. The drive motor may be plural in number. For example, the drive motor may comprise, such as, a front motor and a rear motor. The speed reducer may comprise a front speed reducer and a rear speed reducer. The vehicle controller may comprise electric control elements such as a processor, a screen controller, a front motor controller and a rear motor controller, and a self-driving controller. The drive motor is connected to the traction battery 205 to drive the vehicle 300 by electrical energy. The various elements in the electric drive component 204 are connected through a cooling liquid pipeline. The cooling liquid in the cooling liquid pipeline may be provided to heat or cool the electric drive component 204.

In addition, referring to FIG. 3, in an implementation of the present invention, the outdoor heat exchanger 202 and the radiator 203 may jointly form a front-end heat dissipation module of the vehicle 300, and the thermal management system 200 may further include an electronic fan 212. The electronic fan 212 may correspond to the outdoor heat exchanger 202 and the radiator 203, the electronic fan 212 is configured to form an air flow flowing through the outdoor heat exchanger 202 and the radiator 203 to make the air fully exchange heat with the coolant in the outdoor heat exchanger 202 and the cooling liquid in the radiator 203.

In the implementation of the present invention, the heater core 207 and the evaporator 206 may jointly form an air conditioning module of the vehicle 300. The heater core 207 may be configured to heat the passenger compartment, and the evaporator 206 may be configured to refrigerate the passenger compartment. The heater core 207 and the evaporator 206 may also correspond to the electronic fan to implement hot air and cold air, and may share one fan or use two separate fans, which is not specifically limited herein.

Referring to FIG. 3, the front-end heat dissipation module of the vehicle 300 which the outdoor heat exchanger 202 and the radiator 203 jointly form may be further provided with an air quality sensor 221 and an external temperature sensor 220, which are configured to detect the air quality and the temperature outside the passenger compartment respectively. Moreover, an outlet temperature sensor 213 of the outdoor heat exchanger is arranged at an outlet of the outdoor heat exchanger 202 to acquire the temperature at the outlet of the outdoor heat exchanger 202, and a compressor exhaust temperature sensor 214 is further arranged at an outlet of the compressor 201 and configured to detect the temperature at the outlet of the compressor 201. A low-pressure pressure sensor 215 is further arranged at an inlet of the gas-liquid separator 209 or inlets of both the gas-liquid separator 209 and the compressor 201, and configured to detect the pressure of the coolant returning to the gas-liquid separator 209 and the compressor 201. A surface temperature sensor 216 is further arranged on a surface of the evaporator 206 and configured to detect the surface temperature of the evaporator 206. A first water temperature sensor 218 is further arranged at an outlet of the traction battery 205, and configured to detect the temperature of the cooling liquid flowing out of the traction battery 205 to feed back the temperature of the traction battery 205. A second water temperature sensor 219 is further arranged at an inlet of the electric drive component 204, and configured to detect the temperature of the cooling liquid flowing out of the electric drive component 204. In addition, the thermal management system 200 may further include a fog sensor 222, and the fog sensor 222 is configured to detect the humidity of the passenger compartment in the vehicle and the temperature of vehicle window glass.

Referring to FIG. 2 to FIG. 8 together, the integrated thermal management unit 100 according to implementations of the present invention includes a flow channel plate 101, a pump assembly 106, a valve assembly 110, a water-cooling condenser 111, a water-water heat exchanger 112 and a battery cooler 113.

A plurality of flow channels are formed in the flow channel plate 101, and the pump assembly 106 and the valve assembly 110 are integrated on the flow channel plate 101. The pump assembly 106 includes a heating water pump 107, a battery water pump 108 and a motor water pump 109. Inlets of the heating water pump 107, the battery water pump 108 and the motor water pump 109 are also integrated on the flow channel plate 101 through the valve assembly 110, the water-cooling condenser 111, the water-water heat exchanger 112 and the battery cooler 113.

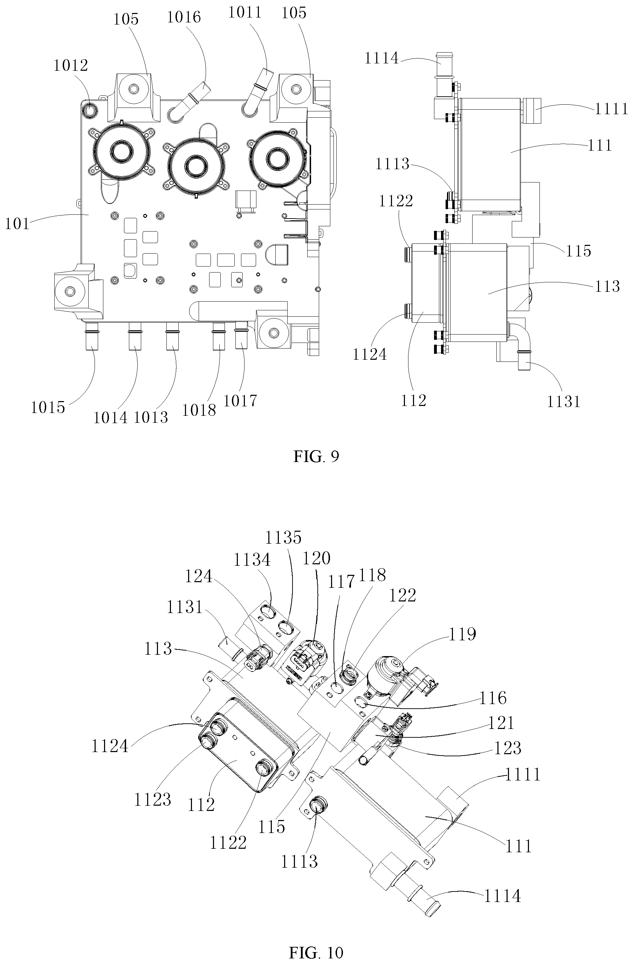

Referring to FIG. 9 to FIG. 11, the water-cooling condenser 111 includes a cooling liquid input 1113 and a cooling liquid output 1114 that are connected with one another, the cooling liquid input 1113 of the water-cooling condenser 111 is connected to an outlet of the heating water pump 107 through the flow channel in the flow channel plate 101, and the cooling liquid output 1114 of the water-cooling condenser 111 is configured to be connected to an inlet of the liquid heater 208. The water-cooling condenser 111 further includes a coolant input 1111 and a coolant output 1112 that are connected with one another, the coolant input 1111 of the water-cooling condenser 111 is configured to be connected to the outlet of the compressor 201, and the coolant output 1112 of the water-cooling condenser 111 is configured to be connected to an inlet of the outdoor heat exchanger 202.

The battery cooler 113 includes a coolant input 1133 and a coolant output, the coolant input 1133 of the battery cooler 113 is configured to be connected to the outlet of the outdoor heat exchanger 202, and the coolant output of the battery cooler 113 is configured to be connected to the inlet of the gas-liquid separator 209 and an outlet of the evaporator 206. Specifically, the coolant output of the battery cooler 113 may include a first coolant output 1134 and a second coolant output 1135. The first coolant output 1134 of the battery cooler 113 is configured to be connected to the inlet of the gas-liquid separator 209 of the vehicle 300, and the second coolant output 1135 of the battery cooler 113 is configured to be connected to the outlet of the evaporator 206.

The battery cooler 113 further includes a cooling liquid input 1131 and a cooling liquid output 1132. The water-water heat exchanger 112 includes a first cooling liquid input 1121 and a first cooling liquid output 1122 that are connected with one another, and a second cooling liquid input 1123 and a second cooling liquid output 1124 that are connected with one another.

The cooling liquid input 1131 of the battery cooler 113 is connected with the first cooling liquid input 1121 and the first cooling liquid output 1122 of the water-water heat exchanger 112, the first cooling liquid output 1122 of the water-water heat exchanger 112 is connected to the valve assembly 110 through the flow channel in the flow channel plate 101, the cooling liquid input 1131 of the battery cooler 113 is configured to be connected to the outlet of the traction battery 205, and an outlet of the battery water pump 108 is configured to be connected to an inlet of the traction battery 205.

The second cooling liquid input 1123 of the water-water heat exchanger 112 is configured to be connected to an outlet of the liquid heater 208 and an inlet of the heater core 207 through the flow channels in the flow channel plate 101, the second cooling liquid output 1124 of the water-water heat exchanger 112 is connected to the valve assembly 110 through the flow channel, the valve assembly 110 is further configured to be connected to the electric drive component 204 and the radiator 203 of the vehicle 300, and the valve assembly 110 is configured to control a flow direction of the cooling liquid in the integrated thermal management unit 100.

It can be understood that in related technologies, with the popularization of new energy vehicles, the requirements for vehicle thermal management are getting higher and higher, and more and more parts are used. If the parts are arranged as loose parts, the parts take up and waste a space of a forecabin, and need to be connected through a plurality of pipelines and fixed by a plurality of supports, resulting in a relatively high cost.

In the integrated thermal management unit 100, the thermal management system 200, and the vehicle 300 according to the implementations of the present invention, the pump assembly 106, the valve assembly 110, the water-cooling condenser 111, the water-water heat exchanger 112, the battery cooler 113 and other elements of the vehicle 300 are integrated on the flow channel plate 101, and all components are deployed on the flow channel plate 101 in a centralized manner, which saves layout space and routing pipelines, and reduces costs. In addition, the pump assembly 106, the valve assembly 110, the water-cooling condenser 111, the water-water heat exchanger 112, the battery cooler 113 and other elements are connected with one another through the flow channels provided in the flow channel plate 101, which can save external pipelines; and at the same time, a relatively short routing communication prevents a pressure loss caused by an excessively long route of the coolant and the cooling liquid in a circulation process, and improves refrigeration and heating effects.

Specifically, in the implementations of the present invention, multiple modes may be implemented by controlling methods of connecting each valve port of the valve assembly 110, such as implementing functions of air-conditioning refrigeration of the vehicle 300, forced cooling of the traction battery, air-conditioning heating, traction battery heating, natural heat dissipation of the electric drive component, thermal insulation for a battery by using the electric drive component, dehumidification of the passenger compartment, use of the electric drive component to heat the passenger compartment, a deicing mode, etc.

Referring to FIG. 2 to FIG. 5, in the implementations of the present invention, the integrated thermal management unit 100 further includes a water tank 114. The water tank 114 is integrated on the flow channel plate 101, the water tank 114 is arranged at the top of the flow channel plate 101, the pump assembly 106 and the valve assembly 110 are integrated at the bottom of the flow channel plate 101, and the battery cooler 113, the water-water heat exchanger 112 and the water-cooling condenser 111 are integrated on a side of the flow channel plate 101.

In this way, spaces of the top, bottom and sides of the flow channel plate 101 can be fully utilized to integrate the water tank 114, the pump assembly 106, the valve assembly 110, the battery cooler 113 and other elements, which further saves a layout space and improves the degree of integration.

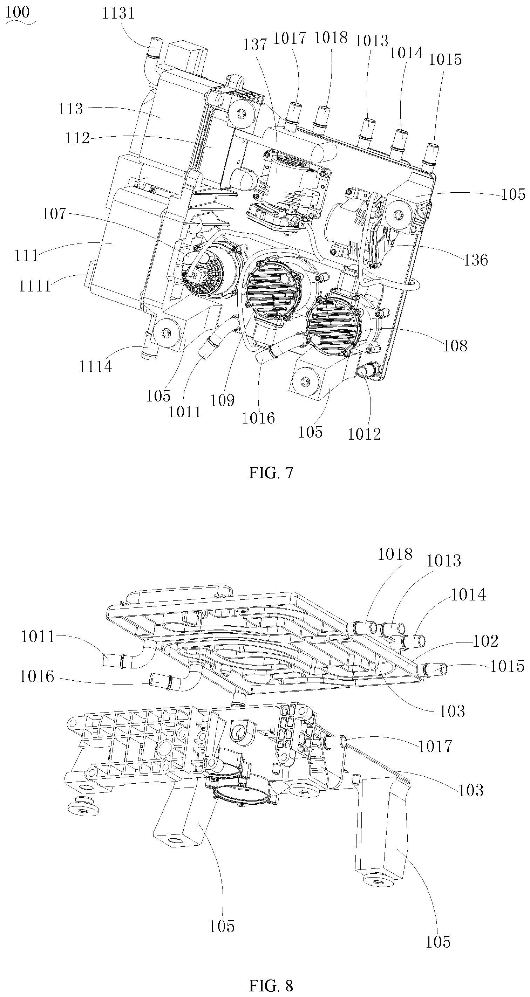

Specifically, referring to FIG. 8, in the implementation of the present invention, the flow channel plate 101 includes an upper plate 102 and a lower plate 103, a plurality of flow channel grooves 104 are formed in the upper plate 102, and the upper plate 102 and the lower plate 103 are in seal fit to close the flow channel grooves 104 to form a plurality of flow channels. The lower plate 103 may be used as a body bearing structure. The pump assembly 106 and the valve assembly 110 are integrated at the bottom of the lower plate 103 of the flow channel plate 101. The lower plate 103 is provided with several openings, and the heating water pump 107, the battery water pump 108, the motor water pump 109 and each valve port of the valve assembly 110 can communicate with the flow channels of the flow channel plate 101 through the openings in the lower plate 103. The battery cooler 113, the water-water heat exchanger 112 and the water-cooling condenser 111 are integrated on a side of the lower plate 103. The water tank 114 may be arranged at the top of the upper plate 102. The upper plate 102 may be provided with openings that are connected with the heating water pump 107, the battery water pump 108 and the motor water pump 109. The heating water pump 107, the battery water pump 108 and the motor water pump 109 are connected with the water tank 114 through the flow channels and the openings of the upper plate 102. The pump assembly 106 and the valve assembly 110 are arranged at the bottom of the flow channel plate 101, and the water-cooling condenser 111, the water-water heat exchanger 112 and the battery cooler 113 are arranged on a side of the flow channel plate 101.

Certainly, it can be understood that in other implementations, a plurality of flow channel grooves 104 may be formed in the lower plate 103 or flow channel grooves 104 are formed in the lower plate 103 and the upper plate 102, which is not specifically limited herein.

In such an implementation, the water tank 114 is configured to store a cooling liquid, such as cooling water. One or more water tanks 114 may be provided, each pump corresponds to one water tank 114, or a plurality of pumps correspond to one water tank 114, or a plurality of water tanks 114 correspond to one pump, which is not specifically limited herein. A connection port is provided at the top of the flow channel plate 101. The water tank 114 is mounted on the flow channel plate 101 and connected with the flow channel in the flow channel plate 101 through the connection port and further connected with the heating water pump 107, the battery water pump 108 and the motor water pump 109 through the flow channels, so that the heating water pump 107, the battery water pump 108 and the motor water pump 109 can all extract the cooling liquid from the water tank 114 and pump the cooling liquid to other parts of the integrated thermal management unit 100. The water tank 114 may be an expansion water tank 114.

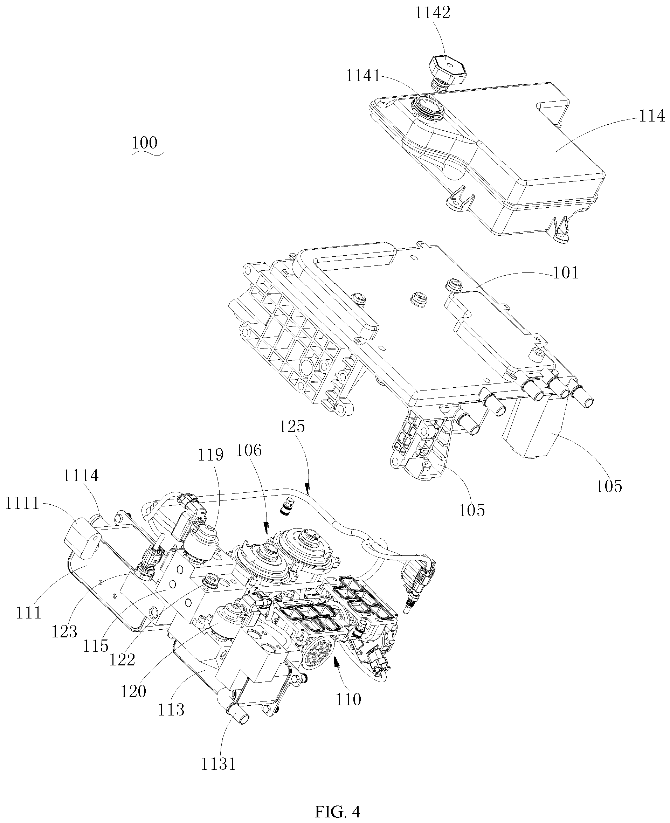

In addition, referring to FIG. 4, a water injection port 1141 is formed on the water tank 114, and the water injection port 1141 is sealed by a water injection cover 1142. A user can unscrew the water injection cover 1142 to fill the water tank 114 with water through the water injection port 1141.

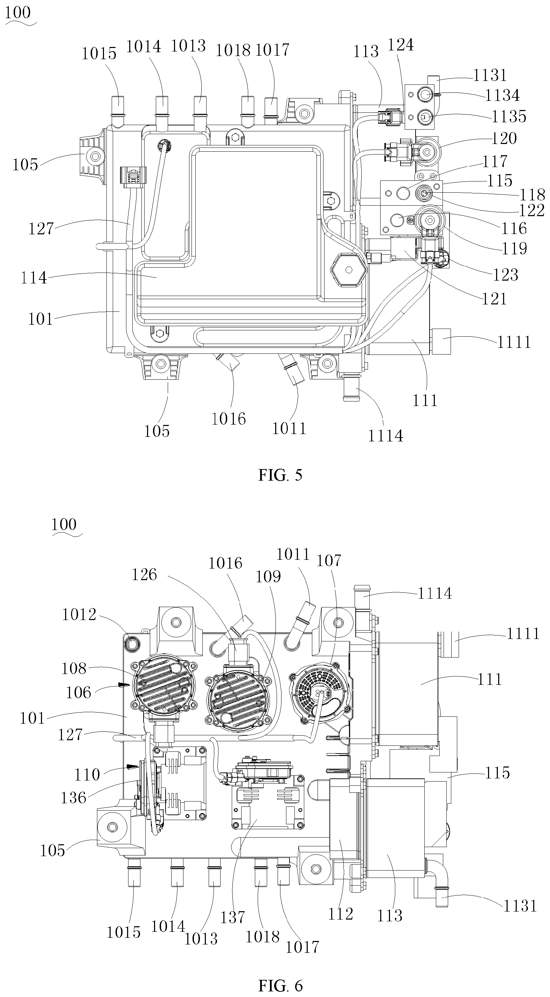

Referring to FIG. 2 and FIG. 4, in the implementations of the present invention, a plurality of fixing connectors 105 are formed on the lower plate 103 of the flow channel plate 101, the fixing connectors 105 are convexly arranged on the lower plate 103 of the flow channel plate 101, and the fixing connectors 105 are configured to connect the vehicle body 301 of the vehicle 300 to integrally install the entire integrated thermal management unit 100 on the vehicle body 301 to avoid separately installing multiple parts on the vehicle, thereby simplifying an installation process and saving an installation space. For example, as shown in FIG. 5, four fixing connectors 105 may be provided, and are located at four corners of the flow channel plate 101 respectively.

Certainly, in other implementations, there may be less than 4 or more than 4 fixing connectors 105, such as 3 or 5 fixing connectors 105. Preferably, in implementations of the present invention, to improve the stability of installation, there may be no less than 3 fixing connectors 105.

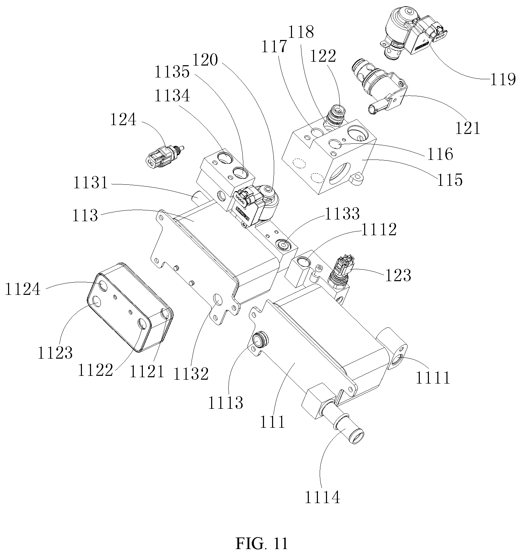

Referring to FIG. 10 and FIG. 11, in implementations of the present invention, the battery cooler 113 and the water-water heat exchanger 112 are integrated, the cooling liquid output 1132 of the battery cooler 113 matches the first cooling liquid input 1121 of the water-water heat exchanger 112, and the battery cooler 113 reuses a cooling liquid flow pipeline with the water-water heat exchanger 112. That is, the battery cooler 113 and the water-water heat exchanger 112 are integrally formed, and the cooling liquid circulation pipeline of the battery cooler 113 and one cooling liquid circulation pipeline of the water-water heat exchanger 112 are reused. In this way, the arrangement of the battery cooler 113 and the water-water heat exchanger 112 can improve the degree of integration without the need for connection through an external connection pipeline. This reduces costs and shortens a routing length of the cooling liquid to avoid pressure and heat losses.

Referring to FIG. 2 to FIG. 7 and FIG. 9 to FIG. 11, in implementations of the present invention, the integrated thermal management unit 100 further includes a mounting base 115, and the mounting base 115 is integrally mounted on the water-cooling condenser 111 and the battery cooler 113. The mounting base 115 forms an inlet, a first coolant interface 116, a second coolant interface 117, a third coolant interface 118 and an outlet. A channel is formed in the mounting base 115 to allow the inlet, the first coolant interface 116, the second coolant interface 117, the third coolant interface 118 and the outlet to connect with one another. The inlet matches and is connected with the coolant output 1112 of the water-cooling condenser 111, the first coolant interface 116 and the second coolant interface 117 are connected in parallel to the inlet, and the third coolant interface 118 is connected with the outlet and the second coolant interface 117; that is, the first coolant interface 116 is connected to the coolant output 1112 of the water-cooling condenser 111, and the second coolant interface 117 is connected to the coolant output 1112 of the water-cooling condenser 111 and is connected in parallel to the first coolant interface 116.

The first coolant interface 116 is configured to be connected to the inlet of the outdoor heat exchanger 202 of the vehicle 300, the second coolant interface 117 is configured to be connected to an inlet of the evaporator 206 of the vehicle 300, one end of the third coolant interface 118 matches and is connected to the coolant input 1133 of the battery cooler 113, and the other end is configured to be connected to the outlet of the outdoor heat exchanger 202.

The integrated thermal management unit 100 further includes a first throttle 119, a shutoff valve 121 and a check valve 122. The first throttle 119 is mounted on the mounting base 115 and connected in series to the first coolant interface 116. The first throttle 119 may be a coolant throttling element such as an electronic expansion valve, and is configured to adjust the flow of the coolant entering the outdoor heat exchanger 202 and throttle the coolant before the coolant enters the outdoor heat exchanger 202. In this way, the first throttle 119 can also be integrated on the flow channel plate 101 through the mounting base 115, which further saves an installation space and improves the degree of integration. In addition, the water-cooling condenser 111 is indirectly connected to the outdoor heat exchanger 202 through the mounting base 115. In this way, when the first throttle 119 needs to be replaced, a user does not need to touch the water-cooling condenser 111, and only needs to directly remove the mounting base 115 or directly remove the first throttle 119 from the mounting base 115, thus improving convenience and safety of operation.

The shutoff valve 121 is also installed on the mounting base 115. The shutoff valve 121 is connected in series between an inlet of the mounting base 115 and the second coolant interface 117. The shut-off 121 is configured to connect or disconnect the second coolant interface 117 and the coolant output 1112 of the water-cooling condenser 111, and the second coolant interface 117 is configured to be connected to the inlet of the evaporator 206 of the vehicle 300. In this way, on the one hand, the integrated installation of the shutoff valve 121 on the mounting base 115 can further save the installation space and improve the degree of integration. On the other hand, through the cooperation of the first throttle 119 and the shutoff valve 121, it can be controlled whether the coolant flows through the outdoor heat exchanger 202 or the evaporator 206 first to achieve refrigeration and heating functions.

In addition, referring to FIG. 11, the third coolant interface 118 on the mounting base 115 is connected with the coolant input 1133 and the second coolant interface 117 of the battery cooler 113, the check valve 122 is installed at the third coolant interface 118, the first coolant output 1134 of the battery cooler 113 is configured to be connected to the gas-liquid separator 209 of the vehicle 300, the gas-liquid separator 209 is connected to the compressor 201, and the second coolant output 1135 of the battery cooler 113 is configured to be connected to the outlet of the evaporator 206.

In this way, on the one hand, the arrangement of the check valve 122 can make the coolant flow from the third coolant interface 118 to the integrated thermal management unit 100 only in one direction and the coolant cannot flow back from the third coolant interface 118. On the other hand, the check valve 122 is also integrally installed on the mounting base 115 to further save the installation space and improve the degree of integration.

Further, in the implementation of the present invention, the integrated thermal management unit 100 further includes a second throttle 120 and a temperature sensor 124, and the second throttle 120 and the temperature sensor 124 are integrated on the battery cooler 113. The second throttle 120 is located at the coolant input 1133 of the battery cooler 113, and the temperature sensor 124 is located at the coolant output (including a first coolant output 1134 and a second coolant output 1135) of the battery cooler 113, and the second throttle 120 may also be a coolant throttling element such as an electronic expansion valve. In this way, the second throttle 120 can be used to adjust the flow of the coolant entering the battery cooler 113 and to throttle the coolant before the coolant enters the battery cooler 113. In addition, the temperature of the coolant flowing out of the battery cooler 113 can also be monitored by the temperature sensor 124. Moreover, integrating the second throttle 120 and the temperature sensor 124 on the battery cooler 113 can further improve the degree of integration, save the installation space, and can also omit external connection pipelines to reduce costs.

Referring to 3, in the implementation of the present invention, the outlet of the outdoor heat exchanger 202 is further connected to the gas-liquid separator 209, and an external shutoff valve 211 is arranged between the outlet of the outdoor heat exchanger 202 and the gas-liquid separator 209. One end of the third coolant interface 118 is configured to be connected between the outlet of the outdoor heat exchanger 202 and the external shutoff valve 211, so that the external shutoff valve 211 and the second throttle 120 can control whether the coolant flowing out of the outdoor heat exchanger 202 flows through the battery cooler 113 and the evaporator 206 or directly flows back into the gas-liquid separator 209. In addition, in the implementation of the present invention, a third throttle 210 is further arranged at the inlet of the evaporator 206. The third throttle 210 may also be a coolant throttling element such as an electronic expansion valve. The third throttle 210 is configured to adjust the flow of the coolant entering the evaporator 206 and to throttle the coolant before the coolant enters the evaporator 206.

Further, in such an implementation, the integrated thermal management unit 100 further includes a pressure-temperature sensor 123, and the pressure-temperature sensor 123 is installed at the coolant output 1112 of the water-cooling condenser 111.

In this way, the pressure-temperature sensor 123 is also directly installed on the water-cooling condenser 111, which further improves the degree of integration. Specifically, the pressure-temperature sensor 123 is configured to monitor the pressure and temperature of the coolant at the coolant output 1112 of the water-cooling condenser 111, and the pressure-temperature sensor 123 may be a high-pressure pressure and temperature integrated sensor.

Referring to FIG. 4 and FIG. 6, further, the integrated thermal management unit 100 further includes an electrical control connection element 125. The electrical control connection element 125 may include several connectors 126 and several wires 127. The connectors 126 may be configured to connect the heating water pump 107, the battery water pump 108, the motor water pump 109, the valve assembly 110, the first throttle 119, the second throttle 120, the shutoff valve 121, the pressure-temperature sensor 123 and the temperature sensor 124, and all the connectors 126 are connected by the wires 127. In this way, the electrical elements (such as the pump assembly and the valve assembly) in the integrated thermal management unit 100 can be directly connected to the onboard controllers and other control elements of the vehicle 300 through the electrical control connection element 125 as a whole to control the integrated thermal management unit 100 without using multiple ports to connect different electrically-controlled elements respectively, which improves the degree of integration.

Referring to FIG. 2 to FIG. 7, FIG. 3 is a schematic diagram of a principle of an integrated thermal management unit 100 and a thermal management system 200 according to an implementation of the present invention, and FIG. 2 and FIG. 4 to FIG. 7 are schematic structural diagrams of the integrated thermal management unit 100 according to an implementation of the present invention.

In the illustrated implementation, a first port 1011, a second port 1012, a third port 1013, a fourth port 1014, a fifth port 1015, a sixth port 1016, a seventh port 1017 and an eighth port 1018 are formed on the flow channel plate 101, and the valve assembly 110 may include a first five-way valve 136 and a second five-way valve 137.

Referring to FIG. 2, a first port a1 of the first five-way valve 136 is connected to the eighth port 1018 through the flow channel, and the eighth port 1018 is configured to be connected to an outlet of the heater core 207; a second port a2 of the first five-way valve 136 is connected with the heating water pump 107 through the flow channel; a third port a3 of the first five-way valve 136 is connected to the first port 1011 through the flow channel, and the first port 1011 is configured to be connected to an outlet of the radiator 203; a fourth port a4 of the first five-way valve 136 is connected to a fifth port b5 of the second five-way valve 137 through the flow channel; a fifth port a5 of the first five-way valve 136 is connected to the second cooling liquid output 1124 of the water-water heat exchanger 112 through the flow channel; a first port b1 of the second five-way valve 137 is connected to the second port 1012 and the third port 1013 through the flow channels, the second port 1012 is configured to be connected to an inlet of the radiator 203, the third port 1013 is configured to be connected to an outlet of the electric drive component 204, and the second port 1012 is connected with the third port 1013; a second port b2 of the second five-way valve 137 is connected to an inlet of the motor water pump 109 through the flow channel, the motor water pump 109 is connected to the fourth port 1014 through the flow channel, and the fourth port 1014 is configured to be connected to the inlet of the electric drive component 204; a third port b3 of the second five-way valve 137 is connected to the first cooling liquid output 1122 of the water-water heat exchanger 112 through the flow channel; a fourth port b4 of the second five-way valve 137 is connected to an inlet of the battery water pump 108 through the flow channel, the battery water pump 108 is connected to the fifth port 1015 through the flow channel, and the fifth port 1015 is configured to be connected to the inlet of the traction battery 205; a fifth port b5 of the second five-way valve 137 is connected to a fourth port a4 of the first five-way valve 136; the second cooling liquid input 1123 of the water-water heat exchanger 112 is connected to the sixth port 1016 and the seventh port 1017 through the flow channels, the sixth port 1016 is configured to be connected to the inlet of the heater core 207, the seventh port 1017 is configured to be connected to the outlet of the liquid heater 208, and the sixth port 1016 is connected with the seventh port 1017.

In this way, a flow path of the cooling liquid can be changed through a relationship of communication between the ports of the two five-way valves to implement different operating modes.

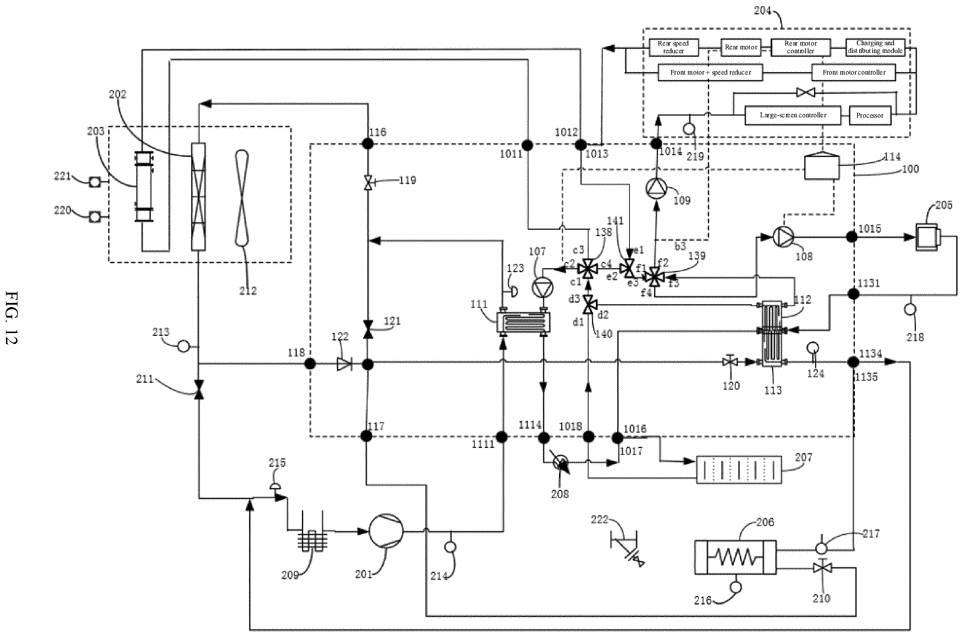

It can be understood that, referring to FIG. 12, in other implementations, the first five-way valve 136 may alternatively be replaced with a first four-way valve 138 and a first three-way valve 140, and the second five-way valve 137 may be replaced with a second four-way valve 139 and a second three-way valve 141. Referring to FIG. 12, in such an implementation, a first port c1 of the first four-way valve 138 is connected to a third port d3 of the first three-way valve 140, a first port d1 of the first three-way valve 140 is connected to the eighth port 1018 through the flow channel, and a second port d2 of the first three-way valve 140 is connected to the second cooling liquid output 1124 of the water-water heat exchanger 112 through the flow channel; a second port c2 of the first four-way valve 138 is connected to the heating water pump 107 through the flow channel; a third port c3 of the first four-way valve 138 is connected with the first port 1011 through the flow channel, and the first port 1011 is configured to be connected to the outlet of the radiator 203; a fourth port c4 of the first four-way valve 138 is connected with a second port e2 of the second three-way valve 141 through the flow channel; a first port e1 of the second three-way valve 141 is connected to the second port 1012 and the third port 1013 through the flow channel, the second port 1012 is configured to be connected to the inlet of the radiator 203, the third port 1013 is configured to be connected to the outlet of the electric drive component 204, and the second port 1012 is connected with the third port 1013; a third port e3 of the second three-way valve 141 is connected to a first port f1 of the second four-way valve 139, a second port f2 of the second four-way valve 139 is connected to the inlet of the motor water pump 109 through the flow channel, the inlet of the motor water pump 109 is connected with the fourth port 1014 through the flow channel, and the fourth port 1014 is configured to be connected to the inlet of the electric drive component 204; a third port f3 of the second four-way valve 139 is connected to the first cooling liquid output 1122 of the water-water heat exchanger 112 through the flow channel; a fourth port f4 of the second four-way valve 139 is connected to the inlet of the battery water pump 108 through the flow channel, the battery water pump 108 is connected with the fifth port 1015 through the flow channel, and the fifth port 1015 is configured to be connected to the inlet of the traction battery 205; the second cooling liquid input 1123 of the water-water heat exchanger 112 is connected to the sixth port 1016 and the seventh port 1017, the sixth port 1016 is configured to be connected to the inlet of the heater core 207, the seventh port 1017 is configured to be connected to the outlet of the liquid heater 208, and the sixth port 1016 is connected with the seventh port 1017.

In such an implementation, it is equivalent to splitting the five-way valve into one four-way valve and one three-way valve. One port of the four-way valve is connected with one port of the three-way valve. The four-way valve and the three-way valve as a whole also only have five ports connected to external elements.

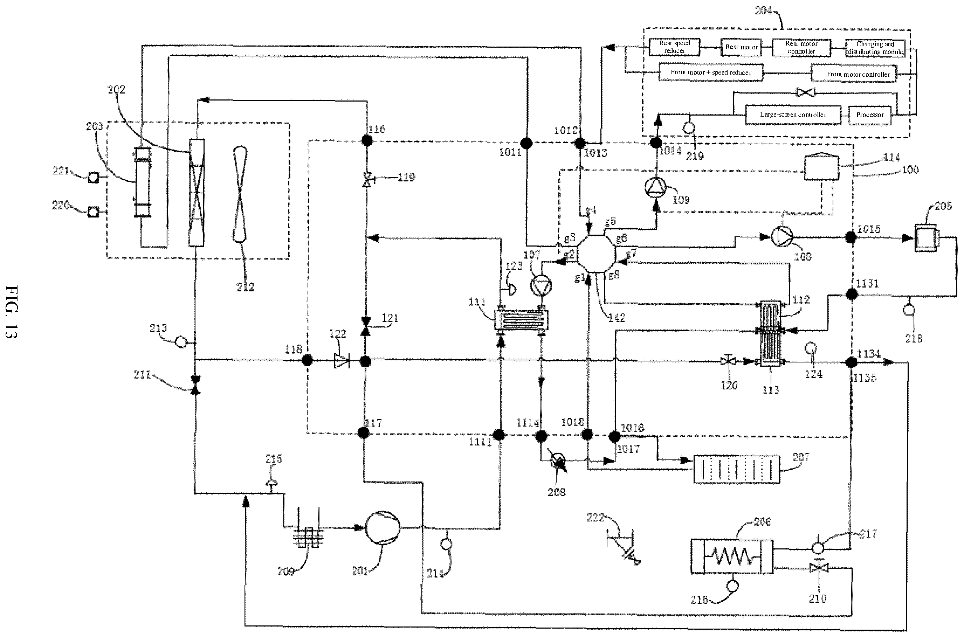

In addition, it can also be understood that, referring to FIG. 13, in other implementations, an eight-way valve 142 may also be used to replace the first five-way valve 136 and the second five-way valve 137 described above. Specifically, referring to FIG. 13, in such an implementation, a first port g1 of the eight-way valve 142 is connected to the eighth port 1018 through the flow channel, and the eighth port 1018 is configured to be connected to the outlet of the heater core 207; a second port g2 of the eight-way valve 142 is connected with the heating water pump 107 through the flow channel; a third port g3 of the eight-way valve 142 is connected with the first port 1011 through the flow channel, and the first port 1011 is configured to be connected to the outlet of the radiator 203; a fourth port g4 of the eight-way valve 142 is connected to the second port 1012 and the third port 1013 through the flow channels, the second port 1012 is configured to be connected to the inlet of the radiator 203, the third port 1013 is configured to be connected to the outlet of the electric drive component 204, and the second port 1012 is connected with the third port 1013; a fifth port g5 of the eight-way valve 142 is connected with the inlet of the motor water pump 109 through the flow channel, the motor water pump 109 is connected to the fourth port 1014 through the flow channel, and the fourth port 1014 is configured to be connected to the inlet of the electric drive component 204; a sixth port g6 of the eight-way valve 142 is connected to the inlet of the battery water pump 108 through the flow channel, the battery water pump 108 is connected with the fifth port 1015 through the flow channel, and the fifth port 1015 is configured to be connected to the inlet of the traction battery 205; a seventh port g7 of the eight-way valve 142 is connected to the first cooling liquid output 1122 of the water-water heat exchanger 112 through the flow channel; an eighth port g8 of the eight-way valve 142 is connected to the second cooling liquid output 1124 of the water-water heat exchanger 112 through the flow channel, the second cooling liquid input 1123 of the water-water heat exchanger 112 is connected to the sixth port 1016 and the seventh port 1017, the sixth port 1016 is configured to be connected to the inlet of the heater core 207, the seventh port 1017 is configured to be connected to the outlet of the liquid heater 208, and the sixth port 1016 is connected with the seventh port 1017.

In such an embodiment, it is equivalent to integrating two five-way valves to form one eight-way valve 142. Two ports between the two five-way valves are connected to one another, and there are only 8 ports of the valve that are connected with external elements as a whole, which may be equivalent to one eight-way valve 142.

It can be understood that in the implementation in which a four-way valve and a three-way valve are used to separately replace one five-way valve and the eight-way valve 142 is used to replace two five-way valves, it is also possible to implement multiple different operating modes by controlling a method of connecting ports of the valve, with the principle being the same as the principle of the five-way valve, which will not be repeated herein.

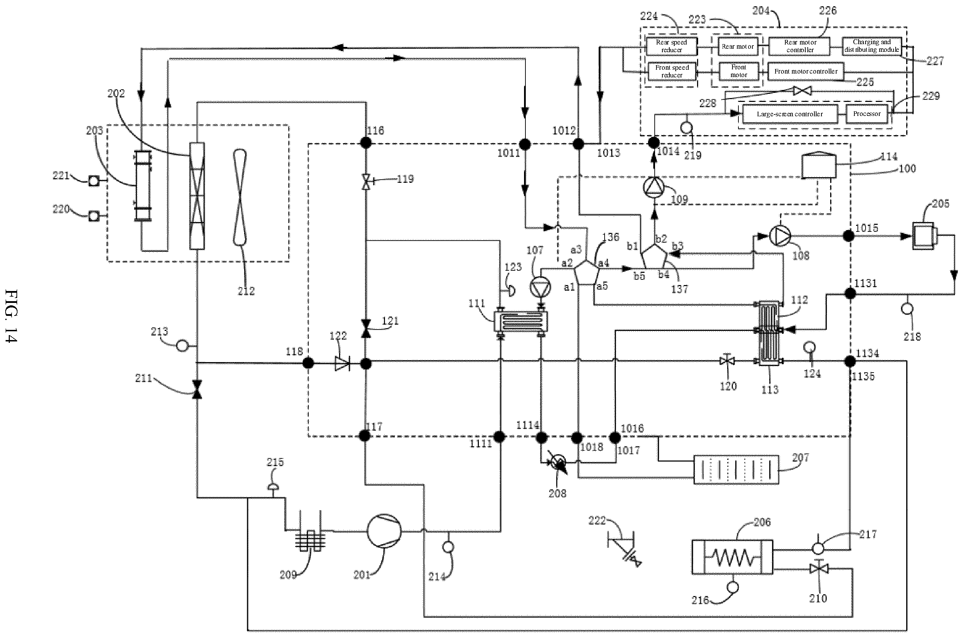

Referring to FIG. 14 to FIG. 16, in some implementations, the electric drive component 204 includes a control device 229, a driving motor 223 and a speed reducer 224, wherein the control device 229 is electrically connected to the driving motor 223 and the speed reducer 224 and sequentially connected therewith through cooling liquid pipelines, and the motor water pump 109 is configured to convey the cooling liquid to the driving motor 223 and the speed reducer 224.

Specifically, the driving motor 223 and the speed reducer 224 may be connected in series, and the control device 229 may be connected in parallel to the driving motor 223 and the speed reducer 224. When the electric drive component 204 generates heat during operation, to ensure the working performance and service life of the electric drive component 204, it is necessary to cool the electric drive component 204.

In some implementations, the driving motors 223 include a front motor and a rear motor, and the speed reducers 224 include a front speed reducer and a rear speed reducer. The front motor and the rear motor are connected in parallel, the front motor and the front speed reducer are connected in series, and the rear speed reducer and the rear motor are connected in series.

Specifically, the driving motors 223 each are mainly configured to convert electrical energy of a power supply into mechanical energy to drive wheels and other devices to start, stop, accelerate or decelerate the vehicle 300. Common driving motors 223 may include a DC motor, an AC asynchronous motor, a permanent magnet motor and a switched reluctance motor. The driving motors 223 may generate heat after operating for a long time, and thus it is necessary to dissipate heat of the driving motors 223.

The main function of the speed reducer 224 is to decelerate and increase torque. In the case of certain power, the speed reducer 224 can reduce a transmission speed and obtain a higher output torque, thereby obtaining a larger driving force. Frictional transmission of a gear generates heat when the speed reducer 224 performs transmission. To prevent damage to the speed reducer 224 caused by long-term operation in a high temperature environment, the speed reducer 224 also needs to be cooled.

In some implementations, the electric drive component 204 further includes a front motor controller 225 and a rear motor controller 226, the front motor controller 225 is connected in series to the rear motor, and the rear motor controller 226 is connected in series to the rear motor. The front motor controller 225 and the rear motor controller 226 can record an image along the way during driving of the vehicle 300, and can also detect a distance between the vehicle 300 and surrounding objects to avoid collision. An image processing unit may be a camera or a radar.

In some implementations, the electric drive component 204 further includes a charging and power distribution module 227, and the charging and power distribution module 227 is connected in series to the rear motor or the front motor. Specifically, the charging and power distribution module 227 cooperates with the traction battery 205 to charge the vehicle 300 so as to provide a power source for the vehicle 300.

In some implementations, the electric drive component 204 further includes diverter valves 228, and the diverter valves 228 are connected in parallel at both ends of the control device 229.

Specifically, the control device 229 may include a processor and a communication digital controller, such as a vehicle control unit or a battery controller. The diverter valve 228 has two operating states: an open state and a closed state, so as to control a flow direction of the cooling liquid in the flow channels. Because the diverter valve 228 is arranged in parallel with the control device 229, when the diverter valve 228 is in an open state, the cooling liquid flows out of the fourth port 1014 of the flow channel plate 101, and then enters the charging and power distribution module 227, the image processing unit and the driving motor 223, etc. through the diverter valve 228 and is cooled; when the diverter valve 228 is in the closed state, the cooling liquid flows out of the fourth port 1014 of the flow channel plate 101, and then flows into the control device 229 and is cooled, and finally enters the charging and power distribution module 227, the image processing unit, the driving motor 223, and the like for heat dissipation.

In some implementations, the second water temperature sensor 219 may be used to detect whether the temperature of the control device 229 is excessively high so as to determine whether the diverter valve 228 needs to be opened. Exemplarily, when the temperature of the control device 229 is higher than a preset temperature, the diverter valve 228 is controlled to be closed; and when the temperature of the control device 229 is lower and does not need to dissipate heat, the diverter valve 228 is controlled to be opened.

It can be understood that, at present, new energy vehicles are being popularized on a large scale. In related technologies, components such as a battery and a motor generate a certain amount of waste heat in vehicle driving engineering, and the heat is usually directly taken away by a cooling liquid or a fan and directly dissipated. Consequently, the heat cannot be effectively used.

Referring to FIG. 2 and FIG. 3, in the implementations of the present invention, the thermal management system 200 has a first operating mode, the first operating mode is a mode in which waste heat is recovered to heat a passenger compartment, or a mode in which a state of connection between the first five-way valve 136 and the second five-way valve 137 is controlled to recover heat of the electric drive component 204 and the traction battery 205 so as to heat the passenger compartment.

In the first operating mode, the valve assembly 110 is in a first preset state. In the first preset state, the valve assembly 110 connects the coolant output of the battery cooler 113 with the inlet of the motor water pump 109, and connects the inlet of the battery water pump 108 with the outlet of the electric drive component 204, and the valve assembly 110 further connects the inlet of the heating water pump 107 with the outlet of the heater core 207. Specifically, the first preset state of the valve assembly 110 is as follows: the first port a1 and the second port a2 of the first five-way valve 136 are connected with one another, the first port b1 and the fourth port b4 of the second five-way valve 137 are connected with one another, and the second port b2 and the third port b3 of the second five-way valve 137 are connected with one another. In the first operating mode, at least one of both the motor water pump 109 and the battery water pump 108 is started, the compressor 201 and the heating water pump 107 are started, the shutoff valve 121 of the integrated thermal management unit 100 is in a closed state, the first throttle 119 and the second throttle 120 are in a throttled state, the external shutoff valve 211 is in a closed state, and the third throttle 210 is in a closed state.

In this case, the motor water pump 109 and the battery water pump 108 may be started at the same power simultaneously, or only the motor water pump 109 or the battery water pump 108 may be started. For example, only the motor water pump 109 is started to output the cooling liquid, and the cooling liquid enters the electric drive component 204 to absorb heat of the electric drive component 204. The heated cooling liquid flows through the third port 1013 and then flows to the first port b1 of the second five-way valve 137, flows from the first port b1 to the fourth port b4 of the second five-way valve 137, and passes through the battery water pump 108 from the fourth port b4 and flows to the traction battery 205. The cooling liquid absorbs the heat of the traction battery 205, and the cooling liquid heated twice flows to the battery cooler 113. In the battery cooler 113, the cooling liquid transfers heat to the coolant, and the cooled cooling liquid flows from the third port b3 to the second port b2 of the second five-way valve 137, and then flows from the second port b2 to the motor water pump 109 to complete the circulation.

At the same time, the coolant also circulates under the action of the compressor 201. Specifically, the compressor 201 outputs the coolant, and the coolant transfers heat to another group of cooling liquid when flowing through the water-cooling condenser 111. The cooled coolant enters the outdoor heat exchanger 202 to absorb heat for evaporation for a first time, and then passes through the check valve 122 and enters the battery cooler 113, and the coolant absorbs the heat of a first group of cooling liquid in the battery cooler 113 for evaporation for a second time. That is, the coolant enters the battery cooler 113 to absorb the heat of the cooling liquid flowing through the battery cooler 113 to evaporate for a second time, and the vaporized coolant flows out of the first coolant output 1134 of the battery cooler 113 to the gas-liquid separator 209, and finally returns to the compressor 201 for the next cycle.

In addition, a second group of cooling liquid also circulates under the action of the heating water pump 107. Specifically, the heating water pump 107 cyclically conveys the second group of cooling liquid to the water-cooling condenser 111, and after absorbing the heat of the coolant in the water-cooling condenser 111, the second group of cooling liquid flows through the liquid heater 208, and then enters the heater core 207 from the liquid heater 208; and the cooling liquid releases heat at the heater core 207 to heat the passenger compartment of the vehicle 300. The cooling liquid having released heat flows out of the outlet of the heater core 207, then flows from the first port a1 to the second port a2 of the five-way valve, and then flows out of the second port a2 to enter the heating water pump 107 for circulation. It should be noted that directions of arrows in FIG. 3 indicate flow directions of the cooling liquid and the coolant.

In this way, the three cycles are performed simultaneously, so that waste heat generated by the traction battery 205 and the electric drive component 204 can be collected and conveyed to the battery cooler 113 and also used to evaporate the coolant. The coolant transfers heat to the second group of cooling liquid, and the second group of cooling liquid can enter the heater core 207, so as to heat a passenger compartment by using the waste heat, and improve the energy utilization rate.

In addition, it can be understood that in the first operating mode, the liquid heater 208 is not started when the cooling liquid flows through the liquid heater 208. In other implementations, when the temperature in the passenger compartment cannot meet a requirement only by the recovered heat, the liquid heater 208 can be started to heat the cooling liquid, so that the temperature of the cooling liquid entering the heater core 207 is higher, which can further increase the temperature in the passenger compartment to meet the requirement.

In the above-mentioned implementation, in the first operating mode, the shutoff valve 121 of the integrated thermal management unit 100 is in a closed state, the first throttle 119 and the second throttle 120 are in a throttled state, and the external shutoff valve 211 is in a closed state. In this case, the battery cooler 113 and the outdoor heat exchanger 202 are connected in series in a coolant circuit. The coolant is evaporated for a first time and for a second time in the outdoor heat exchanger 202 and the battery cooler 113 in sequence. In this case, the heat for evaporation of the coolant comes from the outdoor heat exchanger and waste heat of the traction battery 205 and the electric drive component 204 respectively. This situation may be applied to a scenario wherein the waste heat of the traction battery 205 and the electric drive component 204 is insufficient to meet requirements for heating the passenger compartment.

It can be understood that, in other implementations, in the first operating mode, it is also possible that the first throttle 119 is in a closed state, the second throttle 120 is in a throttled state, the shutoff valve 121 is in an open state, and the external shutoff valve 211 is in a closed state. In this case, after passing through the water-cooling condenser 111 and being cooled, the coolant does not enter the outdoor heat exchanger 202, but directly flows to the battery cooler 113 through the shutoff valve 121 for evaporation. In this case, all heat for evaporation of the coolant comes from the waste heat of the traction battery 205 and the electric drive component 204. This situation may be applied to a scenario wherein the waste heat of both the traction battery 205 and the electric drive component 204 can meet requirements for heating the passenger compartment.

Certainly, in some implementations, in the first operating mode, the shutoff valve 121 is in an open state, the first throttle 119 and the second throttle 120 are in a throttled state, the external shutoff valve 211 is in an open state, and the coolant may also be divided into two parts. One part enters the outdoor heat exchanger 202 through the first throttle 119 to absorb heat, and the other part flows into the battery cooler 113 through the shutoff valve 121 to absorb the waste heat of the traction battery 205 and the electric drive component 204. This situation can be applied to a scenario wherein the waste heat of both the traction battery 205 and the electric drive component 204 is insufficient to meet requirements for heating the passenger compartment and it is necessary to prevent the temperatures of the traction battery 205 and the electric drive component 204 from being excessively low.

It can be understood that, referring to FIG. 12, in other implementations, the first five-way valve 136 may be replaced with a first four-way valve 138 and a first three-way valve 140, and the second five-way valve 137 may be replaced with a second four-way valve 139 and a second three-way valve 141 to implement the first operating mode.

In this case, when the first operating mode is turned on, the first preset state of the valve assembly 110 is as follows: the first port c1 and the second port c2 of the first four-way valve 138 are connected with one another, the first port d1 and the third port d3 of the first three-way valve 140 are connected with one another, the first port f1 and the fourth port f4 of the second four-way valve 139 are connected with one another, the second port f2 and the third port f3 of the second four-way valve are connected with one another, and the first port e1 and the third port e3 of the second three-way valve 141 are connected with one another.

In the first operating mode, the motor water pump 109 and the battery water pump 108 may be started at the same power simultaneously, or only the motor water pump 109 or the battery water pump 108 may be started. For example, only the motor water pump 109 is started to output the cooling liquid, and the cooling liquid enters the electric drive component 204 to absorb heat of the electric drive component 204. The heated cooling liquid flows through the third port 1013 and then flows to the first port d1 of the first three-way valve 140, flows from the first port d1 to the third port d3, flows from the third port d3 of the first three-way valve 140 to the first port f1 of the second four-way valve 139, flows from the first port f1 to the fourth port f4 of the second four-way valve 139, and flows from the fourth port f4 to the traction battery 205 through the battery water pump 108. The cooling liquid absorbs the heat of the traction battery 205, and the cooling liquid heated twice flows to the battery cooler 113. In the battery cooler 113, the cooling liquid transfers heat to the coolant, and the cooled cooling liquid flows from the third port f3 to the second port f2 of the second four-way valve 139, and then flows from the second port f2 to the motor water pump 109 to complete the circulation.

At the same time, the coolant also circulates under the action of the compressor 201, and the flow of the coolant is similar to the flow direction situation of the coolant when the five-way valve is used, and will not be repeated herein.

In addition, a second group of cooling liquid also circulates under the action of the heating water pump 107. Specifically, the heating water pump 107 cyclically conveys the second group of cooling liquid to the water-cooling condenser 111, and after absorbing the heat of the coolant in the water-cooling condenser 111, the second group of cooling liquid flows through the liquid heater 208, and then enters the heater core 207 from the liquid heater 208; and the cooling liquid releases heat at the heater core 207 to heat the passenger compartment of the vehicle 300. The cooling liquid having released heat flows out of the outlet of the heater core 207, then flows from the first port d1 to the third port d3 of the first three-way valve 140, flows from the third port d3 to the first port c1 of the first four-way valve 138, flows from the first port c1 to the second port c2, and then flows out of the second port c2 to enter the heating water pump 107 for circulation. It should be noted that directions of arrows in FIG. 12 indicate flow directions of the cooling liquid and the coolant.

In addition, it can also be understood that, referring to FIG. 13, in other implementations, an eight-way valve 142 may also be used to replace the first five-way valve 136 and the second five-way valve 137 described above to implement the first operating mode.

In this case, when the first operating mode is turned on, the valve assembly 110 is in a first preset state. Specifically, the first preset state of the valve assembly 110 is as follows: the first port g1 and the second port g2 of the eight-way valve 142 are connected with one another, the fourth port g4 and the sixth port g6 of the eight-way valve are connected with one another, and the fifth port g5 and the seventh port g7 of the eight-way valve are connected with one another.

In the first operating mode, the motor water pump 109 and the battery water pump 108 may be started at the same power simultaneously, or only the motor water pump 109 or the battery water pump 108 may be started. For example, the motor water pump 109 and the battery water pump 108 are started at the same power simultaneously. The cooling liquid enters the electric drive component 204 under the action of the motor water pump 109 first to absorb the heat of the electric drive component 204. The heated cooling liquid flows through the third port 1013 and then flows to the fourth port g4 of the eight-way valve 142, flows from the fourth port g4 to the sixth port g6, and then flows from the sixth port g6 to the battery water pump 108, and the battery water pump 108 pushes the cooling liquid to flow to the traction battery 205. The cooling liquid absorbs the heat of the traction battery 205, and the cooling liquid heated twice flows to the battery cooler 113. In the battery cooler 113, the cooling liquid transfers heat to the coolant, and the cooled cooling liquid flows from the seventh port g7 to the fifth port g5 of the eight-way valve 142, and then flows from the fifth port g5 to the motor water pump 109 to complete the circulation.

At the same time, the coolant also circulates under the action of the compressor 201, and the flow of the coolant is similar to the flow direction situation of the coolant when the five-way valve is used, and will not be repeated herein.

In addition, a second group of cooling liquid also circulates under the action of the heating water pump 107. Specifically, the heating water pump 107 cyclically conveys the second group of cooling liquid to the water-cooling condenser 111, and after absorbing the heat of the coolant in the water-cooling condenser 111, the second group of cooling liquid flows through the liquid heater 208, and then enters the heater core 207 from the liquid heater 208; and the cooling liquid releases heat at the heater core 207 to heat the passenger compartment of the vehicle 300. The cooling liquid having released heat flows out of the outlet of the heater core 207, then flows from the first port g1 to the second port g2 of the eight-way valve 142, and then flows out of the second port g2 to enter the heating water pump 107 for circulation. It should be noted that directions of arrows in FIG. 13 indicate flow directions of the cooling liquid and the coolant.

Referring to FIG. 14, in some implementations, the thermal management system 200 further has a second operating mode, and the second operating mode is a mode of natural heat dissipation of a battery, so as to implement natural heat dissipation of the traction battery 205 and the electric drive component 204.

In the second operating mode, the valve assembly 110 is in a second preset state, and at least one of both the battery water pump 108 and the motor water pump 109 is started. Specifically, the second preset state of the valve assembly 110 is as follows: the third port a3 and the fourth port a4 of the first five-way valve 136 are connected with one another, the second port b2 and the third port b3 of the second five-way valve 137 are connected with one another, and the fifth port b5 and the fourth port b4 of the second five-way valve 137 are connected with one another.

At least one of both the battery water pump 108 and the motor water pump 109 is started, which may be that the battery water pump 108 is shut down and the motor water pump 109 is started; or that the motor water pump 109 is shut down and the battery water pump 108 is started, or that both the battery water pump 108 and the motor water pump 109 are started. It should be noted that when the battery water pump 108 and the motor water pump 109 are both started, it is necessary to ensure that the battery water pump 108 and the motor water pump 109 operate at the same power.

Referring to FIG. 14, in the second operating mode, the battery water pump 108 and the motor water pump 109 are started, and the valve assembly 110 is in the second preset state. It should be noted that in this case, the first throttle 119, the second throttle 120 and the third throttle 210 are all in a shutdown state, the shutoff valve 121 and the external shutoff valve 211 are in a closed state, and the compressor 201 is shut down and does not output the coolant. After being cooled by the radiator 203, the cooling liquid flows out of the radiator 203 to the first port 1011 of the flow channel plate 101, and then the cooling liquid enters from the third port a3 of the first five-way valve 136, flows out of the fourth port a4 of the first five-way valve 136 to the fifth port b5 of the second five-way valve 137, and then enters the battery water pump 108 through the fourth port of the second five-way valve 137. The battery water pump 108 conveys the cooling liquid to the traction battery 205, and takes away heat from the traction battery 205 to dissipate the heat of the traction battery 205, so as to prevent the traction battery 205 from overheating.

After dissipating the heat of the traction battery 205, the cooling liquid flows out of the traction battery 205 to the first cooling liquid input 1121 of the water-water heat exchanger 112, flows out of the second cooling liquid output 1122 of the water-water heat exchanger 112 to the third port b3 of the second five-way valve 137, and flows from the second port b2 of the second five-way valve 137 into the motor water pump 109. The motor water pump 109 conveys the cooling liquid into the fourth port 1014 of the flow channel plate 101 and electric drive component 204, and the cooling liquid flows through the electric drive component 204 to cool parts in the electric drive component 204, and finally flows out of the electric drive component 204 and then sequentially flows out of the third port 1103 and the second port 1102 of the flow channel plate 101 to the radiator 203. After the cooling liquid returns to the radiator 203, the radiator 203 can dissipate heat of the cooling liquid, and the airflow formed by the electronic fan 212 and flowing through the radiator 203 can make the cooling liquid fully exchange heat. Finally, the cooling liquid flows out of the radiator 203 to the traction battery 205 and the electric drive component 204 for the next cycle. It should be noted that direction of the arrow in FIG. 14 indicate the flow direction of the cooling liquid.

In this way, the cooling liquid is cooled by the temperature of the ambient air through the radiator 203, and then sequentially flows to the traction battery 205 and the electric drive component 204 for cooling, so that the traction battery 205 and the electric drive component 204 can share the same radiator 203 for cooling, thus reducing costs.

In some implementations, in the second operating mode, the valve assembly 110 is in a second preset state, the battery water pump 108 is started, and the motor water pump 109 is shut down. In some implementations, in the second operating mode, the battery water pump 108 and the motor water pump 109 are started, and the valve assembly 110 is in the second preset state. In both cases, the flow direction of the cooling liquid is the same as that in the case where both the battery water pump 108 and the motor water pump 109 are started, and thus the description will not be repeated herein. Therefore, in both cases, the cooling liquid can still cool the traction battery 205 and the electric drive component 204 through the radiator 203.

It should be noted that the shutdown of either the motor water pump 109 or the battery water pump 108 will reduce the circulation rate of the cooling liquid, thus reducing the heat dissipation efficiency of the cooling liquid to the traction battery 205 and the electric drive component 204. Preferably, in the second operating mode, both the battery water pump 108 and the motor water pump 109 should be controlled to be started.

The natural heat dissipation of the second operating mode is suitable for charging vehicles in spring and autumn. When a vehicle is charged, the traction battery 205 and the electric drive component 204 generate heat. Because of the low ambient temperature in spring and autumn, the heat dissipation of the traction battery 205 and the electric drive component 204 can be completed by using the radiator 203 only, without starting the compressor 201, the water-cooling condenser 111 and the battery cooler 113 and other devices for auxiliary heat dissipation, so as to improve charging efficiency while saving electric energy.

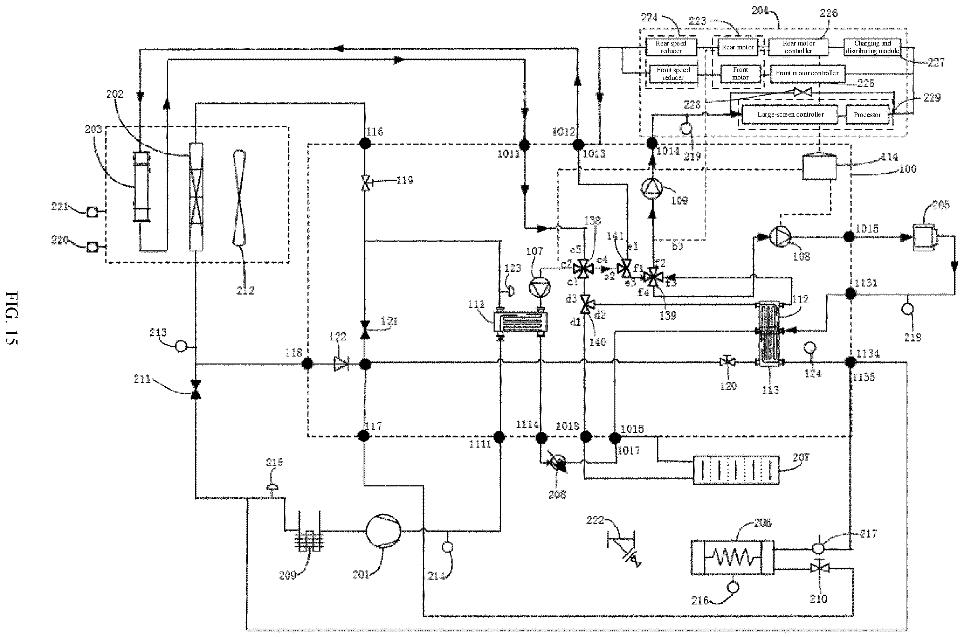

Referring to FIG. 15, in the implementation shown in FIG. 15, a four-way valve and a three-way valve may be used to separately replace one five-way valve. In this case, the second preset state of the valve assembly 110 is as follows: the third port c3 and the fourth port c4 of the first four-way valve 138 are connected with one another, the second port e2 and the third port e3 of the second three-way valve 141 are connected with one another, the first port f1 and the fourth port f4 of the second four-way valve 139 are connected to one another, and the second port f2 and the third port f3 of the second four-way valve 139 are connected with one another, so as to cause the thermal management system 200 to enter the second operating mode. In this case, the flow direction of the cooling liquid is similar to the flow direction of the cooling liquid when the first five-way valve 136 and the second five-way valve 137 are used, and will not be repeated herein. For details, references may be made to the direction of the arrow in FIG. 15, which indicates the flow direction of the cooling liquid.

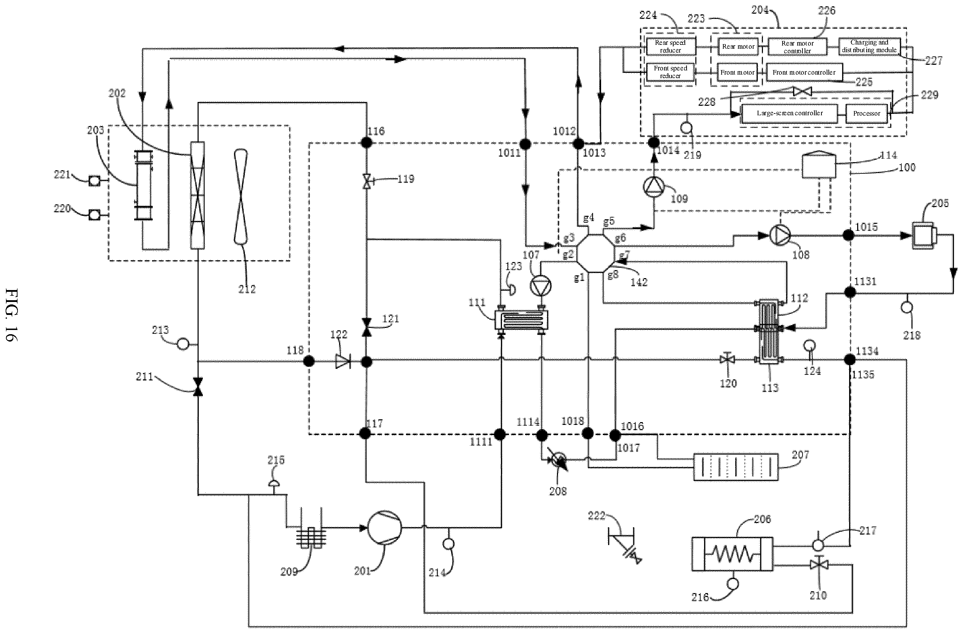

In addition, referring to FIG. 16, in the implementation shown in FIG. 16, it is also possible to use the eight-way valve 142 to replace the first five-way valve 136 and the second five-way valve 137. In this case, the second preset state of the valve assembly 110 is as follows: the third port g3 and the sixth port g6 of the eight-way valve 142 are connected with one another, and the fifth port g5 and the seventh port g7 of the eight-way valve 142 are connected with one another, so as to cause the thermal management system 200 to enter the second operating mode. In this case, the flow direction of the cooling liquid is similar to the flow direction of the cooling liquid when the first five-way valve 136 and the second five-way valve 137 are used, and will not be repeated herein. For details, references may be made to the direction of the arrow in FIG. 16, which indicates the flow direction of the cooling liquid.

In addition, the above is just an exemplary description of several modes that can be implemented by the integrated thermal management unit 100 and the thermal management system 200 in the present invention. Specifically, it can be understood that the overall integrated thermal management unit 100 of the present invention may further implement other modes besides the above-mentioned modes, such as implementing air-conditioning heating of the vehicle 300, traction battery heating, natural heat dissipation of the electric drive component, thermal insulation for a battery by using the electric drive component, dehumidification of the passenger compartment, use of the electric drive component to heat the passenger compartment, a deicing mode, etc. These will not be introduced one by one in the present invention.

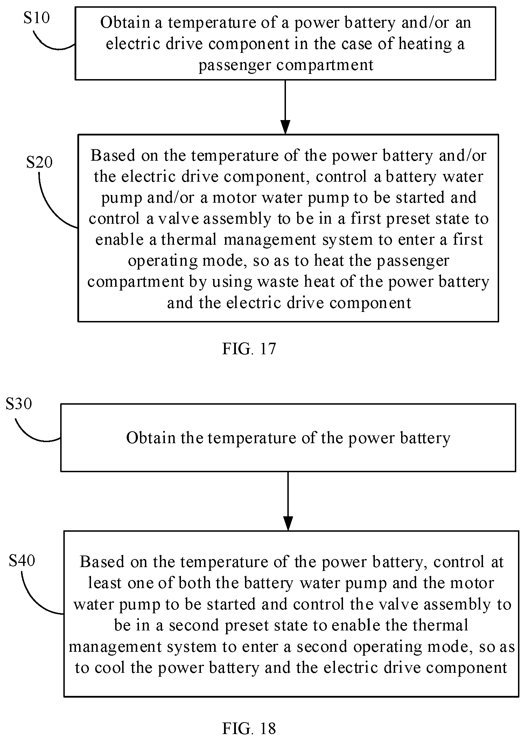

Referring to FIG. 17, the control method according to the implementation of the present application is used for the thermal management system 200 of the implementation of the present invention. The control method for the thermal management system 200 includes the following steps.

S10: Obtain a temperature of the traction battery 205 and/or the electric drive component 204 in the case of heating the passenger compartment.

S20: Based on the temperature of the traction battery 205 and/or the electric drive component 204, control the battery water pump 108 and/or the motor water pump 109 to be started and control the valve assembly 110 to be in a first preset state to cause the thermal management system 200 to enter a first operating mode, so as to heat the passenger compartment by using waste heat of the traction battery 205 and the electric drive component 204.

Steps S10 and S20 may be implemented by the onboard controller of the vehicle 300 (for example, a processor unit such as a vehicle control unit). Specifically, in step S10, the value of the first water temperature sensor 218 arranged at the outlet of the traction battery 205 can be acquired to detect the temperature of the cooling liquid flowing out of the traction battery 205, and the second water temperature sensor 219 is obtained to detect the temperature of the cooling liquid flowing out of the electric drive component 204, so that the temperatures of the traction battery 205 and the electric drive component 204 can be fed back.

Further, in step S20, when it is detected that the temperature values of the electric drive component 204 and the traction battery 205 are greater than the preset temperature, and a user needs to heat the passenger compartment, the battery water pump 108 and/or the motor water pump 109 are controlled to be started and the valve assembly 110 is controlled to be in a first preset state to cause the thermal management system 200 to enter a first operating mode, so as to heat the passenger compartment by using waste heat of the electric drive component 204 and the traction battery 205. In the first operating mode, the state of each device in the thermal management system 200 and the flow direction of the cooling liquid have been described in detail above. For details, references may be made to the above-mentioned description of the first operating mode, which will not be repeated herein.

Referring to FIG. 3 and FIG. 17, when the valve assembly 110 includes a first five-way valve 136 and a second five-way valve 137, step S20 includes:
controlling the first port a1 and the second port a2 of the first five-way valve 136 to connect with one another, controlling the first port b1 and the fourth port b4 of the second five-way valve 137 to connect with one another, and controlling the second port b2 and the third port b3 of the second five-way valve 137 to connect with one another to cause the thermal management system 200 to enter the first operating mode.

The above-mentioned step may be implemented by the onboard controller of the vehicle 300 (for example, a processor unit such as a vehicle control unit). Specifically, when the step is executed, the first operating mode is started, and the first preset state of the valve assembly 110 is as follows: the first port a1 and the fourth port a2 of the first five-way valve 136 are connected with one another, the first port b1 and the fourth port b4 of the second five-way valve 137 are connected with one another, and the second port b2 and the third port b3 of the second five-way valve 137 are connected with one another.

In the first operating mode, the state of each device in the thermal management system 200 and the flow direction of the cooling liquid have been described in detail above. For details, references may be made to the above-mentioned description of the first operating mode, which will not be repeated herein.

Referring to FIG. 12 and FIG. 17, in some implementations, the first five-way valve 136 may be replaced with a first four-way valve 138 and a first three-way valve 140, and the second five-way valve 137 may be replaced with a second four-way valve 139 and a second three-way valve 141 to implement the first operating mode.

In such an implementation, step S20 may include:
controlling the first port c1 and the second port c2 of the first four-way valve 138 to connect with one another, controlling the first port d1 and the third port d3 of the first three-way valve 140 to connect with one another, controlling the first port f1 and the fourth port f4 of the second four-way valve 139 to connect with one another, controlling the second port f2 and the third port f3 of the second four-way valve to connect with one another, and controlling the first port e1 and the third port e3 of the second three-way valve 141 to connect with one another to cause the thermal management system 200 to enter the first operating mode.

The above-mentioned step may be implemented by the onboard controller of the vehicle 300 (for example, a processor unit such as a vehicle control unit). Specifically, when the step is executed, the first operating mode is turned on, and the first preset state of the valve assembly 110 is as follows: the first port c1 and the second port c2 of the first four-way valve 138 are connected with one another, the first port d1 and the third port d3 of the first three-way valve 140 are connected with one another, the first port f1 and the fourth port f4 of the second four-way valve 139 are connected with one another, the second port f2 and the third port f3 of the second four-way valve are connected with one another, and the first port e1 and the third port e3 of the second three-way valve 141 are connected with one another.

In the first operating mode, the state of each device in the thermal management system 200 and the flow direction of the cooling liquid have been described in detail above. For details, references may be made to the above-mentioned description of the first operating mode, which will not be repeated herein.

Referring to FIG. 13 and FIG. 17, in some implementations, the first five-way valve 136 and the second five-way valve 137 may be replaced with an eight-way valve 142.

In such an implementation, step S20 may include:
controlling the first port g1 and the second port g2 of the eight-way valve 142 to connect with one another, controlling the fourth port g4 and the sixth port g6 of the eight-way valve to connect with one another, and controlling the fifth port g5 and the seventh port g7 of the eight-way valve to connect with one another to cause the thermal management system 200 to enter the first operating mode.

The above-mentioned step may be implemented by the onboard controller of the vehicle 300 (for example, a processor unit such as a vehicle control unit). Specifically, when the step is executed, the first operating mode is turned on, and the first preset state of the valve assembly 110 is as follows: the first port g1 and the second port g2 of the eight-way valve 142 are connected with one another, the fourth port g4 and the sixth port g6 of the eight-way valve are connected with one another, and the fifth port g5 and the seventh port g7 of the eight-way valve are connected with one another.

In the first operating mode, the state of each device in the thermal management system 200 and the flow direction of the cooling liquid have been described in detail above. For details, references may be made to the above-mentioned description of the first operating mode, which will not be repeated herein.

Referring to FIG. 14 and FIG. 18, in some implementations, the control method for the thermal management system 200 further includes the following steps.

S30: Obtain the temperature of the traction battery 205.

S40: Based on the temperature of the traction battery 205, control at least one of both the battery water pump 108 and the motor water pump 109 to be started and control the valve assembly 110 to be in a second preset state to cause the thermal management system 200 to enter a second operating mode, so as to cool the traction battery 205 and the electric drive component 204.

Specifically, steps S30 and S40 may be implemented by the onboard controller of the vehicle 300 (for example, a processor unit such as a vehicle control unit). Specifically, in step S30, the temperature of the traction battery 205 is obtained to monitor the temperature of the traction battery 205, and the first water temperature sensor 218 arranged at the outlet of the traction battery 205 may detect the temperature of the cooling liquid flowing out of the traction battery 205 to feed back the temperature of the traction battery 205.

In step S40, when it is detected that the temperature value of the traction battery 205 is greater than the preset temperature, it means that the traction battery 205 needs to be cooled. In this case, at least one of both the battery water pump 108 and the motor water pump 109 may be controlled to be started and the valve assembly 110 is controlled to be in a second preset state to cause the thermal management system 200 to enter a second operating mode, so as to cool the traction battery 205 with the electric drive component 204 by the same radiator 203. In the second operating mode, the second preset state of the valve assembly 110 is as follows: the third port a3 and the fourth port a4 of the first five-way valve 136 are connected with one another, the second port b2 and the third port b3 of the second five-way valve 137 are connected with one another, the fifth port b5 and the fourth port b4 of the second five-way valve 137 are connected with one another, and the battery water pump 108 and the motor water pump 109 are started.

In the second operating mode, the state of each device in the thermal management system 200 and the flow direction of the cooling liquid have been described in detail above. For details, references may be made to the above-mentioned description of the second operating mode, which will not be repeated herein.

Referring to FIG. 14 and FIG. 18, when the valve assembly 110 includes a first five-way valve 136 and a second five-way valve 137, step S40 includes:
controlling the third port a3 and the fourth port a4 of the first five-way valve 136 to connect with one another, controlling the second port b2 and the third port b3 of the second five-way valve 137 to connect with one another, and controlling the fourth port b4 and the fifth port b5 of the second five-way valve 137 to connect with one another to cause the thermal management system 200 to enter the second operating mode.

Referring to FIG. 15 and FIG. 18, when the valve assembly 110 includes a first four-way valve 138, a second four-way valve 139, a first three-way valve 140 and a second three-way valve 141, step S40 includes:
controlling the third port c3 and the fourth port c4 of the first four-way valve 138 to connect with one another, controlling the second port e2 and the third port e3 of the second three-way valve 141 to connect with one another, controlling the first port f1 and the fourth port f4 of the second four-way valve 139 to be connected to one another, and controlling the second port f2 and the third port f3 of the second four-way valve 139 to connect with one another, so as to cause the thermal management system 200 to enter the second operating mode.

Referring to FIG. 16 and FIG. 18, when the valve assembly 110 includes an eight-way valve 142, step S40 includes:
controlling the third port g3 and the sixth port g6 of the eight-way valve 142 to connect with one another, and controlling the fifth port g5 and the seventh port g7 of the eight-way valve 142 to connect with one another, so as to cause the thermal management system 200 to enter the second operating mode.

Specifically, the above-mentioned step may be implemented by the onboard controller of the vehicle 300 (for example, a processor unit such as a vehicle control unit).

In conclusion, the thermal management system 200 according to the implementations of the present application is used for a vehicle 300. The thermal management system 200 includes a compressor 201, an electric drive component 204, a traction battery 205, a heater core 207, a gas-liquid separator 209 and an integrated thermal management unit 100 according to an implementation of the present invention. A plurality of flow channels are formed in the flow channel plate 101; a pump assembly 106 and a valve assembly 110 are integrated on the flow channel plate 101, the pump assembly 106 includes a battery water pump 108, a motor water pump 109 and a heating water pump 107, an inlet of the battery water pump 108 is connected to the valve assembly 110 through the flow channel, an outlet of the battery water pump 108 is connected to an inlet of the traction battery 205 through the flow channel, an outlet of the traction battery 205 is connected to the valve assembly 110, an inlet of the motor water pump 109 is connected to the valve assembly 110 through the flow channel, an outlet of the motor water pump 109 is connected to an inlet of the electric drive component 204, an inlet of the heating water pump 107 is connected to the valve assembly 110 through the flow channel, and the valve assembly 110 is configured to control the flow direction of the cooling liquid in the integrated thermal management unit 100.

The water-cooling condenser 111 and the battery cooler 113 are integrated on the flow channel plate, a coolant input of the water-cooling condenser 111 is connected to the compressor 201, a coolant output of the water-cooling condenser 111 is connected to a coolant input of the battery cooler 113, an outlet of the heating water pump 107 is connected to a cooling liquid input of the water-cooling condenser 111 through the flow channel, a cooling liquid output of the water-cooling condenser 111 is connected to an inlet of the heater core 207, and an outlet of the heater core 207 is connected to the valve assembly 110. A coolant output of the battery cooler 113 is connected to an inlet of the gas-liquid separator 209, a cooling liquid input of the battery cooler 113 is connected to the outlet of the traction battery 205, a cooling liquid output of the battery cooler 113 is connected to the valve assembly 110, and the valve assembly 110 is configured to control a flow direction of a cooling liquid in the integrated thermal management unit 100.

The thermal management system 200 has a first operating mode; in the first operating mode, the compressor 201 and the heating water pump 107 are started, at least one of both the battery water pump 108 and the motor water pump 109 is started, and the valve assembly 110 is in a first preset state; in the first preset state, the valve assembly 110 connects a coolant output of the battery cooler 113 with an inlet of the motor water pump 109, and connects an inlet of the battery water pump 108 with an outlet of the electric drive component 204, and the valve assembly 110 further connects an inlet of the heating water pump 107 with an outlet of the heater core 207; the battery water pump 108 and/or the motor water pump 109 convey a cooling liquid heated by the electric drive component 204 and the traction battery 205 to the battery cooler 113, the heating water pump 107 conveys the cooling liquid to the water-cooling condenser 111 and the heater core 207, a coolant is cooled when flowing through the water-cooling condenser 111 under the action of the compressor 201 so as to heat the cooling liquid flowing through the water-cooling condenser 111, so that the heater core 207 heats the passenger compartment of the vehicle 300, the cooled coolant can flow through the battery cooler 113 to absorb the heat of the cooling liquid flowing through the battery cooler 113 to evaporate, and the evaporated coolant flows into the gas-liquid separator 209.

In the thermal management system 200, the control method therefor, and the vehicle 300 according to the implementations of the present invention, the thermal management system 200 has a first operating mode; in the first operating mode, the compressor 201 and the heating water pump 107 are started, at least one of both the battery water pump 108 and the motor water pump 109 is started, and the valve assembly 110 is in a first preset state; in the first preset state, the valve assembly 110 connects a coolant output of the battery cooler 113 with an inlet of the motor water pump 109, and connects an inlet of the battery water pump 108 with an outlet of the electric drive component 204, and the valve assembly 110 further connects an inlet of the heating water pump 107 with an outlet of the heater core 207; the battery water pump 108 and/or the motor water pump 109 convey a cooling liquid heated by the electric drive component 204 and the traction battery 205 to the battery cooler 113, the heating water pump 107 conveys the cooling liquid to the water-cooling condenser 111 and the heater core 207, a coolant is cooled when flowing through the water-cooling condenser 111 under the action of the compressor 201 so as to heat the cooling liquid flowing through the water-cooling condenser 111, so that the heater core 207 heats the passenger compartment of the vehicle 300, the cooled coolant can flow through the battery cooler 113 to absorb the heat of the cooling liquid flowing through the battery cooler 113 to evaporate, and the evaporated coolant flows into the gas-liquid separator 209. In this way, in the first operating mode, waste heat generated by the traction battery 205 and the electric drive component 204 can be collected and conveyed to the battery cooler 113 and used to evaporate a coolant, so as to heat a passenger compartment by using the waste heat, and improve the energy utilization rate. In addition, the pump assembly 106, the valve assembly 110, the water-cooling condenser 111, the water-water heat exchanger 112, the battery cooler 113 and other elements are integrated on the flow channel plate 101, which saves layout space and routing pipelines, and reduces costs.

## Claims

1. A thermal management system (200) for a vehicle (300), comprising a compressor (201), a gas-liquid separator (209), a heater core (207), a traction battery (205), an electric drive component (204) and an integrated thermal management unit (100), wherein:
the integrated thermal management unit (100) is connected to the compressor (201), the gas-liquid separator (209), the heater core (207), the traction battery (205) and the electric drive component (204), and the integrated thermal management unit (100) comprises:
a flow channel plate (101) having a plurality of flow channels formed therein;
a pump assembly (106) and a valve assembly (110) both integrated on the flow channel plate (101), wherein the pump assembly comprises a battery water pump (108), a motor water pump (109) and a heating water pump (107), an inlet of the battery water pump (108) is connected to the valve assembly (110) through the flow channel, an outlet of the battery water pump (108) is connected to an inlet of the traction battery (205) through the flow channel, an outlet of the traction battery (205) is connected to the valve assembly (110), an inlet of the motor water pump (109) is connected to the valve assembly (110) through the flow channel, an outlet of the motor water pump (109) is connected to an inlet of the electric drive component (204) through the flow channel, and an inlet of the heating water pump (107) is connected to the valve assembly (110) through the flow channel; and
a water-cooling condenser (111) and a battery cooler (113) both integrated on the flow channel plate (101), wherein a coolant input of the water-cooling condenser (111) is connected to the compressor (201), a coolant output of the water-cooling condenser (111) is connected to a coolant input of the battery cooler (113), an outlet of the heating water pump (107) is connected to a cooling liquid input of the water-cooling condenser (111) through the flow channel, a cooling liquid output of the water-cooling condenser (111) is connected to an inlet of the heater core (207), and an outlet of the heater core (207) is connected to the valve assembly (110), and wherein a coolant output (1134) of the battery cooler (113) is connected to an inlet of the gas-liquid separator (209), a cooling liquid input (1131) of the battery cooler (113) is connected to the outlet of the traction battery (205), a cooling liquid output (1132) of the battery cooler (113) is connected to the valve assembly (110), and the valve assembly (110) is configured to control a flow direction of a cooling liquid in the integrated thermal management unit (100);
wherein the thermal management system (200) has a first operating mode, wherein in the first operating mode, the compressor (201) and the heating water pump (107) are started, the battery water pump (108) and/or the motor water pump (109) are started, and the valve assembly (110) is in a first preset state, wherein in the first preset state, the valve assembly (110) connects the coolant output of the battery cooler (113) with an inlet of the motor water pump (109), connects an inlet of the battery water pump (108) with an outlet of the electric drive component (204), and further connects an inlet of the heating water pump (107) with an outlet of the heater core (207);
wherein the battery water pump (108) and/or the motor water pump (109) are configured to convey a cooling liquid heated by the electric drive component (204) and the traction battery (205) to the battery cooler (113), the heating water pump (107) is configured to convey the cooling liquid to the water-cooling condenser (111) and the heater core (207), a coolant is cooled when driven by the compressor (201) to flow through the water-cooling condenser (111) so as to heat the cooling liquid flowing through the water-cooling condenser (111), so that the heater core (207) effectively heats a passenger compartment of the vehicle (300), the cooled coolant flows through the battery cooler (113) so as to absorb heat of the cooling liquid flowing through the battery cooler (113) to evaporate, and the evaporated coolant flows into the gas-liquid separator (209);
wherein the thermal management system (200) further comprises a radiator (203), an evaporator (206) and a liquid heater (208);
wherein the integrated thermal management unit (100) further comprises a water-water heat exchanger (112) integrated on the flow channel plate (101);
wherein the electric drive component (204) is further connected to an inlet of the radiator (203), and an outlet of the radiator (203) is connected to the valve assembly; **characterised in that**:
the battery cooler (113) and the water-water heat exchanger (112) are integrally formed, arranged and located directly next to each other on a side of the flow channel plate (101), wherein a cooling liquid output (1132) of the battery cooler (113) matches a first cooling liquid input (1121) of the water-water heat exchanger (112) so that the battery cooler (113) and the water-water heat exchanger (112) use a common cooling liquid flow pipeline so as to improve the degree of integration by avoiding a connection through an external connection pipeline, and wherein the coolant output (1134) of the battery cooler (113) is further connected to an outlet of the evaporator (206); and
wherein the cooling liquid output (1132) of the battery cooler (113) and the first cooling liquid input (1121) of the water-water heat exchanger (112) are further connected with a first cooling liquid output (1122) of the water-water heat exchanger (112), the first cooling liquid output (1122) of the water-water heat exchanger (112) is connected to the valve assembly (110) through the flow channel, a second cooling liquid input (1123) of the water-water heat exchanger (112) is connected with an outlet of the liquid heater (208), and a second cooling liquid output (1124) of the water-water heat exchanger (112) is connected to the valve assembly (110) through the flow channel.

2. The thermal management system according to claim 1, further comprising an outdoor heat exchanger (202), wherein:
the coolant output of the water-cooling condenser (111) is further connected to an inlet of the outdoor heat exchanger (202), and the coolant input of the battery cooler (113) is further connected to an outlet of the outdoor heat exchanger (202); and
in the first operating mode, the coolant is cooled when driven by the compressor (201) to flow through the water-cooling condenser (111), so as to heat the cooling liquid flowing through the water-cooling condenser, the cooled coolant flows into the outdoor heat exchanger (202) for evaporating for a first time, and then enters the battery cooler (113) to absorb the heat of the cooling liquid flowing through the battery cooler to evaporate for a second time, and after the second evaporation, the coolant flows into the gas-liquid separator (209).

3. The thermal management system according to claim 2, wherein:
The integrated thermal management unit (100) further comprises a mounting base (115) and a first throttle (119), the mounting base is integrally mounted on the water-cooling condenser (111), a first coolant interface (116) is formed on the mounting base, the first coolant interface is connected with the coolant output of the water-cooling condenser, the first throttle is mounted on the mounting base and connected in series to the first coolant interface, and the first coolant interface is connected to the inlet of the outdoor heat exchanger; and
the integrated thermal management unit further comprises a second throttle (120) and a temperature sensor (124), both integrated on the battery cooler (113), the second throttle is located at the coolant input of the battery cooler, the temperature sensor is located at the coolant output of the battery cooler, and in the first operating mode, the first throttle and the second throttle are in a throttled state.

4. The thermal management system according to claim 3, wherein:
the integrated thermal management unit (100) further comprises a shutoff valve (121), the shutoff valve is mounted on the mounting base (115), a second coolant interface (117) is further formed on the mounting base, the second coolant interface is connected to the coolant output of the water-cooling condenser (111) and is connected in parallel to the first coolant interface (116), the shutoff valve is connected in series to the second coolant interface, the shutoff valve is configured to connect or disconnect the second coolant interface and the coolant output of the water-cooling condenser, the second coolant interface is connected to an inlet of the evaporator (206), an outlet of the evaporator is connected to the gas-liquid separator, and in the first operating mode, the shutoff valve is in a closed state.

5. The thermal management system according to claim 4, wherein a third coolant interface (118) is further formed on the mounting base (115) and connected with the second coolant interface (117), a check valve (122) is mounted at the third coolant interface, an external shutoff valve (211) is arranged between the outlet of the outdoor heat exchanger (202) and the gas-liquid separator (209), the third coolant interface is connected between the outlet of the outdoor heat exchanger and the external shutoff valve, and in the first operating mode, the external shutoff valve is in a closed state.

6. The thermal management system according to claim 1, wherein:
a first port through to an eighth port are formed on the flow channel plate, and the valve assembly comprises a first five-way valve (136) and a second five-way valve (137);
a first port of the first five-way valve is connected to the eighth port through the flow channel, and the eighth port is connected to the outlet of the heater core;
a second port of the first five-way valve is connected with the inlet of the heating water pump through the flow channel;
a third port of the first five-way valve is connected with the first port through the flow channel, and the first port is connected to the outlet of the radiator;
a fourth port of the first five-way valve is connected to a fifth port of the second five-way valve through the flow channel;
a fifth port of the first five-way valve is connected to the second cooling liquid output of the water-water heat exchanger through the flow channel;
a first port of the second five-way valve is connected to the second port and the third port through the flow channel, the second port is connected to the inlet of the radiator, the third port is connected to the outlet of the electric drive component of the vehicle, and the second port is connected with the third port;
a second port of the second five-way valve is connected to the inlet of the motor water pump through the flow channel, the outlet of the motor water pump is connected with the fourth port through the flow channel, and the fourth port is connected to the inlet of the electric drive component;
a third port of the second five-way valve is connected to the first cooling liquid output of the water-water heat exchanger through the flow channel;
a fourth port of the second five-way valve is connected to the inlet of the battery water pump through the flow channel, the battery water pump is connected with the fifth port through the flow channel, and the fifth port is connected to the inlet of the traction battery;
the fifth port of the second five-way valve is connected to the fourth port of the first five-way valve, the second cooling liquid input of the water-water heat exchanger is connected to the sixth port and the seventh port, the sixth port is connected to the inlet of the heater core, the seventh port is connected to the outlet of the liquid heater, and the sixth port is connected with the seventh port; and
when the valve assembly is in the first preset state, the first port and the second port of the first five-way valve are connected with one another, the first port and the fourth port of the second five-way valve are connected with one another, and the second port and the third port of the second five-way valve are connected with one another.

7. The thermal management system according to claim 1, wherein:
a first port through to an eighth port are formed on the flow channel plate, and the valve assembly comprises a first four-way valve (138), a second four-way valve (139), a first three-way valve (140) and a second three-way valve (141);
a first port of the first four-way valve is connected to a third port of the first three-way valve, a first port of the first three-way valve is connected to the eighth port through the flow channel, and a second port of the first three-way valve is connected to the second cooling liquid output of the water-water heat exchanger through the flow channel;
a second port of the first four-way valve is connected with the inlet of the heating water pump through the flow channel;
a third port of the first four-way valve is connected with the first port through the flow channel, and the first port is configured to be connected to the outlet of the radiator;
a fourth port of the first four-way valve is connected with a second port of the second three-way valve through the flow channel;
a first port of the second three-way valve is connected to the second port and the third port through the flow channel, the second port is configured to be connected to the inlet of the radiator, the third port is connected to the outlet of the electric drive component, and the second port is connected with the third port;
a third port of the second three-way valve is connected with a first port of the second four-way valve;
a second port of the second four-way valve is connected to the inlet of the motor water pump through the flow channel, the outlet of the motor water pump is connected with the fourth port through the flow channel, and the fourth port is configured to be connected to the inlet of the electric drive component;
a third port of the second four-way valve is connected to the first cooling liquid output of the water-water heat exchanger through the flow channel;
a fourth port of the second four-way valve is connected to the inlet of the battery water pump through the flow channel, the battery water pump is connected with the fifth port through the flow channel, and the fifth port is connected to the inlet of the traction battery;
the second cooling liquid input of the water-water heat exchanger is connected to the sixth port and the seventh port, the sixth port is configured to be connected to the inlet of the heater core, the seventh port is connected to the outlet of the liquid heater, and the sixth port is connected with the seventh port; and
when the valve assembly is in the first preset state, the first port and the second port of the first four-way valve are connected with one another, the first port and the third port of the first three-way valve are connected with one another, the first port and the fourth port of the second four-way valve are connected with one another, the second port and the third port of the second four-way valve are connected with one another, and the first port and the third port of the second three-way valve are connected with one another.

8. The thermal management system according to claim 1, wherein:
a first port through to an eighth port are formed on the flow channel plate, and the valve assembly comprises an eight-way valve (142);
a first port of the eight-way valve is connected to the eighth port through the flow channel, and the eighth port is configured to be connected to the outlet of the heater core;
a second port of the eight-way valve is connected with the inlet of the heating water pump through the flow channel;
a third port of the eight-way valve is connected with the first port through the flow channel, and the first port is configured to be connected to the outlet of the radiator;
a fourth port of the eight-way valve is connected to the second port and the third port through the flow channel, the second port is configured to be connected to the inlet of the radiator, the third port is configured to be connected to the outlet of the electric drive component, and the second port is connected with the third port;
a fifth port of the eight-way valve is connected with the inlet of the motor water pump through the flow channel, the outlet of the motor water pump is connected to the fourth port through the flow channel, and the fourth port is configured to be connected to the inlet of the electric drive component;
a sixth port of the eight-way valve is connected to the inlet of the battery water pump through the flow channel, the battery water pump is connected with the fifth port through the flow channel, and the fifth port is connected to the inlet of the traction battery;
a seventh port of the eight-way valve is connected to the first cooling liquid output of the water-water heat exchanger through the flow channel;
an eighth port of the eight-way valve is connected to the second cooling liquid output of the water-water heat exchanger through the flow channel, the second cooling liquid input of the water-water heat exchanger is connected to the sixth port and the seventh port, the sixth port is connected to the inlet of the heater core, the seventh port is connected to the outlet of the liquid heater, and the sixth port is connected with the seventh port; and
when the valve assembly is in the first preset state, the first port and the second port of the eight-way valve are connected with one another, the fourth port and the sixth port of the eight-way valve are connected with one another, and the fifth port and the seventh port of the eight-way valve are connected with one another.

9. The thermal management system according to any one of claims 6 to 8, wherein the thermal management system has a second operating mode, wherein:
in the second operating mode, at least one of both the battery water pump and the motor water pump is started, and the valve assembly is in a second preset state;
in the second preset state, the valve assembly is connected with the inlet of the battery water pump and the outlet of the radiator, and communicates with the outlet of the traction battery and the inlet of the electric drive component, the battery water pump and/or the motor water pump convey the cooling liquid to the traction battery and then into the electric drive component through the valve assembly, the cooling liquid flows through the electric drive component and enters the radiator for cooling, and then flows out of the radiator and further flows back to the inlet(s) of the battery water pump and/or the motor water pump through the valve assembly.

10. A control method for the thermal management system according to claim 1, comprising:
obtaining (S10) a temperature of the traction battery and/or the electric drive component while the passenger compartment is being heated; and
based on the temperature of the traction battery and/or the electric drive component, controlling (S20) the battery water pump and/or the motor water pump to start and controlling the valve assembly to be in a first preset state to cause the thermal management system to enter a first operating mode, so as to heat the passenger compartment using waste heat of the traction battery and the electric drive component.

11. The control method for a thermal management system according to claim 10, wherein:
a first port through to an eighth port are formed on the flow channel plate, and the valve assembly comprises a first five-way valve and a second five-way valve;
a first port of the first five-way valve is connected to the eighth port through the flow channel, and the eighth port is connected to the outlet of the heater core;
a second port of the first five-way valve is connected with the inlet of the heating water pump through the flow channel;
a third port of the first five-way valve is connected with the first port through the flow channel, and the first port is connected to the outlet of the radiator;
a fourth port of the first five-way valve is connected to a fifth port of the second five-way valve through the flow channel;
a fifth port of the first five-way valve is connected to the second cooling liquid output of the water-water heat exchanger through the flow channel;
a first port of the second five-way valve is connected to the second port and the third port through the flow channel, the second port is connected to the inlet of the radiator, the third port is connected to the outlet of the electric drive component of the vehicle, and the second port is connected with the third port;
a second port of the second five-way valve is connected to the inlet of the motor water pump through the flow channel, the outlet of the motor water pump is connected with the fourth port through the flow channel, and the fourth port is connected to the inlet of the electric drive component;
a third port of the second five-way valve is connected to the first cooling liquid output of the water-water heat exchanger through the flow channel;
a fourth port of the second five-way valve is connected to the inlet of the battery water pump through the flow channel, the battery water pump is connected with the fifth port through the flow channel, and the fifth port is connected to the inlet of the traction battery;
the fifth port of the second five-way valve is connected to the fourth port of the first five-way valve, the second cooling liquid input of the water-water heat exchanger is connected to the sixth port and the seventh port, the sixth port is connected to the inlet of the heater core, the seventh port is connected to the outlet of the liquid heater, and the sixth port is connected with the seventh port; and
said controlling the valve assembly to be in a first preset state to cause the thermal management system to enter a first operating mode comprises:
controlling the first port and the second port of the first five-way valve to connect with one another, controlling the first port and the fourth port of the second five-way valve to connect with one another, and controlling the second port and the third port of the second five-way valve to connect with one another to cause the thermal management system to enter the first operating mode.

12. The control method for a thermal management system according to claim 10, wherein:
a first port through to an eighth port are formed on the flow channel plate, and the valve assembly comprises a first four-way valve, a second four-way valve, a first three-way valve and a second three-way valve;
a first port of the first four-way valve is connected to a third port of the first three-way valve, a first port of the first three-way valve is connected to the eighth port through the flow channel, and a second port of the first three-way valve is connected to the second cooling liquid output of the water-water heat exchanger through the flow channel;
a second port of the first four-way valve is connected with the inlet of the heating water pump through the flow channel;
a third port of the first four-way valve is connected with the first port through the flow channel, and the first port is configured to be connected to the outlet of the radiator;
a fourth port of the first four-way valve is connected with a second port of the second three-way valve through the flow channel;
a first port of the second three-way valve is connected to the second port and the third port through the flow channel, the second port is configured to be connected to the inlet of the radiator, the third port is connected to the outlet of the electric drive component, and the second port is connected with the third port;
a third port of the second three-way valve is connected with a first port of the second four-way valve;
a second port of the second four-way valve is connected to the inlet of the motor water pump through the flow channel, the outlet of the motor water pump is connected with the fourth port through the flow channel, and the fourth port is configured to be connected to the inlet of the electric drive component;
a third port of the second four-way valve is connected to the first cooling liquid output of the water-water heat exchanger through the flow channel;
a fourth port of the second four-way valve is connected to the inlet of the battery water pump through the flow channel, the battery water pump is connected with the fifth port through the flow channel, and the fifth port is connected to the inlet of the traction battery;
the second cooling liquid input of the water-water heat exchanger is connected to the sixth port and the seventh port, the sixth port is configured to be connected to the inlet of the heater core, the seventh port is connected to the outlet of the liquid heater, and the sixth port is connected with the seventh port; and
said controlling the valve assembly to be in a first preset state to cause the thermal management system to enter a first operating mode comprises:
controlling the first port and the second port of the first four-way valve to connect with one another, controlling the first port and the third port of the first three-way valve to connect with one another, controlling the first port and the fourth port of the second four-way valve to connect with one another, controlling the second port and the third port of the second four-way valve to connect with one another, and controlling the first port and the third port of the second three-way valve to connect with one another to cause the thermal management system to enter the first operating mode.

13. The control method for a thermal management system according to claim 10, wherein:
a first port through to an eighth port are formed on the flow channel plate, and the valve assembly comprises an eight-way valve;
a first port of the eight-way valve is connected to the eighth port through the flow channel, and the eighth port is configured to be connected to the outlet of the heater core;
a second port of the eight-way valve is connected with the inlet of the heating water pump through the flow channel;
a third port of the eight-way valve is connected with the first port through the flow channel, and the first port is configured to be connected to the outlet of the radiator;
a fourth port of the eight-way valve is connected to the second port and the third port through the flow channel, the second port is configured to be connected to the inlet of the radiator, the third port is configured to be connected to the outlet of the electric drive component, and the second port is connected with the third port;
a fifth port of the eight-way valve is connected with the inlet of the motor water pump through the flow channel, the outlet of the motor water pump is connected to the fourth port through the flow channel, and the fourth port is configured to be connected to the inlet of the electric drive component;
a sixth port of the eight-way valve is connected to the inlet of the battery water pump through the flow channel, the battery water pump is connected with the fifth port through the flow channel, and the fifth port is connected to the inlet of the traction battery;
a seventh port of the eight-way valve is connected to the first cooling liquid output of the water-water heat exchanger through the flow channel;
an eighth port of the eight-way valve is connected to the second cooling liquid output of the water-water heat exchanger through the flow channel, the second cooling liquid input of the water-water heat exchanger is connected to the sixth port and the seventh port, the sixth port is connected to the inlet of the heater core, the seventh port is connected to the outlet of the liquid heater, and the sixth port is connected with the seventh port; and
said controlling the valve assembly to be in a first preset state to cause the thermal management system to enter a first operating mode comprises:
controlling the first port and the second port of the eight-way valve to connect with one another, controlling the fourth port and the sixth port of the eight-way valve to connect with one another, and controlling the fifth port and the seventh port of the eight-way valve to connect with one another to cause the thermal management system to enter the first operating mode.

14. A vehicle (300), comprising:
a vehicle body (301); and
the thermal management system (200) according to any one of claims 1 to 9 installed on the vehicle body (301).

## Patentansprüche

1. Wärmemanagementsystem (200) für ein Fahrzeug (300), umfassend einen Kompressor (201), einen Gas-Flüssigkeits-Abscheider (209), einen Heizerkern (207), eine Traktionsbatterie (205), eine elektrische Antriebskomponente (204) und eine integrierte Wärmemanagementeinheit (100), wobei:
die integrierte Wärmemanagementeinheit (100) mit dem Kompressor (201), dem Gas-Flüssigkeits-Abscheider (209), dem Heizerkern (207), der Traktionsbatterie (205) und der elektrischen Antriebskomponente (204) verbunden ist, und die integrierte Wärmemanagementeinheit (100) umfasst:
eine Strömungskanalplatte (101), aufweisend eine Vielzahl darin ausgebildeter Strömungskanäle;
eine Pumpenbaugruppe (106) und eine Ventilbaugruppe (110), die beide auf der Strömungskanalplatte (101) integriert sind, wobei die Pumpenbaugruppe eine Batteriewasserpumpe (108), eine Motorwasserpumpe (109) und eine Heizwasserpumpe (107) umfasst, wobei ein Einlass der Batteriewasserpumpe (108) mit der Ventilbaugruppe (110) durch den Strömungskanal verbunden ist, wobei ein Auslass der Batteriewasserpumpe (108) mit einem Einlass der Traktionsbatterie (205) durch den Strömungskanal verbunden ist, ein Auslass der Traktionsbatterie (205) mit der Ventilbaugruppe (110) verbunden ist, ein Einlass der Motorwasserpumpe (109) mit der Ventilbaugruppe (110) durch den Strömungskanal verbunden ist, ein Auslass der Motorwasserpumpe (109) mit einem Einlass der elektrischen Antriebskomponente (204) durch den Strömungskanal verbunden ist, und ein Einlass der Heizwasserpumpe (107) mit der Ventilbaugruppe (110) durch den Strömungskanal verbunden ist; und
einen Wasserkühlkondensator (111) und einen Batteriekühler (113), die beide auf der Strömungskanalplatte (101) integriert sind, wobei ein Kühlmitteleingang des Wasserkühlkondensators (111) mit dem Kompressor (201) verbunden ist, ein Kühlmittelausgang des Wasserkühlkondensators (111) mit einem Kühlmitteleingang des Batteriekühlers (113) verbunden ist, ein Auslass der Heizwasserpumpe (107) mit einem Kühlflüssigkeitseingang des Wasserkühlkondensators (111) durch den Strömungskanal verbunden ist, ein Kühlflüssigkeitsausgang des Wasserkühlkondensators (111) mit einem Einlass des Heizerkerns (207) verbunden ist und ein Auslass des Heizerkerns (207) mit der Ventilbaugruppe (110) verbunden ist, und wobei ein Kühlmittelausgang (1134) des Batteriekühlers (113) mit einem Einlass des Gas-Flüssigkeits-Abscheiders (209) verbunden ist, ein Kühlflüssigkeitseingang (1131) des Batteriekühlers (113) mit dem Auslass der Traktionsbatterie (205) verbunden ist, ein Kühlflüssigkeitsausgang (1132) des Batteriekühlers (113) mit der Ventilbaugruppe (110) verbunden ist, und die Ventilbaugruppe (110) konfiguriert ist, um eine Strömungsrichtung einer Kühlflüssigkeit in der integrierten Wärmemanagementeinheit (100) zu steuern;
wobei das Wärmemanagementsystem (200) einen ersten Betriebsmodus hat, wobei in dem ersten Betriebsmodus der Kompressor (201) und die Heizwasserpumpe (107) gestartet werden, die Batteriewasserpumpe (108) und/oder die Motorwasserpumpe (109) gestartet werden, und die Ventilbaugruppe (110) in einem ersten voreingestellten Zustand ist, wobei in dem ersten voreingestellten Zustand die Ventilbaugruppe (110) den Kühlmittelausgang des Batteriekühlers (113) mit einem Einlass der Motorwasserpumpe (109) verbindet, einen Einlass der Batteriewasserpumpe (108) mit einem Auslass der elektrischen Antriebskomponente (204) verbindet und ferner einen Einlass der Heizwasserpumpe (107) mit einem Auslass des Heizerkerns (207) verbindet;
wobei die Batteriewasserpumpe (108) und/oder die Motorwasserpumpe (109) konfiguriert ist/sind, um eine von der elektrischen Antriebskomponente (204) und der Traktionsbatterie (205) erwärmte Kühlflüssigkeit zum Batteriekühler (113) zu fördern, die Heizwasserpumpe (107) konfiguriert ist, um die Kühlflüssigkeit zum Wasserkühlkondensator (111) und zum Heizerkern (207) zu fördern, ein Kühlmittel gekühlt wird, wenn es durch den Kompressor (201) angetrieben wird, um durch den Wasserkühlkondensator (111) zu strömen, um die durch den Wasserkühlkondensator (111) strömende Kühlflüssigkeit zu erwärmen, so dass der Heizerkern (207) einen Fahrgastraum des Fahrzeugs (300) effektiv erwärmt, das gekühlte Kühlmittel durch den Batteriekühler (113) strömt, um Wärme der durch den Batteriekühler (113) strömenden Kühlflüssigkeit zu absorbieren und zu verdampfen, und das verdampfte Kühlmittel in den Gas-Flüssigkeits-Abscheider (209) strömt;
wobei das Wärmemanagementsystem (200) ferner einen Radiator (203), einen Verdampfer (206) und einen Flüssigkeitsheizer (208) umfasst;
wobei die integrierte Wärmemanagementeinheit (100) ferner einen Wasser-Wasser-Wärmetauscher (112) umfasst, der auf der Strömungskanalplatte (101) integriert ist;
wobei die elektrische Antriebskomponente (204) ferner mit einem Einlass des Radiators (203) verbunden ist und ein Auslass des Radiators (203) mit der Ventilbaugruppe verbunden ist; **dadurch gekennzeichnet, dass**:
der Batteriekühler (113) und der Wasser-Wasser-Wärmetauscher (112) einstückig ausgebildet, angeordnet und direkt nebeneinander auf einer Seite der Strömungskanalplatte (101) angeordnet sind,
wobei ein Kühlflüssigkeitsausgang (1132) des Batteriekühlers (113) mit einem ersten Kühlflüssigkeitseingang (1121) des Wasser-Wasser-Wärmetauschers (112) übereinstimmt, so dass der Batteriekühler (113) und der Wasser-Wasser-Wärmetauscher (112) eine gemeinsame Kühlflüssigkeitsströmungsleitung verwenden, um den Integrationsgrad zu verbessern, indem eine Verbindung durch eine externe Verbindungsleitung vermieden wird, und wobei der Kühlmittelausgang (1134) des Batteriekühlers (113) ferner mit einem Ausgang des Verdampfers (206) verbunden ist; und
wobei der Kühlflüssigkeitsausgang (1132) des Batteriekühlers (113) und der erste Kühlflüssigkeitseingang (1121) des Wasser-Wasser-Wärmetauschers (112) ferner mit einem ersten Kühlflüssigkeitsausgang (1122) des Wasser-Wasser-Wärmetauschers (112) verbunden sind, wobei der erste Kühlflüssigkeitsausgang (1122) des Wasser-Wasser-Wärmetauschers (112) durch den Strömungskanal mit der Ventilbaugruppe (110) verbunden ist, ein zweiter Kühlflüssigkeitseinlass (1123) des Wasser-Wasser-Wärmetauschers (112) mit einem Auslass des Flüssigkeitsheizers (208) verbunden ist, und ein zweiter Kühlflüssigkeitsausgang (1124) des Wasser-Wasser-Wärmetauschers (112) mit der Ventilbaugruppe (110) durch den Strömungskanal verbunden ist.

2. Wärmemanagementsystem nach Anspruch 1, ferner umfassend einen Außenwärmetauscher (202), wobei:
der Kühlmittelausgang des Wasserkühlkondensators (111) ferner mit einem Einlass des Außenwärmetauschers (202) verbunden ist, und der Kühlmitteleingang des Batteriekühlers (113) ferner mit einem Auslass des Außenwärmetauschers (202) verbunden ist; und
in dem ersten Betriebsmodus das Kühlmittel gekühlt wird, wenn es durch den Kompressor (201) angetrieben wird, um durch den Wasserkühlkondensator (111) zu strömen, um die durch den Wasserkühlkondensator strömende Kühlflüssigkeit zu erwärmen, das gekühlte Kühlmittel in den Außenwärmetauscher (202) strömt, um ein erstes Mal zu verdampfen, und dann in den Batteriekühler (113) eintritt, um die Wärme der durch den Batteriekühler strömenden Kühlflüssigkeit aufzunehmen, um ein zweites Mal zu verdampfen, und nach der zweiten Verdampfung das Kühlmittel in den Gas-Flüssigkeits-Abscheider (209) strömt.

3. Wärmemanagementsystem nach Anspruch 2, wobei:
die integrierte Wärmemanagementeinheit (100) ferner einen Montagesockel (115) und eine erste Drossel (119) umfasst, der Montagesockel einstückig auf dem Wasserkühlkondensator (111) montiert ist, eine erste Kühlmittelschnittstelle (116) auf dem Montagesockel ausgebildet ist, die erste Kühlmittelschnittstelle mit dem Kühlmittelausgang des Wasserkühlkondensators verbunden ist, die erste Drossel auf dem Montagesockel montiert und mit der ersten Kühlmittelschnittstelle in Reihe geschaltet ist, und die erste Kühlmittelschnittstelle mit dem Einlass des Außenwärmetauschers verbunden ist; und
die integrierte Wärmemanagementeinheit ferner eine zweite Drossel (120) und einen Temperatursensor (124) umfasst, die beide auf dem Batteriekühler (113) integriert sind, die zweite Drossel am Kühlmitteleingang des Batteriekühlers angeordnet ist, der Temperatursensor am Kühlmittelausgang des Batteriekühlers angeordnet ist, und in dem ersten Betriebsmodus die erste Drossel und die zweite Drossel in einem gedrosselten Zustand sind.

4. Wärmemanagementsystem nach Anspruch 3, wobei:
die integrierte Wärmemanagementeinheit (100) ferner ein Absperrventil (121) umfasst, wobei das Absperrventil auf dem Montagesockel (115) montiert ist, eine zweite Kühlmittelschnittstelle (117) ferner auf dem Montagesockel ausgebildet ist, die zweite Kühlmittelschnittstelle mit dem Kühlmittelausgang des Wasserkühlkondensators (111) verbunden ist und parallel zu der ersten Kühlmittelschnittstelle (116) geschaltet ist, das Absperrventil mit der zweiten Kühlmittelschnittstelle in Reihe geschaltet ist, das Absperrventil konfiguriert ist, um die zweite Kühlmittelschnittstelle und den Kühlmittelausgang des Wasserkühlkondensators zu verbinden oder zu trennen, die zweite Kühlmittelschnittstelle mit einem Einlass des Verdampfers (206) verbunden ist, ein Auslass des Verdampfers mit dem Gas-Flüssigkeits-Abscheider verbunden ist, und in dem ersten Betriebsmodus das Absperrventil in einem geschlossenen Zustand ist.

5. Wärmemanagementsystem nach Anspruch 4, wobei ferner an dem Montagesockel (115) eine dritte Kühlmittelschnittstelle (118) ausgebildet und mit der zweiten Kühlmittelschnittstelle (117) verbunden ist, an der dritten Kühlmittelschnittstelle ein Rückschlagventil (122) montiert ist, zwischen dem Auslass des Außenwärmetauschers (202) und dem Gas-Flüssigkeits-Abscheider (209) ein externes Absperrventil (211) angeordnet ist, die dritte Kühlmittelschnittstelle zwischen den Auslass des Außenwärmetauschers und das externe Absperrventil geschaltet ist, und in dem ersten Betriebsmodus das externe Absperrventil in einem geschlossenen Zustand ist.

6. Wärmemanagementsystem nach Anspruch 1, wobei:
ein erster Anschluss bis zu einem achten Anschluss auf der Strömungskanalplatte ausgebildet sind, und die Ventilbaugruppe ein erstes Fünf-Wege-Ventil (136) und ein zweites Fünf-Wege-Ventil (137) umfasst;
ein erster Anschluss des ersten Fünf-Wege-Ventils mit dem achten Anschluss durch den Strömungskanal verbunden ist, und der achte Anschluss mit dem Auslass des Heizerkerns verbunden ist;
ein zweiter Anschluss des ersten Fünf-Wege-Ventils durch den Strömungskanal mit dem Einlass der Heizwasserpumpe verbunden ist;
ein dritter Anschluss des ersten Fünf-Wege-Ventils durch den Strömungskanal mit dem ersten Anschluss verbunden ist, und der erste Anschluss mit dem Auslass des Radiators verbunden ist;
ein vierter Anschluss des ersten Fünf-Wege-Ventils mit einem fünften Anschluss des zweiten Fünf-Wege-Ventils über den Strömungskanal verbunden ist;
ein fünfter Anschluss des ersten Fünf-Wege-Ventils durch den Strömungskanal mit dem zweiten Kühlflüssigkeitsausgang des Wasser-Wasser-Wärmetauschers verbunden ist;
ein erster Anschluss des zweiten Fünf-Wege-Ventils durch den Strömungskanal mit dem zweiten Anschluss und dem dritten Anschluss verbunden ist, der zweite Anschluss mit dem Einlass des Radiators verbunden ist, der dritte Anschluss mit dem Auslass der elektrischen Antriebskomponente des Fahrzeugs verbunden ist, und der zweite Anschluss mit dem dritten Anschluss verbunden ist;
ein zweiter Anschluss des zweiten Fünf-Wege-Ventils mit dem Einlass der Motorwasserpumpe durch den Strömungskanal verbunden ist, der Auslass der Motorwasserpumpe mit dem vierten Anschluss durch den Strömungskanal verbunden ist und der vierte Anschluss mit dem Einlass der elektrischen Antriebskomponente verbunden ist;
ein dritter Anschluss des zweiten Fünf-Wege-Ventils mit dem ersten Kühlflüssigkeitsausgang des Wasser-Wasser-Wärmetauschers durch den Strömungskanal verbunden ist;
ein vierter Anschluss des zweiten Fünf-Wege-Ventils durch den Strömungskanal mit dem Einlass der Batteriewasserpumpe verbunden ist, die Batteriewasserpumpe durch den Strömungskanal mit dem fünften Anschluss verbunden ist, und der fünfte Anschluss mit dem Einlass der Traktionsbatterie verbunden ist;
der fünfte Anschluss des zweiten Fünf-Wege-Ventils mit dem vierten Anschluss des ersten Fünf-Wege-Ventils verbunden ist, der zweite Kühlflüssigkeitseingang des Wasser-Wasser-Wärmetauschers mit dem sechsten Anschluss und dem siebten Anschluss verbunden ist, der sechste Anschluss mit dem Einlass des Heizerkerns verbunden ist, der siebte Anschluss mit dem Auslass des Flüssigkeitsheizers verbunden ist und der sechste Anschluss mit dem siebten Anschluss verbunden ist; und
wenn sich die Ventilbaugruppe in dem ersten voreingestellten Zustand befindet, der erste Anschluss und der zweite Anschluss des ersten Fünf-Wege-Ventils miteinander verbunden sind, der erste Anschluss und der vierte Anschluss des zweiten Fünf-Wege-Ventils miteinander verbunden sind und der zweite Anschluss und der dritte Anschluss des zweiten Fünf-Wege-Ventils miteinander verbunden sind.

7. Wärmemanagementsystem nach Anspruch 1, wobei:
ein erster Anschluss bis zu einem achten Anschluss auf der Strömungskanalplatte ausgebildet sind und die Ventilbaugruppe ein erstes Vier-Wege-Ventil (138), ein zweites Vier-Wege-Ventil (139), ein erstes Drei-Wege-Ventil (140) und ein zweites Drei-Wege-Ventil (141) umfasst;
ein erster Anschluss des ersten Vier-Wege-Ventils mit einem dritten Anschluss des ersten Drei-Wege-Ventils verbunden ist, ein erster Anschluss des ersten Drei-Wege-Ventils durch den Strömungskanal mit dem achten Anschluss verbunden ist und ein zweiter Anschluss des ersten Drei-Wege-Ventils durch den Strömungskanal mit dem zweiten Kühlflüssigkeitsausgang des Wasser-Wasser-Wärmetauschers verbunden ist;
ein zweiter Anschluss des ersten Vier-Wege-Ventils durch den Strömungskanal mit dem Einlass der Heizwasserpumpe verbunden ist;
ein dritter Anschluss des ersten Vier-Wege-Ventils durch den Strömungskanal mit dem ersten Anschluss verbunden ist, und der erste Anschluss konfiguriert ist, um mit dem Auslass des Radiators verbunden zu werden;
ein vierter Anschluss des ersten Vier-Wege-Ventils mit einem zweiten Anschluss des zweiten Drei-Wege-Ventils durch den Strömungskanal verbunden ist;
ein erster Anschluss des zweiten Drei-Wege-Ventils durch den Strömungskanal mit dem zweiten Anschluss und dem dritten Anschluss verbunden ist, der zweite Anschluss konfiguriert ist, um mit dem Einlass des Radiators verbunden zu werden, der dritte Anschluss mit dem Auslass der elektrischen Antriebskomponente verbunden ist, und der zweite Anschluss mit dem dritten Anschluss verbunden ist;
ein dritter Anschluss des zweiten Drei-Wege-Ventils durch den Strömungskanal mit einem ersten Anschluss des zweiten Vier-Wege-Ventils verbunden ist;
ein zweiter Anschluss des zweiten Vier-Wege-Ventils mit dem Einlass der Motorwasserpumpe durch den Strömungskanal verbunden ist, der Auslass der Motorwasserpumpe mit dem vierten Anschluss durch den Strömungskanal verbunden ist und der vierte Anschluss konfiguriert ist, um mit dem Einlass der elektrischen Antriebskomponente verbunden zu werden;
ein dritter Anschluss des zweiten Vier-Wege-Ventils mit dem ersten Kühlflüssigkeitsausgang des Wasser-Wasser-Wärmetauschers durch den Strömungskanal verbunden ist;
ein vierter Anschluss des zweiten Vier-Wege-Ventils durch den Strömungskanal mit dem Einlass der Batteriewasserpumpe verbunden ist, die Batteriewasserpumpe durch den Strömungskanal mit dem fünften Anschluss verbunden ist, und der fünfte Anschluss mit dem Einlass der Traktionsbatterie verbunden ist;
der zweite Kühlflüssigkeitseingang des Wasser-Wasser-Wärmetauschers mit dem sechsten Anschluss und dem siebten Anschluss verbunden ist, der sechste Anschluss konfiguriert ist, um mit dem Einlass des Heizerkerns verbunden zu werden, der siebte Anschluss mit dem Auslass des Flüssigkeitsheizers verbunden ist und der sechste Anschluss mit dem siebten Anschluss verbunden ist; und
wenn sich die Ventilbaugruppe in dem ersten voreingestellten Zustand befindet, der erste Anschluss und der zweite Anschluss des ersten Vier-Wege-Ventils miteinander verbunden sind, der erste Anschluss und der dritte Anschluss des ersten Drei-Wege-Ventils miteinander verbunden sind, der erste Anschluss und der vierte Anschluss des zweiten Vier-Wege-Ventils miteinander verbunden sind, der zweite Anschluss und der dritte Anschluss des zweiten Vier-Wege-Ventils miteinander verbunden sind und der erste Anschluss und der dritte Anschluss des zweiten Drei-Wege-Ventils miteinander verbunden sind.

8. Wärmemanagementsystem nach Anspruch 1, wobei:
ein erster Anschluss bis zu einem achten Anschluss auf der Strömungskanalplatte ausgebildet sind, und die Ventilbaugruppe ein Acht-Wege-Ventil (142) umfasst;
ein erster Anschluss des Acht-Wege-Ventils mit dem achten Anschluss durch den Strömungskanal verbunden ist, und der achte Anschluss konfiguriert ist, um mit dem Auslass des Heizerkerns verbunden zu werden;
ein zweiter Anschluss des Acht-Wege-Ventils durch den Strömungskanal mit dem Einlass der Heizwasserpumpe verbunden ist;
ein dritter Anschluss des Acht-Wege-Ventils durch den Strömungskanal mit dem ersten Anschluss verbunden ist, und der erste Anschluss konfiguriert ist, um mit dem Auslass des Radiators verbunden zu werden;
ein vierter Anschluss des Acht-Wege-Ventils durch den Strömungskanal mit dem zweiten Anschluss und dem dritten Anschluss verbunden ist, der zweite Anschluss konfiguriert ist, mit dem Einlass des Radiators verbunden zu werden, der dritte Anschluss konfiguriert ist, um mit dem Auslass der elektrischen Antriebskomponente verbunden zu werden, und der zweite Anschluss mit dem dritten Anschluss verbunden ist;
ein fünfter Anschluss des Acht-Wege-Ventils mit dem Einlass der Motorwasserpumpe durch den Strömungskanal verbunden ist, der Auslass der Motorwasserpumpe mit dem vierten Anschluss durch den Strömungskanal verbunden ist und der vierte Anschluss konfiguriert ist, um mit dem Einlass der elektrischen Antriebskomponente verbunden zu werden;
ein sechster Anschluss des Acht-Wege-Ventils durch den Strömungskanal mit dem Einlass der Batteriewasserpumpe verbunden ist, die Batteriewasserpumpe durch den Strömungskanal mit dem fünften Anschluss verbunden ist, und der fünfte Anschluss mit dem Einlass der Traktionsbatterie verbunden ist;
ein siebter Anschluss des Acht-Wege-Ventils mit dem ersten Kühlflüssigkeitsausgang des Wasser-Wasser-Wärmetauschers durch den Strömungskanal verbunden ist;
ein achter Anschluss des Acht-Wege-Ventils mit dem zweiten Kühlflüssigkeitsausgang des Wasser-Wasser-Wärmetauschers durch den Strömungskanal verbunden ist, der zweite Kühlflüssigkeitseingang des Wasser-Wasser-Wärmetauschers mit dem sechsten Anschluss und dem siebten Anschluss verbunden ist, der sechste Anschluss mit dem Einlass des Heizerkerns verbunden ist, der siebte Anschluss mit dem Auslass des Flüssigkeitsheizers verbunden ist und der sechste Anschluss mit dem siebten Anschluss verbunden ist; und
wenn sich die Ventilbaugruppe in dem ersten voreingestellten Zustand befindet, der erste Anschluss und der zweite Anschluss des Acht-Wege-Ventils miteinander verbunden sind, der vierte Anschluss und der sechste Anschluss des Acht-Wege-Ventils miteinander verbunden sind und der fünfte Anschluss und der siebte Anschluss des Acht-Wege-Ventils miteinander verbunden sind.

9. Wärmemanagementsystem nach einem der Ansprüche 6 bis 8, wobei das Wärmemanagementsystem einen zweiten Betriebsmodus hat, wobei:
in der zweiten Betriebsmodus mindestens eine von beiden von der Batteriewasserpumpe und der Motorwasserpumpe gestartet wird und die Ventilbaugruppe sich in einem zweiten voreingestellten Zustand befindet;
in dem zweiten voreingestellten Zustand die Ventilbaugruppe mit dem Einlass der Batteriewasserpumpe und dem Auslass des Radiators verbunden ist und mit dem Auslass der Traktionsbatterie und dem Einlass der elektrischen Antriebskomponente in Verbindung steht, die Batteriewasserpumpe und/oder die Motorwasserpumpe die Kühlflüssigkeit zur Traktionsbatterie und dann durch die Ventilbaugruppe in die elektrische Antriebskomponente befördert, die Kühlflüssigkeit durch die elektrische Antriebskomponente fließt und zur Kühlung in den Radiator eintritt und dann aus dem Radiator herausfließt und ferner durch die Ventilbaugruppe zu dem Einlass/ den Einlässen der Batteriewasserpumpe und/oder der Motorwasserpumpe zurückfließt.

10. Steuerungsverfahren für das Wärmemanagementsystem nach Anspruch 1, umfassend:
Erfassen (S10) einer Temperatur der Traktionsbatterie und/oder der elektrischen Antriebskomponente, während der Fahrgastraum beheizt wird; und
basierend auf der Temperatur der Traktionsbatterie und/oder der elektrischen Antriebskomponente, Steuern (S20) der Batteriewasserpumpe und/oder der Motorwasserpumpe, um sie zu starten, und Steuern der Ventilbaugruppe, um sie in einen ersten voreingestellten Zustand zu bringen, um zu bewirken, dass das Wärmemanagementsystem in einen ersten Betriebsmodus eintritt, um den Fahrgastraum unter Verwendung der Abwärme der Traktionsbatterie und der elektrischen Antriebskomponente zu heizen.

11. Steuerungsverfahren für ein Wärmemanagementsystem nach Anspruch 10, wobei:
ein erster Anschluss bis zu einem achten Anschluss auf der Strömungskanalplatte ausgebildet sind, und die Ventilbaugruppe ein erstes Fünf-Wege-Ventil und ein zweites Fünf-Wege-Ventil umfasst;
ein erster Anschluss des ersten Fünf-Wege-Ventils mit dem achten Anschluss durch den Strömungskanal verbunden ist, und der achte Anschluss mit dem Auslass des Heizerkerns verbunden ist;
ein zweiter Anschluss des ersten Fünf-Wege-Ventils durch den Strömungskanal mit dem Einlass der Heizwasserpumpe verbunden ist;
ein dritter Anschluss des ersten Fünf-Wege-Ventils durch den Strömungskanal mit dem ersten Anschluss verbunden ist, und der erste Anschluss mit dem Auslass des Radiators verbunden ist;
ein vierter Anschluss des ersten Fünf-Wege-Ventils mit einem fünften Anschluss des zweiten Fünf-Wege-Ventils durch den Strömungskanal verbunden ist;
ein fünfter Anschluss des ersten Fünf-Wege-Ventils durch den Strömungskanal mit dem zweiten Kühlflüssigkeitsausgang des Wasser-Wasser-Wärmetauschers verbunden ist;
ein erster Anschluss des zweiten Fünf-Wege-Ventils durch den Strömungskanal mit dem zweiten Anschluss und dem dritten Anschluss verbunden ist, der zweite Anschluss mit dem Einlass des Radiators verbunden ist, der dritte Anschluss mit dem Auslass der elektrischen Antriebskomponente des Fahrzeugs verbunden ist, und der zweite Anschluss mit dem dritten Anschluss verbunden ist;
ein zweiter Anschluss des zweiten Fünf-Wege-Ventils mit dem Einlass der Motorwasserpumpe durch den Strömungskanal verbunden ist, der Auslass der Motorwasserpumpe mit dem vierten Anschluss durch den Strömungskanal verbunden ist und der vierte Anschluss mit dem Einlass der elektrischen Antriebskomponente verbunden ist;
ein dritter Anschluss des zweiten Fünf-Wege-Ventils mit dem ersten Kühlflüssigkeitsausgang des Wasser-Wasser-Wärmetauschers durch den Strömungskanal verbunden ist;
ein vierter Anschluss des zweiten Fünf-Wege-Ventils durch den Strömungskanal mit dem Einlass der Batteriewasserpumpe verbunden ist, die Batteriewasserpumpe durch den Strömungskanal mit dem fünften Anschluss verbunden ist, und der fünfte Anschluss mit dem Einlass der Traktionsbatterie verbunden ist;
der fünfte Anschluss des zweiten Fünf-Wege-Ventils mit dem vierten Anschluss des ersten Fünf-Wege-Ventils verbunden ist, der zweite Kühlflüssigkeitseingang des Wasser-Wasser-Wärmetauschers mit dem sechsten Anschluss und dem siebten Anschluss verbunden ist, der sechste Anschluss mit dem Einlass des Heizerkerns verbunden ist, der siebte Anschluss mit dem Auslass des Flüssigkeitsheizers verbunden ist und der sechste Anschluss mit dem siebten Anschluss verbunden ist; und
das Steuern der Ventilbaugruppe, so dass sie sich in einem ersten voreingestellten Zustand befindet, um zu bewirken, dass das Wärmemanagementsystem in einen ersten Betriebsmodus eintritt, umfasst:
Steuern des ersten Anschlusses und des zweiten Anschlusses des ersten Fünf-Wege-Ventils, um sie miteinander zu verbinden, Steuern des ersten Anschlusses und des vierten Anschlusses des zweiten Fünf-Wege-Ventils, um sie miteinander zu verbinden, und Steuern des zweiten Anschlusses und des dritten Anschlusses des zweiten Fünf-Wege-Ventils, um sie miteinander zu verbinden, um zu bewirken, dass das Wärmemanagementsystem in den ersten Betriebsmodus eintritt.

12. Steuerungsverfahren für ein Wärmemanagementsystem nach Anspruch 10, wobei:
ein erster Anschluss bis zu einem achten Anschluss auf der Strömungskanalplatte ausgebildet sind und die Ventilbaugruppe ein erstes Vier-Wege-Ventil, ein zweites Vier-Wege-Ventil, ein erstes Drei-Wege-Ventil und ein zweites Drei-Wege-Ventil umfasst;
ein erster Anschluss des ersten Vier-Wege-Ventils mit einem dritten Anschluss des ersten Drei-Wege-Ventils verbunden ist, ein erster Anschluss des ersten Drei-Wege-Ventils durch den Strömungskanal mit dem achten Anschluss verbunden ist und ein zweiter Anschluss des ersten Drei-Wege-Ventils durch den Strömungskanal mit dem zweiten Kühlflüssigkeitsausgang des Wasser-Wasser-Wärmetauschers verbunden ist;
ein zweiter Anschluss des ersten Vier-Wege-Ventils durch den Strömungskanal mit dem Einlass der Heizwasserpumpe verbunden ist;
ein dritter Anschluss des ersten Vier-Wege-Ventils durch den Strömungskanal mit dem ersten Anschluss verbunden ist, und der erste Anschluss konfiguriert ist, um mit dem Auslass des Radiators verbunden zu werden;
ein vierter Anschluss des ersten Vier-Wege-Ventils mit einem zweiten Anschluss des zweiten Drei-Wege-Ventils durch den Strömungskanal verbunden ist;
ein erster Anschluss des zweiten Drei-Wege-Ventils durch den Strömungskanal mit dem zweiten Anschluss und dem dritten Anschluss verbunden ist, der zweite Anschluss konfiguriert ist, um mit dem Einlass des Radiators verbunden zu werden, der dritte Anschluss mit dem Auslass der elektrischen Antriebskomponente verbunden ist, und der zweite Anschluss mit dem dritten Anschluss verbunden ist;
ein dritter Anschluss des zweiten Drei-Wege-Ventils mit einem ersten Anschluss des zweiten Vier-Wege-Ventils verbunden ist;
ein zweiter Anschluss des zweiten Vier-Wege-Ventils mit dem Einlass der Motorwasserpumpe durch den Strömungskanal verbunden ist, der Auslass der Motorwasserpumpe mit dem vierten Anschluss durch den Strömungskanal verbunden ist und der vierte Anschluss konfiguriert ist, um mit dem Einlass der elektrischen Antriebskomponente verbunden zu werden;
ein dritter Anschluss des zweiten Vier-Wege-Ventils mit dem ersten Kühlflüssigkeitsausgang des Wasser-Wasser-Wärmetauschers durch den Strömungskanal verbunden ist;
ein vierter Anschluss des zweiten Vier-Wege-Ventils durch den Strömungskanal mit dem Einlass der Batteriewasserpumpe verbunden ist, die Batteriewasserpumpe durch den Strömungskanal mit dem fünften Anschluss verbunden ist, und der fünfte Anschluss mit dem Einlass der Traktionsbatterie verbunden ist;
der zweite Kühlflüssigkeitseingang des Wasser-Wasser-Wärmetauschers mit dem sechsten Anschluss und dem siebten Anschluss verbunden ist, der sechste Anschluss konfiguriert ist, um mit dem Einlass des Heizerkerns verbunden zu werden, der siebte Anschluss mit dem Auslass des Flüssigkeitsheizers verbunden ist und der sechste Anschluss mit dem siebten Anschluss verbunden ist; und
das Steuern der Ventilbaugruppe, so dass sie sich in einem ersten voreingestellten Zustand befindet, um zu bewirken, dass das Wärmemanagementsystem in einen ersten Betriebsmodus eintritt, umfasst:
Steuern des ersten Anschlusses und des zweiten Anschlusses des ersten Vier-Wege-Ventils, so dass sie miteinander verbunden werden, Steuern des ersten Anschlusses und des dritten Anschlusses des ersten Drei-Wege-Ventils, so dass sie miteinander verbunden werden, Steuern des ersten Anschlusses und des vierten Anschlusses des zweiten Vier-Wege-Ventils, so dass sie miteinander verbunden werden, Steuern des zweiten Anschlusses und des dritten Anschlusses des zweiten Vier-Wege-Ventils, so dass sie miteinander verbunden werden und Steuern des ersten Anschlusses and des dritten Anschlusses des zweiten Drei-Wege-Ventils, so dass sie miteinander verbunden werden, um zu bewirken, dass das Wärmemanagementsystem in den ersten Betriebsmodus eintritt.

13. Steuerungsverfahren für ein Wärmemanagementsystem nach Anspruch 10, wobei:
ein erster Anschluss bis zu einem achten Anschluss auf der Strömungskanalplatte ausgebildet sind, und die Ventilbaugruppe ein Acht-Wege-Ventil umfasst;
ein erster Anschluss des Acht-Wege-Ventils mit dem achten Anschluss durch den Strömungskanal verbunden ist, und der achte Anschluss konfiguriert ist, um mit dem Auslass des Heizerkerns verbunden zu werden;
ein zweiter Anschluss des Acht-Wege-Ventils durch den Strömungskanal mit dem Einlass der Heizwasserpumpe verbunden ist;
ein dritter Anschluss des Acht-Wege-Ventils durch den Strömungskanal mit dem ersten Anschluss verbunden ist, und der erste Anschluss konfiguriert ist, um mit dem Auslass des Radiators verbunden zu werden;
ein vierter Anschluss des Acht-Wege-Ventils durch den Strömungskanal mit dem zweiten Anschluss und dem dritten Anschluss verbunden ist, der zweite Anschluss konfiguriert ist, mit dem Einlass des Radiators verbunden zu werden, der dritte Anschluss konfiguriert ist, um mit dem Auslass der elektrischen Antriebskomponente verbunden zu werden, und der zweite Anschluss mit dem dritten Anschluss verbunden ist;
ein fünfter Anschluss des Acht-Wege-Ventils mit dem Einlass der Motorwasserpumpe durch den Strömungskanal verbunden ist, der Auslass der Motorwasserpumpe mit dem vierten Anschluss durch den Strömungskanal verbunden ist und der vierte Anschluss konfiguriert ist, um mit dem Einlass der elektrischen Antriebskomponente verbunden zu werden;
ein sechster Anschluss des Acht-Wege-Ventils durch den Strömungskanal mit dem Einlass der Batteriewasserpumpe verbunden ist, die Batteriewasserpumpe durch den Strömungskanal mit dem fünften Anschluss verbunden ist, und der fünfte Anschluss mit dem Einlass der Traktionsbatterie verbunden ist;
ein siebter Anschluss des Acht-Wege-Ventils mit dem ersten Kühlflüssigkeitsausgang des Wasser-Wasser-Wärmetauschers durch den Strömungskanal verbunden ist;
ein achter Anschluss des Acht-Wege-Ventils mit dem zweiten Kühlflüssigkeitsausgang des Wasser-Wasser-Wärmetauschers durch den Strömungskanal verbunden ist, der zweite Kühlflüssigkeitseingang des Wasser-Wasser-Wärmetauschers mit dem sechsten Anschluss und dem siebten Anschluss verbunden ist, der sechste Anschluss mit dem Einlass des Heizerkerns verbunden ist, der siebte Anschluss mit dem Auslass des Flüssigkeitsheizers verbunden ist und der sechste Anschluss mit dem siebten Anschluss verbunden ist; und
das Steuern der Ventilbaugruppe, so dass sie sich in einem ersten voreingestellten Zustand befindet, um zu bewirken, dass das Wärmemanagementsystem in einen ersten Betriebsmodus eintritt, umfasst:
Steuern des ersten Anschlusses und des zweiten Anschlusses des Acht-Wege-Ventils, so dass sie miteinander verbunden werden, Steuern des vierten Anschlusses und des sechsten Anschlusses des Acht-Wege-Ventils, so dass sie miteinander verbunden werden, und Steuern des fünften Anschlusses und des siebten Anschlusses des Acht-Wege-Ventils, so dass sie miteinander verbunden werden, um zu bewirken, dass das Wärmemanagementsystem in den ersten Betriebsmodus eintritt.

14. Fahrzeug (300), umfassend:
eine Fahrzeugkarosserie (301); und
das Wärmemanagementsystem (200) nach einem der Ansprüche 1 bis 9, das an der Fahrzeugkarosserie (301) installiert ist.

## Revendications

1. Système de gestion thermique (200) pour un véhicule (300), comprenant un compresseur (201), un séparateur gaz-liquide (209), un noyau de chauffage (207), une batterie de traction (205), un composant d'entraînement électrique (204) et une unité de gestion thermique intégrée (100), dans lequel :
l'unité de gestion thermique intégrée (100) est connectée au compresseur (201), au séparateur gaz-liquide (209), au noyau de chauffage (207), à la batterie de traction (205) et au composant d'entraînement électrique (204), et l'unité de gestion thermique intégrée (100) comprend :
une plaque de canaux d'écoulement (101) dans laquelle est formée une pluralité de canaux d'écoulement ;
un ensemble de pompe (106) et un ensemble de vanne (110) tous deux intégrés sur la plaque de canaux d'écoulement (101), dans lequel l'ensemble de pompe comprend une pompe à eau de batterie (108), une pompe à eau de moteur (109) et une pompe à eau de chauffage (107), une admission de la pompe à eau de batterie (108) est connectée à l'ensemble de vanne (110) par le biais du canal d'écoulement, une sortie de la pompe à eau de batterie (108) est connectée à une admission de la batterie de traction (205) par le biais du canal d'écoulement, une sortie de la batterie de traction (205) est connectée à l'ensemble de vanne (110), une admission de la pompe à eau de moteur (109) est connectée à l'ensemble de vanne (110) par le biais du canal d'écoulement, une sortie de la pompe à eau de moteur (109) est connectée à une admission du composant d'entraînement électrique (204) par le biais du canal d'écoulement, et une admission de la pompe à eau de chauffage (107) est connectée à l'ensemble de vanne (110) par le biais du canal d'écoulement ; et
un condenseur de refroidissement par eau (111) et un refroidisseur de batterie (113) tous deux intégrés sur la plaque de canaux d'écoulement (101), dans lequel une entrée de réfrigérant du condenseur de refroidissement par eau (111) est connectée au compresseur (201), une sortie de réfrigérant du condenseur de refroidissement par eau (111) est connectée à une entrée de réfrigérant du refroidisseur de batterie (113), une sortie de la pompe à eau de chauffage (107) est connectée à une entrée de liquide de refroidissement du condenseur de refroidissement par eau (111) par le biais du canal d'écoulement, une sortie de liquide de refroidissement du condenseur de refroidissement par eau (111) est connectée à une admission du noyau de chauffage (207), et une sortie du noyau de chauffage (207) est connectée à l'ensemble de vanne (110), et dans lequel une sortie de réfrigérant (1134) du refroidisseur de batterie (113) est connectée à une admission du séparateur gaz-liquide (209), une entrée de liquide de refroidissement (1131) du refroidisseur de batterie (113) est connectée à la sortie de la batterie de traction (205), une sortie de liquide de refroidissement (1132) du refroidisseur de batterie (113) est connectée à l'ensemble de vanne (110), et l'ensemble de vanne (110) est configuré pour commander un sens d'écoulement d'un liquide de refroidissement dans l'unité de gestion thermique intégrée (100) ;
dans lequel le système de gestion thermique (200) a un premier mode de fonctionnement, dans lequel dans le premier mode de fonctionnement, le compresseur (201) et la pompe à eau de chauffage (107) sont démarrés, la pompe à eau de batterie (108) et/ou la pompe à eau de moteur (109) sont démarrées, et l'ensemble de vanne (110) est dans un premier état préréglé, dans lequel dans le premier état préréglé, l'ensemble de vanne (110) connecte la sortie de réfrigérant du refroidisseur de batterie (113) à une admission de la pompe à eau de moteur (109), connecte une admission de la pompe à eau de batterie (108) à une sortie du composant d'entraînement électrique (204), et connecte en outre une admission de la pompe à eau de chauffage (107) à une sortie du noyau de chauffage (207) ;
dans lequel la pompe à eau de batterie (108) et/ou la pompe à eau de moteur (109) sont configurées pour convoyer un liquide de refroidissement chauffé par le composant d'entraînement électrique (204) et la batterie de traction (205) jusqu'au refroidisseur de batterie (113), la pompe à eau de chauffage (107) est configurée pour convoyer le liquide de refroidissement jusqu'aux condenseur de refroidissement par eau (111) et noyau de chauffage (207), un réfrigérant est refroidi lorsqu'il est entraîné par le compresseur (201) pour s'écouler à travers le condenseur de refroidissement par eau (111) de manière à chauffer le liquide de refroidissement circulant dans le condenseur de refroidissement par eau (111), de telle sorte que le noyau de chauffage (207) chauffe efficacement un habitacle du véhicule (300), le réfrigérant refroidi s'écoule à travers le refroidisseur de batterie (113) de manière à absorber la chaleur du liquide de refroidissement s'écoulant à travers le refroidisseur de batterie (113) et s'évaporer, et le réfrigérant évaporé s'écoule dans le séparateur gaz-liquide (209) ;
dans lequel le système de gestion thermique (200) comprend en outre un radiateur (203), un évaporateur (206) et un réchauffeur de liquide (208) ;
dans lequel l'unité de gestion thermique intégrée (100) comprend en outre un échangeur thermique eau-eau (112) intégré sur la plaque de canaux d'écoulement (101) ;
dans lequel le composant d'entraînement électrique (204) est connecté en outre à une admission du radiateur (203), et une sortie du radiateur (203) est connectée à l'ensemble de vanne ; **caractérisé en ce que** :
le refroidisseur de batterie (113) et l'échangeur thermique eau-eau (112) sont formés d'une seule pièce, disposés et situés directement l'un à côté de l'autre sur un côté de la plaque de canaux d'écoulement (101), dans lequel une sortie de liquide de refroidissement (1132) du refroidisseur de batterie (113) correspond à une première entrée de liquide de refroidissement (1121) de l'échangeur thermique eau-eau (112) de telle sorte que le refroidisseur de batterie (113) et l'échangeur thermique eau-eau (112) utilisent une canalisation d'écoulement de liquide de refroidissement commune de manière à améliorer le degré d'intégration en évitant une connexion par le biais d'une canalisation de connexion externe, et dans lequel la sortie de réfrigérant (1134) du refroidisseur de batterie (113) est connectée en outre à une sortie de l'évaporateur (206) ; et
dans lequel la sortie de liquide de refroidissement (1132) du refroidisseur de batterie (113) et la première entrée de liquide de refroidissement (1121) de l'échangeur thermique eau-eau (112) sont connectées en outre à une première sortie de liquide de refroidissement (1122) de l'échangeur thermique eau-eau (112), la première sortie de liquide de refroidissement (1122) de l'échangeur thermique eau-eau (112) est connectée à l'ensemble de vanne (110) par le biais du canal d'écoulement, une seconde entrée de liquide de refroidissement (1123) de l'échangeur thermique eau-eau (112) est connectée à une sortie du réchauffeur de liquide (208), et une seconde sortie de liquide de refroidissement (1124) de l'échangeur thermique eau-eau (112) est connectée à l'ensemble de vanne (110) par le biais du canal d'écoulement.

2. Système de gestion thermique selon la revendication 1, comprenant en outre un échangeur thermique extérieur (202), dans lequel :
la sortie de réfrigérant du condenseur de refroidissement par eau (111) est connectée en outre à une admission de l'échangeur thermique extérieur (202), et l'entrée de réfrigérant du refroidisseur de batterie (113) est connectée en outre à une sortie de l'échangeur thermique extérieur (202) ; et
dans le premier mode de fonctionnement, le réfrigérant est refroidi lorsqu'il est entraîné par le compresseur (201) pour s'écouler à travers le condenseur de refroidissement par eau (111), de manière à chauffer le liquide de refroidissement circulant à travers le condenseur de refroidissement par eau, le réfrigérant refroidi s'écoule à l'intérieur de l'échangeur thermique extérieur (202) pour s'évaporer une première fois, puis entre dans le refroidisseur de batterie (113) pour absorber la chaleur du liquide de refroidissement s'écoulant à travers le refroidisseur de batterie pour s'évaporer une seconde fois et après la seconde évaporation, le réfrigérant s'écoule dans le séparateur gaz-liquide (209).

3. Système de gestion thermique selon la revendication 2, dans lequel :
l'unité de gestion thermique intégrée (100) comprend en outre une base de montage (115) et un premier étrangleur (119), la base de montage est montée intégralement sur le condenseur de refroidissement par eau (111), une première interface de réfrigérant (116) est formée sur la base de montage, la première interface de réfrigérant est connectée à la sortie de réfrigérant du condenseur de refroidissement par eau, le premier étrangleur est monté sur la base de montage et connecté en série à la première interface de réfrigérant, et la première interface de réfrigérant est connectée à l'admission de l'échangeur thermique extérieur ; et
l'unité de gestion thermique intégrée comprend en outre un second étrangleur (120) et un capteur de température (124), tous deux intégrés sur le refroidisseur de batterie (113), le second étrangleur est situé au niveau de l'entrée de réfrigérant du refroidisseur de batterie, le capteur de température est situé au niveau de la sortie de réfrigérant du refroidisseur de batterie, et dans le premier mode de fonctionnement, le premier étrangleur et le second étrangleur sont dans un état d'étranglement.

4. Système de gestion thermique selon la revendication 3, dans lequel :
l'unité de gestion thermique intégrée (100) comprend en outre une vanne d'arrêt (121), la vanne d'arrêt est montée sur la base de montage (115), une deuxième interface de réfrigérant (117) est formée en outre sur la base de montage, la seconde interface de réfrigérant est connectée à la sortie de réfrigérant du condenseur de refroidissement par eau (111) et est connectée en parallèle à la première interface de réfrigérant (116), la vanne d'arrêt est connectée en série à la deuxième interface de réfrigérant, la vanne d'arrêt est configurée pour connecter ou déconnecter la deuxième interface de réfrigérant et la sortie de réfrigérant du condenseur de refroidissement par eau, la deuxième interface de réfrigérant est connectée à une admission de l'évaporateur (206), une sortie de l'évaporateur est connectée au séparateur gaz-liquide, et dans le premier mode de fonctionnement, la vanne d'arrêt est dans un état fermé.

5. Système de gestion thermique selon la revendication 4, dans lequel une troisième interface de réfrigérant (118) est formée en outre sur la base de montage (115) et connectée à la deuxième interface de réfrigérant (117), un clapet anti-retour (122) est monté au niveau de la troisième interface de réfrigérant, une vanne d'arrêt externe (211) est disposée entre la sortie de l'échangeur thermique extérieur (202) et le séparateur gaz-liquide (209), la troisième interface de réfrigérant est connectée entre la sortie de l'échangeur thermique extérieur et la vanne d'arrêt externe, et dans le premier mode de fonctionnement, la vanne d'arrêt externe est dans un état fermé.

6. Système de gestion thermique selon la revendication 1, dans lequel :
un premier orifice à un huitième orifice sont formés sur la plaque de canaux d'écoulement, et l'ensemble de vanne comprend une première vanne à cinq voies (136) et une seconde vanne à cinq voies (137) ;
un premier orifice de la première vanne à cinq voies est connecté au huitième orifice par le biais du canal d'écoulement, et le huitième orifice est connecté à la sortie du noyau de chauffage ;
un deuxième orifice de la première vanne à cinq voies est connecté à l'admission de la pompe à eau de chauffage par le biais du canal d'écoulement ;
un troisième orifice de la première vanne à cinq voies est connecté au premier orifice par le biais du canal d'écoulement, et le premier orifice est connecté à la sortie du radiateur ;
un quatrième orifice de la première vanne à cinq voies est connecté à un cinquième orifice de la seconde vanne à cinq voies par le biais du canal d'écoulement ;
un cinquième orifice de la première vanne à cinq voies est connecté à la seconde sortie de liquide de refroidissement de l'échangeur thermique eau-eau par le biais du canal d'écoulement ;
un premier orifice de la seconde vanne à cinq voies est connecté au deuxième orifice et au troisième orifice par le biais du canal d'écoulement, le deuxième orifice est connecté à l'admission du radiateur, le troisième orifice est connecté à la sortie du composant d'entraînement électrique du véhicule et le deuxième orifice est connecté au troisième orifice ;
un deuxième orifice de la seconde vanne à cinq voies est connecté à l'admission de la pompe à eau de moteur par le biais du canal d'écoulement, la sortie de la pompe à eau de moteur est connectée au quatrième orifice par le biais du canal d'écoulement et le quatrième orifice est connecté à l'admission du composant d'entraînement électrique ;
un troisième orifice de la seconde vanne à cinq voies est connecté à la première sortie de liquide de refroidissement de l'échangeur thermique eau-eau par le biais du canal d'écoulement ;
un quatrième orifice de la seconde vanne à cinq voies est connecté à l'admission de la pompe à eau de batterie par le biais du canal d'écoulement, la pompe à eau de batterie est connectée au cinquième orifice par le biais du canal d'écoulement et le cinquième orifice est connecté à l'admission de la batterie de traction ;
le cinquième orifice de la seconde vanne à cinq voies est connecté au quatrième orifice de la première vanne à cinq voies, la seconde entrée de liquide de refroidissement de l'échangeur thermique eau-eau est connectée au sixième orifice et au septième orifice, le sixième orifice est connecté à l'admission du noyau de chauffage, le septième orifice est connecté à la sortie du réchauffeur de liquide, et le sixième orifice est connecté au septième orifice ; et
lorsque l'ensemble de vanne est dans le premier état préréglé, le premier orifice et le deuxième orifice de la première vanne à cinq voies sont connectés l'un à l'autre, le premier orifice et le quatrième orifice de la seconde vanne à cinq voies sont connectés l'un à l'autre, et le deuxième orifice et le troisième orifice de la seconde vanne à cinq voies sont connectés l'un à l'autre.

7. Système de gestion thermique selon la revendication 1, dans lequel :
un premier orifice à un huitième orifice sont formés sur la plaque de canaux d'écoulement, et l'ensemble de vanne comprend une première vanne à quatre voies (138), une seconde vanne à quatre voies (139), une première vanne à trois voies (140) et une seconde vanne à trois voies (141) ;
un premier orifice de la première vanne à quatre voies est connecté à un troisième orifice de la première vanne à trois voies, un premier orifice de la première vanne à trois voies est connecté au huitième orifice par le biais du canal d'écoulement, et un deuxième orifice de la première vanne à trois voies est connecté à la seconde sortie de liquide de refroidissement de l'échangeur thermique eau-eau par le biais du canal d'écoulement ;
un deuxième orifice de la première vanne à quatre voies est connecté à l'admission de la pompe à eau de chauffage par le biais du canal d'écoulement ;
un troisième orifice de la première vanne à quatre voies est connecté au premier orifice par le biais du canal d'écoulement, et le premier orifice est configuré pour être connecté à la sortie du radiateur ;
un quatrième orifice de la première vanne à quatre voies est connecté à un deuxième orifice de la seconde vanne à trois voies par le biais du canal d'écoulement ;
un premier orifice de la seconde vanne à trois voies est connecté au deuxième orifice et au troisième orifice par le biais du canal d'écoulement, le deuxième orifice est configuré pour être connecté à l'admission du radiateur, le troisième orifice est connecté à la sortie du composant d'entraînement électrique et le deuxième orifice est connecté au troisième orifice ;
un troisième orifice de la seconde vanne à trois voies est connecté à un premier orifice de la seconde vanne à quatre voies ;
un deuxième orifice de la seconde vanne à quatre voies est connecté à l'admission de la pompe à eau de moteur par le biais du canal d'écoulement, la sortie de la pompe à eau de moteur est connectée au quatrième orifice par le biais du canal d'écoulement et le quatrième orifice est configuré pour être connecté à l'admission du composant d'entraînement électrique ;
un troisième orifice de la seconde vanne à quatre voies est connecté à la première sortie de liquide de refroidissement de l'échangeur thermique eau-eau par le biais du canal d'écoulement ;
un quatrième orifice de la seconde vanne à quatre voies est connecté à l'admission de la pompe à eau de batterie par le biais du canal d'écoulement, la pompe à eau de batterie est connectée au cinquième orifice par le biais du canal d'écoulement et le cinquième orifice est connecté à l'admission de la batterie de traction ;
la seconde entrée de liquide de refroidissement de l'échangeur thermique eau-eau est connectée au sixième orifice et au septième orifice, le sixième orifice est configuré pour être connecté à l'admission du noyau de chauffage, le septième orifice est connecté à la sortie du réchauffeur de liquide et le sixième orifice est connecté au septième orifice ; et
lorsque l'ensemble de vanne est dans le premier état préréglé, le premier orifice et le deuxième orifice de la première vanne à quatre voies sont connectés l'un à l'autre, le premier orifice et le troisième orifice de la première vanne à trois voies sont connectés l'un à l'autre, le premier orifice et le quatrième orifice de la seconde vanne à quatre voies sont connectés l'un à l'autre, le deuxième orifice et le troisième orifice de la seconde vanne à quatre voies sont connectés l'un à l'autre, et le premier orifice et le troisième orifice de la seconde vanne à trois voies sont connectés l'un à l'autre.

8. Système de gestion thermique selon la revendication 1, dans lequel :
un premier orifice à un huitième orifice sont formés sur la plaque de canaux d'écoulement, et l'ensemble de vanne comprend une vanne à huit voies (142) ;
un premier orifice de la vanne à huit voies est connecté au huitième orifice par le biais du canal d'écoulement, et le huitième orifice est configuré pour être connecté à la sortie du noyau de chauffage ;
un deuxième orifice de la vanne à huit voies est connecté à l'admission de la pompe à eau de chauffage par le biais du canal d'écoulement ;
un troisième orifice de la vanne à huit voies est connecté au premier orifice par le biais du canal d'écoulement, et le premier orifice est configuré pour être connecté à la sortie du radiateur ;
un quatrième orifice de la vanne à huit voies est connecté au deuxième orifice et au troisième orifice par le biais du canal d'écoulement, le deuxième orifice est configuré pour être connecté à l'admission du radiateur, le troisième orifice est configuré pour être connecté à la sortie du composant d'entraînement électrique et le deuxième orifice est connecté au troisième orifice ;
un cinquième orifice de la vanne à huit voies est connecté à l'admission de la pompe à eau de moteur par le biais du canal d'écoulement, la sortie de la pompe à eau de moteur est connectée au quatrième orifice par le biais du canal d'écoulement et le quatrième orifice est configuré pour être connecté à l'admission du composant d'entraînement électrique ;
un sixième orifice de la vanne à huit voies est connecté à l'admission de la pompe à eau de batterie par le biais du canal d'écoulement, la pompe à eau de batterie est connectée au cinquième orifice par le biais du canal d'écoulement et le cinquième orifice est connecté à l'admission de la batterie de traction ;
un septième orifice de la vanne à huit voies est connecté à la première sortie de liquide de refroidissement de l'échangeur thermique eau-eau par le biais du canal d'écoulement ;
un huitième orifice de la vanne à huit voies est connecté à la seconde sortie de liquide de refroidissement de l'échangeur thermique eau-eau par le biais du canal d'écoulement, la seconde entrée de liquide de refroidissement de l'échangeur thermique eau-eau est connectée au sixième orifice et au septième orifice, le sixième orifice est connecté à l'admission du noyau de chauffage, le septième orifice est connecté à la sortie du réchauffeur de liquide, et le sixième orifice est connecté au septième orifice ; et
lorsque l'ensemble de vanne est dans le premier état préréglé, le premier orifice et le deuxième orifice de la vanne à huit voies sont connectés l'un à l'autre, le quatrième orifice et le sixième orifice de la vanne à huit voies sont connectés l'un à l'autre, et le cinquième orifice et le septième orifice de la vanne à huit voies sont connectés l'un à l'autre.

9. Système de gestion thermique selon l'une quelconque des revendications 6 à 8, le système de gestion thermique ayant un second mode de fonctionnement, dans lequel :
dans le second mode de fonctionnement, au moins l'une de la pompe à eau de batterie et de la pompe à eau de moteur est démarrée, et l'ensemble de vanne est dans un second état préréglé ;
dans le second état préréglé, l'ensemble de vanne est connecté à l'admission de la pompe à eau de batterie et à la sortie du radiateur, et communique avec la sortie de la batterie de traction et l'admission du composant d'entraînement électrique, la pompe à eau de batterie et/ou la pompe à eau de moteur convoient le liquide de refroidissement jusqu'à la batterie de traction puis dans le composant d'entraînement électrique par le biais de l'ensemble de vanne, le liquide de refroidissement s'écoule à travers le composant d'entraînement électrique et pénètre dans le radiateur pour refroidir, puis s'écoule hors du radiateur et retourne ensuite vers l'admission ou les admissions de la pompe à eau de batterie et/ou de la pompe à eau de moteur par le biais de l'ensemble de vanne.

10. Procédé de commande du système de gestion thermique selon la revendication 1, comprenant :
l'obtention (S10) d'une température de la batterie de traction et/ou du composant d'entraînement électrique durant le chauffage de l'habitacle ; et
en fonction de la température de la batterie de traction et/ou du composant d'entraînement électrique, la commande (S20) du démarrage de la pompe à eau de batterie et/ou de la pompe à eau de moteur et la commande de l'ensemble de vanne pour qu'il soit dans un premier état préréglé afin d'amener le système de gestion thermique à passer dans un premier mode de fonctionnement, de manière à chauffer l'habitacle en utilisant la chaleur résiduelle de la batterie de traction et du composant d'entraînement électrique.

11. Procédé de commande d'un système de gestion thermique selon la revendication 10, dans lequel :
un premier orifice à un huitième orifice sont formés sur la plaque de canaux d'écoulement, et l'ensemble de vanne comprend une première vanne à cinq voies et une seconde vanne à cinq voies ;
un premier orifice de la première vanne à cinq voies est connecté au huitième orifice par le biais du canal d'écoulement, et le huitième orifice est connecté à la sortie du noyau de chauffage ;
un deuxième orifice de la première vanne à cinq voies est connecté à l'admission de la pompe à eau de chauffage par le biais du canal d'écoulement ;
un troisième orifice de la première vanne à cinq voies est connecté au premier orifice par le biais du canal d'écoulement, et le premier orifice est connecté à la sortie du radiateur ;
un quatrième orifice de la première vanne à cinq voies est connecté à un cinquième orifice de la seconde vanne à cinq voies par le biais du canal d'écoulement ;
un cinquième orifice de la première vanne à cinq voies est connecté à la seconde sortie de liquide de refroidissement de l'échangeur thermique eau-eau par le biais du canal d'écoulement ;
un premier orifice de la seconde vanne à cinq voies est connecté au deuxième orifice et au troisième orifice par le biais du canal d'écoulement, le deuxième orifice est connecté à l'admission du radiateur, le troisième orifice est connecté à la sortie du composant d'entraînement électrique du véhicule et le deuxième orifice est connecté au troisième orifice ;
un deuxième orifice de la seconde vanne à cinq voies est connecté à l'admission de la pompe à eau de moteur par le biais du canal d'écoulement, la sortie de la pompe à eau de moteur est connectée au quatrième orifice par le biais du canal d'écoulement et le quatrième orifice est connecté à l'admission du composant d'entraînement électrique ;
un troisième orifice de la seconde vanne à cinq voies est connecté à la première sortie de liquide de refroidissement de l'échangeur thermique eau-eau par le biais du canal d'écoulement ;
un quatrième orifice de la seconde vanne à cinq voies est connecté à l'admission de la pompe à eau de batterie par le biais du canal d'écoulement, la pompe à eau de batterie est connectée au cinquième orifice par le biais du canal d'écoulement et le cinquième orifice est connecté à l'admission de la batterie de traction ;
le cinquième orifice de la seconde vanne à cinq voies est connecté au quatrième orifice de la première vanne à cinq voies, la seconde entrée de liquide de refroidissement de l'échangeur thermique eau-eau est connectée au sixième orifice et au septième orifice, le sixième orifice est connecté à l'admission du noyau de chauffage, le septième orifice est connecté à la sortie du réchauffeur de liquide, et le sixième orifice est connecté au septième orifice ; et
ladite commande de l'ensemble de vanne pour qu'il soit dans un premier état préréglé pour amener le système de gestion thermique à passer dans un premier mode de fonctionnement comprend :
la commande du premier orifice et du deuxième orifice de la première vanne à cinq voies pour qu'ils se connectent l'un à l'autre, la commande du premier orifice et du quatrième orifice de la seconde vanne à cinq voies pour qu'ils se connectent l'un à l'autre, et la commande du deuxième orifice et du troisième orifice de la seconde vanne à cinq voies pour qu'ils se connectent l'un à l'autre afin d'amener le système de gestion thermique à passer dans le premier mode de fonctionnement.

12. Procédé de commande d'un système de gestion thermique selon la revendication 10, dans lequel :
un premier orifice à un huitième orifice sont formés sur la plaque de canaux d'écoulement, et l'ensemble de vanne comprend une première vanne à quatre voies, une seconde vanne à quatre voies, une première vanne à trois voies et une seconde vanne à trois voies ;
un premier orifice de la première vanne à quatre voies est connecté à un troisième orifice de la première vanne à trois voies, un premier orifice de la première vanne à trois voies est connecté au huitième orifice par le biais du canal d'écoulement, et un deuxième orifice de la première vanne à trois voies est connecté à la seconde sortie de liquide de refroidissement de l'échangeur thermique eau-eau par le biais du canal d'écoulement ;
un deuxième orifice de la première vanne à quatre voies est connecté à l'admission de la pompe à eau de chauffage par le biais du canal d'écoulement ;
un troisième orifice de la première vanne à quatre voies est connecté au premier orifice par le biais du canal d'écoulement, et le premier orifice est configuré pour être connecté à la sortie du radiateur ;
un quatrième orifice de la première vanne à quatre voies est connecté à un deuxième orifice de la seconde vanne à trois voies par le biais du canal d'écoulement ;
un premier orifice de la seconde vanne à trois voies est connecté au deuxième orifice et au troisième orifice par le biais du canal d'écoulement, le deuxième orifice est configuré pour être connecté à l'admission du radiateur, le troisième orifice est connecté à la sortie du composant d'entraînement électrique et le deuxième orifice est connecté au troisième orifice ;
un troisième orifice de la seconde vanne à trois voies est connecté à un premier orifice de la seconde vanne à quatre voies ;
un deuxième orifice de la seconde vanne à quatre voies est connecté à l'admission de la pompe à eau de moteur par le biais du canal d'écoulement, la sortie de la pompe à eau de moteur est connectée au quatrième orifice par le biais du canal d'écoulement et le quatrième orifice est configuré pour être connecté à l'admission du composant d'entraînement électrique ;
un troisième orifice de la seconde vanne à quatre voies est connecté à la première sortie de liquide de refroidissement de l'échangeur thermique eau-eau par le biais du canal d'écoulement ;
un quatrième orifice de la seconde vanne à quatre voies est connecté à l'admission de la pompe à eau de batterie par le biais du canal d'écoulement, la pompe à eau de batterie est connectée au cinquième orifice par le biais du canal d'écoulement et le cinquième orifice est connecté à l'admission de la batterie de traction ;
la seconde entrée de liquide de refroidissement de l'échangeur thermique eau-eau est connectée au sixième orifice et au septième orifice, le sixième orifice est configuré pour être connecté à l'admission du noyau de chauffage, le septième orifice est connecté à la sortie du réchauffeur de liquide et le sixième orifice est connecté au septième orifice ; et
ladite commande de l'ensemble de vanne pour qu'il soit dans un premier état préréglé pour amener le système de gestion thermique à passer dans un premier mode de fonctionnement comprend :
la commande du premier orifice et du deuxième orifice de la première vanne à quatre voies pour qu'ils se connectent l'un à l'autre, la commande du premier orifice et du troisième orifice de la première vanne à trois voies pour qu'ils se connectent l'un à l'autre, la commande du premier orifice et du quatrième orifice de la seconde vanne à quatre voies pour qu'ils se connectent l'un à l'autre, et la commande du deuxième orifice et du troisième orifice de la seconde vanne à quatre voies pour qu'ils se connectent l'un à l'autre, et la commande du premier orifice et du troisième orifice de la seconde vanne à trois voies pour qu'ils se connectent l'un à l'autre afin d'amener le système de gestion thermique à passer dans le premier mode de fonctionnement.

13. Procédé de commande d'un système de gestion thermique selon la revendication 10, dans lequel :
un premier orifice à un huitième orifice sont formés sur la plaque de canaux d'écoulement, et l'ensemble de vanne comprend une vanne à huit voies ;
un premier orifice de la vanne à huit voies est connecté au huitième orifice par le biais du canal d'écoulement, et le huitième orifice est configuré pour être connecté à la sortie du noyau de chauffage ;
un deuxième orifice de la vanne à huit voies est connecté à l'admission de la pompe d'eau de chauffage par le biais du canal d'écoulement ;
un troisième orifice de la vanne à huit voies est connecté au premier orifice par le biais du canal d'écoulement, et le premier orifice est configuré pour être connecté à la sortie du radiateur ;
un quatrième orifice de la vanne à huit voies est connecté au deuxième orifice et au troisième orifice par le biais du canal d'écoulement, le deuxième orifice est configuré pour être connecté à l'admission du radiateur, le troisième orifice est configuré pour être connecté à la sortie du composant d'entraînement électrique et le deuxième orifice est connecté au troisième orifice ;
un cinquième orifice de la vanne à huit voies est connecté à l'admission de la pompe à eau de moteur par le biais du canal d'écoulement, la sortie de la pompe à eau de moteur est connectée au quatrième orifice par le biais du canal d'écoulement et le quatrième orifice est configuré pour être connecté à l'admission du composant d'entraînement électrique ;
un sixième orifice de la vanne à huit voies est connecté à l'admission de la pompe à eau de batterie par le biais du canal d'écoulement, la pompe à eau de batterie est connectée au cinquième orifice par le biais du canal d'écoulement et le cinquième orifice est connecté à l'admission de la batterie de traction ;
un septième orifice de la vanne à huit voies est connecté à la première sortie de liquide de refroidissement de l'échangeur thermique eau-eau par le biais du canal d'écoulement ;
un huitième orifice de la vanne à huit voies est connecté à la seconde sortie de liquide de refroidissement de l'échangeur thermique eau-eau par le biais du canal d'écoulement, la seconde entrée de liquide de refroidissement de l'échangeur thermique eau-eau est connectée au sixième orifice et au septième orifice, le sixième orifice est connecté à l'admission du noyau de chauffage, le septième orifice est connecté à la sortie du réchauffeur de liquide, et le sixième orifice est connecté au septième orifice ; et
ladite commande de l'ensemble de vanne pour qu'il soit dans un premier état préréglé pour amener le système de gestion thermique à passer dans un premier mode de fonctionnement comprend :
la commande du premier orifice et du deuxième orifice de la vanne à huit voies pour qu'ils se connectent l'un à l'autre, la commande du quatrième orifice et du sixième orifice de la vanne à huit voies pour qu'ils se connectent l'un à l'autre, et la commande du cinquième orifice et du septième orifice de la vanne à huit voies pour qu'ils se connectent l'un à l'autre afin d'amener le système de gestion thermique à passer dans le premier mode de fonctionnement.

14. Véhicule (300), comprenant :
un corps de véhicule (301) ; et
un système de gestion thermique (200) selon l'une quelconque des revendications 1 à 9 installé sur le corps de véhicule (301).
